(19) Europäisches Patentamt
European Patent Office
Office européen des brevets

(11) EP 4 159 903 A1

(12) **EUROPEAN PATENT APPLICATION**
published in accordance with Art. 153(4) EPC

(43) Date of publication:
**05.04.2023 Bulletin 2023/14**

(21) Application number: **21813149.8**

(22) Date of filing: **21.05.2021**

(51) International Patent Classification (IPC):
***D01F 8/04*** *(2006.01)* ***D01F 8/14*** *(2006.01)*
***C09K 5/06*** *(2006.01)*

(52) Cooperative Patent Classification (CPC):
**C09K 5/06; D01F 8/04; D01F 8/14;** Y02E 60/14

(86) International application number:
**PCT/JP2021/019336**

(87) International publication number:
**WO 2021/241432 (02.12.2021 Gazette 2021/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.05.2020 JP 2020093918**

(71) Applicant: **SUMITOMO CHEMICAL COMPANY, LIMITED**
**Tokyo 103-6020 (JP)**

(72) Inventors:
- **NOJIRI, Saho**
  **Ichihara-shi, Chiba 299-0195 (JP)**
- **UEDA, Kohei**
  **Ichihara-shi, Chiba 299-0195 (JP)**
- **MATSUI, Hirokazu**
  **Ichihara-shi, Chiba 299-0195 (JP)**

(74) Representative: **Vossius & Partner**
**Patentanwälte Rechtsanwälte mbB**
**Siebertstraße 3**
**81675 München (DE)**

(54) **HEAT STORAGE COMPOSITION**

(57) A heat storage composition includes a substance A and a polymer 2. The heat storage composition has a melting peak temperature between 10 and 60°C and a melting enthalpy of 30 J/g or more between 10 and 60°C. The heat storage composition does not have a sea-island structure, or the heat storage composition has a sea-island structure in which the islands (dispersed phase) have a volume-average circle-equivalent particle diameter of 1.5 μm or less or the islands (dispersed phase) have an area ratio of 15% or less.

EP 4 159 903 A1

## Description

### Technical Field

The present invention relates to a heat storage composition.

### Background Art

With the recent increase in preference for comfort, fiber products and building materials using various thermal functional materials have been developed.

Patent Literature 1 discloses a heat storage material obtained by kneading a phase transition material obtained by reacting an ethylene-methyl acrylate copolymer and n-eicosyl alcohol with polypropylene.

### Citation List

#### Patent Literature

Patent Literature 1
Japanese Patent Laid Open No. 2018-188752

### Summary of Invention

#### Technical Problem

However, from the viewpoint of heat storage properties, spinnability, drawability, fiber texture, and the like, there is a need for improvement in heat storage materials. Accordingly, it is an object of the present application to provide a novel composition and fiber having excellent heat storage properties.

#### Solution to Problem

The present invention relates to the following, but is not limited thereto.

[Invention 1] A heat storage composition comprising a substance A and a polymer 2, wherein

- the heat storage composition has a melting peak temperature between 10 and 60°C and a melting enthalpy of 30 J/g or more between 10 and 60°C, and
- the heat storage composition does not have a sea-island structure, or the heat storage composition has a sea-island structure in which the islands (dispersed phase) have a volume-average circle-equivalent particle diameter of 1.5 μm or less or the islands (dispersed phase) have an area ratio of 15% or less.

[Invention 2] The heat storage composition according to invention 1, wherein the heat storage composition has a plurality of melting peak temperatures, at least one of which being within a range of 60 to 120°C.
[Invention 3] The heat storage composition according to any one of invention 1 or 2, wherein the heat storage composition has a gel fraction of 15 wt.% or less.
[Invention 4] The heat storage composition according to any one of inventions 1 to 3, wherein the substance A has a molecular weight of more than 2000.
[Invention 5] A fiber comprising the heat storage composition according to any one of inventions 1 to 4.
[Invention 6] A heat storage fiber comprising a heat storage composition, the heat storage composition comprising a substance A and a polymer 2, wherein

- the heat storage fiber has a melting peak temperature between 10 and 60°C and a melting enthalpy of 5 J/g or more between 10 and 60°C, and
- the heat storage composition in the fiber does not have a sea-island structure, or the heat storage composition in the fiber has a sea-island structure in which the islands (dispersed phase) have a circle-equivalent particle diameter of less than 0.1 μm or the islands (dispersed phase) have an area ratio of 15% or less.

[Invention 7] The heat storage fiber according to invention 6, wherein the heat storage fiber has a plurality of melting peak temperatures, at least one of which being within a range of 60 to 120°C.

[Invention 8] The heat storage fiber according to invention 6 or 7, wherein the heat storage composition in the fiber has a gel fraction of 15 wt.% or less.

[Invention 9] The heat storage fiber according to any one of invention 6 to 8, wherein the substance A has a molecular weight of more than 2000.

Advantageous Effects of Invention

The composition of the present invention has excellent heat storage properties. In one mode, the composition of the present invention has excellent shape retention. In one mode, the composition of the present invention has excellent formability. In one mode, the fiber of the present invention has excellent spinnability and drawability, and good texture.

Description of Embodiments

Definitions

All numbers disclosed herein are approximations regardless of whether or not the word "about" or "approximately" is used in connection therewith. These numbers may vary by 1 percent, 2 percent, 5 percent, or sometimes 10 to 20 percent. Whenever a numerical range with a lower limit $R^L$ and an upper limit $R^U$ is disclosed, any number included in the range is specifically disclosed. In particular, the following numbers within ranges are specifically disclosed. $R = R^L + k*(R^U - R^L)$, where k is a variable ranging from 1 percent to 100 percent in 1 percent increments, i.e., k is 1 percent, 2 percent, 3 percent, 4 percent, 5 percent, ... 50 percent, 51 percent, 52 percent, ... 95 percent, 96 percent, 97 percent, 98 percent, 99 percent, or 100 percent). In addition, any numerical range defined by the numbers of two Rs as set forth above is also specifically disclosed.

The description "lower limit to upper limit", which represents a numerical range, indicates the "lower limit or higher, upper limit or lower", and the description "upper limit to lower limit" indicates the "upper limit or lower, lower limit or higher". That is, these descriptions represent numerical ranges that include the lower and upper limits.

Gel fraction

The gel fraction (wt.%) is determined by the following procedure.

Approximately 500 mg of a measurement sample (crosslinked polymer or composition containing crosslinked polymer) and an empty mesh basket fabricated from a metal mesh (mesh size: 400 mesh) are weighed. The mesh basket containing the measurement sample and 50 mL of xylene (in the Examples guaranteed reagent grade xylene produced by Kanto Chemical Co., Inc. (mixture of o-, m-, and p-xylenes and ethylbenzene, total weight of o-, m-, and p-xylenes: 85 wt.% or more) was used) are introduced into a 100 mL test tube, and subjected to heating extraction at 110°C for 6 hours. After the extraction, the mesh basket with an extraction residue is removed from the test tube, and dried under reduced pressure by using a vacuum dryer at 80°C for 3 hours, and the mesh basket with an extraction residue after drying is weighed. The gel weight is calculated from the difference in weight between the mesh basket with an extraction residue after drying and the mesh basket when being empty. The gel fraction (wt.%) is calculated based on the following formula.

$$\text{Gel fraction} = (\text{Gel weight}/\text{Weight of measurement sample}) \times 100$$

Melting peak temperature

The melting peak temperature Tm (°C) is obtained by the following procedure.

A differential scanning calorimeter (DSC Q100 manufactured by TA Instruments Co., Ltd. was used in the Examples) is used to measure the aluminum pan containing the sample under a nitrogen atmosphere under any of the following measurement conditions.

Measurement condition 1: An aluminum pan containing approximately 10 mg of the sample is (1) held at 200°C for 5 minutes, then (2) cooled from 200°C to -80°C at a rate of 5 °C/min, then (3) held at -80°C for 10 minutes, and then (4) warmed from -80°C to about 200°C at a rate of 5 °C/min.

Measurement condition 2: An aluminum pan containing approximately 5 mg of the sample is (1) held at 200°C for 5 minutes, then (2) cooled from 200°C to -80°C at a rate of 5 °C/min, then (3) held at -80°C for 10 minutes, and then (4) warmed from -80°C to about 200°C at a rate of 5 °C/min.

Measurement condition 3: An aluminum pan containing approximately 10 mg of the sample is (1) held at 150°C for 5 minutes, then (2) cooled from 150°C to -80°C at a rate of 5 °C/min, then (3) held at -80°C for 10 minutes, and then (4) warmed from -80°C to about 150°C at a rate of 5 °C/min.
Measurement condition 4: An aluminum pan containing approximately 5 mg of the sample is (1) held at 150°C for 5 minutes, then (2) cooled from 150°C to -80°C at a rate of 5 °C/min, then (3) held at -80°C for 10 minutes, and then (4) warmed from -80°C to about 150°C at a rate of 5 °C/min.
Measurement condition 5: An aluminum pan containing approximately 5 mg of the sample is (1) held at 150°C for 5 minutes, then (2) cooled from 150°C to -50°C at a rate of 5 °C/min, then (3) held at -50°C for 5 minutes, and then (4) warmed from -50°C to about 150°C at a rate of 5 °C/min.

Taking the differential scanning calorimetry curve obtained by calorimetry in step (4) to be the melting curve, the melting curve is analyzed by a method in accordance with JIS K7121-1987 to obtain the melting peak temperature at which the melting endotherm is at a maximum.

The glass transition temperature (midpoint glass transition temperature) is obtained by analyzing the melting curve measured according to the differential scanning calorimetry method described above by a method in accordance with JIS K7121-1987.

Melting enthalpy

The melting enthalpy ΔH (J/g) is obtained by analyzing the portion of the melting curve within the temperature range of 10 to 60°C or 60 to 120°C by a method in accordance with JIS K7122-1987.

For the multi-layer heat storage compositions in the Examples, the samples to be used are obtained by kneading at 200°C using a kneader (Xplore manufactured by DSM) or a 20 mm-diameter single-screw extruder.

Number of melting peaks between 60 and 120°C

The number of melting peaks between 60 and 120°C is obtained by analyzing the number of temperatures showing a maximum when the endothermic direction is positive in the range of 60 to 120°C of the differential scanning calorimetry curve. However, intensities of 1% or less of the area of the first peak observed at 10 to 60°C is noise, not a peak.

Circle-equivalent particle diameter and volume-average circle-equivalent particle diameter of the dispersed phase

The circle-equivalent particle diameter Di (μm) and the volume-average circle-equivalent particle diameter Dv (μm) of the dispersed phase (islands in the sea-island structure) included in the composition and the fiber of the present invention are obtained by the following procedure.

The heat storage compositions of the Examples or Comparative Examples of the present invention are cut out using a microtome at -70°C, dyed with ruthenium tetroxide vapor at room temperature for about 3 days, and then cut with a diamond knife at -70°C to create ultra-thin sections with a thickness of about 1300 angstroms. For the multi-layer heat storage compositions (Examples A1 to A3 and Comparative Examples C1 to C2) in the Examples, the samples to be used are obtained by kneading at 200°C for 5 minutes using a kneader (manufactured by DSM, Xplore) .

Using a transmission electron microscope (JEM-2100F manufactured by JEOL Ltd. was used in the Examples), the ultra-thin sections are observed at an observation magnification of 15,000 times for Examples A1 to A6 and Comparative Examples C1 to C4 and an observation magnification of 60,000 times for Examples B1 to B4 and Comparative Example D1. Regarding the heat storage compositions (Examples A1 to A6 and Comparative Examples C1 to C4) in the Examples, any surface of the kneaded product is observed. Regarding the fibers (Examples B1 to B4 and Comparative Example D1), a cross-section in the fiber radial direction is observed. Using a transmission electron microscope, digital images captured by a CCD camera at an observation magnification of 15,000 times or 60,000 times are subjected to the following image analysis processing, and the diameter of the circle (circle-equivalent particle diameter) and the volume-average circle-equivalent particle diameter of the dispersed phase are determined.

Image analysis processing

The digital images (8-bit) obtained from the transmission electron microscope are imported into a computer, and image analysis software (A-zou kun by Asahi Engineering Co., Ltd. was used in the Examples) is used to visually identify the island phases based on the degree of staining. The analysis area of one field of view is in the range of about 58 to 73 $\mu m^2$ at 15,000 times, and in the range of about 4 to 5 $\mu m^2$ at 60,000 times, and is calculated as the average value of two or three fields of view. Since the shape of the dispersed phase is amorphous, the diameter of the circle (circle-equivalent particle diameter Di (μm)) is determined, and the volume-average circle-equivalent particle diameter Dv (μm) is determined from the following formula.

[Equation 1]

$$Dv = \sum_{i=1}^{n} Di^4 \Big/ \sum_{i=1}^{n} Di^3$$

In the formula, i is an integer from 1 to n, and Di is the circle-equivalent particle diameter of each particle (each dispersed phase).

Area ratio of dispersed phase

The area ratio (%) of the dispersed phase is calculated based on the following formula.

Area ratio (%) = (total area of dispersed phase/analysis area)×100

It is noted that dispersed phases with different degrees of staining are analyzed as different components.

Melt flow rate (g/10 minutes)

The melt flow rate (MFR) is measured according to the method specified in JIS-K-7210. Unless otherwise specified, the measurement temperature is 230°C and the load is 2.16 kg.

Shear viscosity (Pa·sec)

Using the heat storage composition of the Examples or Comparative Examples of the present invention, a capillary having a diameter of 1 mm, a length of 40 mm, and an inflow angle of 90° is attached to a Capillograph 1B (in the Examples, a capillograph manufactured by Toyo Seiki Seisakusho, Ltd. (barrel diameter: 9.55 mm) was used), and the shear viscosity is measured at a measurement temperature of 270°C and a shear rate of $1.216\times10^3$ $sec^{-1}$.

Elongation at break (%)

Undrawn yarn or drawn yarn is subjected to a tensile test in accordance with JIS L 1013:2010 under the following conditions, and the elongation at break is measured three times in total and averaged. The larger the elongation at break, the better the tensile properties (drawability).

Measurement temperature: Room temperature 23°C
Tensile speed: 10 mm/min
Grip interval: 10 mm

Spinnability

A sensory evaluation of spinnability when spinning the sample with a spinning apparatus is performed by three measurers, and a unified opinion (good or with thread breakage) is determined.

Softness

A sensory evaluation of the softness (degree of hardness) of the sample is performed by five measurers using the following method, and a unified opinion (soft or hard) is determined.
Method: The measurer places his or her hand into 500 g of prepared short fibers, lightly grips the fibers, and judges the softness.

Several embodiments of the present invention are now described in detail below. However, the present invention is not limited to the following embodiments.

Heat storage composition E

The heat storage composition of the present invention (hereinafter, sometimes referred to as "heat storage composition E") includes a substance A (hereinafter, sometimes referred to as "phase change substance A") described later and a polymer 2 (hereinafter, sometimes referred to as "base resin") described later).

The heat storage composition E has a melting peak temperature between 10 and 60°C and a melting enthalpy of 30 J/g or more between 10 and 60°C.

The heat storage composition E does not have a sea-island structure, or has a sea-island structure in which the islands (dispersed phase) have a volume-average circle-equivalent particle diameter of 1.5 μm or less or the islands (dispersed phase) have an area ratio of 15% or less.

The heat storage composition E has a melting peak temperature in the range of 10 to 60°C, more preferably 10 to 50°C, and further preferably 10 to 40°C.

It is preferred that the heat storage composition E has a plurality of melting peak temperatures, at least one of which is within the range of 60 to 120°C.

The melting enthalpy (ΔH) between 10 and 60°C of the heat storage composition E of the present invention is 30 J/g or more, preferably 40 J/g or more, and more preferably 50 J/g or more.

The heat storage composition E does not have a sea-island structure, or has a sea-island structure in which the islands (dispersed phase) have a volume-average circle-equivalent particle diameter Dv of 1.5 μm or less or the islands (dispersed phase) have an area ratio of 15% or less. It is preferred that the volume-average circle-equivalent particle diameter Dv of the islands (dispersed phase) be 1.5 μm or less and that the area ratio of the islands (dispersed phase) be 15% or less. When the heat storage composition E has a sea-island structure, the islands (dispersed phase) have a higher polymer 2 content than the sea (continuous phase). Dv is preferably 1.3 μm or less, and more preferably 1.0 μm or less. When a plurality of types of dispersed phases are present, the Dv calculated without classifying all of those types of dispersed phases satisfies the above-mentioned requirement.

When the heat storage composition E has a sea-island structure, the area ratio of the islands (dispersed phase) in a cross-section of the heat storage composition E is preferably 15% or less, more preferably 13% or less, and further preferably 100 or less. In addition, when a plurality of types of dispersed phases are present, the total area calculated without classifying all of those types of dispersed phases satisfies the above.

The number of melting peaks of the heat storage composition E at 60 to 120°C is preferably 3 or less, more preferably 2 or less, and further preferably 1.

The content of each of the substance A and the polymer 2 in the heat storage composition E is such that, with respect to 100 wt.% of the total amount of the substance A and the polymer 2, the content of the substance A is preferably 30 to 99 wt.% and the content of the polymer 2 is preferably 70 to 1% wt.%. More preferably, the content of the substance A is 50 to 90 wt.% and the content of the polymer 2 is 50 to 10% wt.%, and further preferably the content of the substance A is 60 to 90 wt.% and the content of the polymer 2 is 40 to 10% wt.%. When the heat storage composition E is mainly composed of a polymer, it may also be referred to as a "resin composition". In addition, the heat storage composition E may be referred to as a "heat storage material" or a "heat storage ingredient".

Heat storage fiber F

The heat storage composition E included in the heat storage fiber of the present invention (hereinafter, sometimes referred to as "heat storage fiber F") includes the substance A (hereinafter, sometimes referred to as "phase change substance A") described later and the polymer 2 (hereinafter, sometimes referred to as "base resin") described later.

The heat storage fiber F has a melting peak temperature between 10 and 60°C and a melting enthalpy of 5 J/g or more between 10 and 60°C.

The heat storage composition E included in the heat storage fiber F does not have a sea-island structure, or has a sea-island structure in which the islands (dispersed phase) have a circle-equivalent particle diameter of less than 0.1 μm or the islands (dispersed phase) have an area ratio of 15% or less.

The heat storage fiber F has a melting peak temperature in the range of 10 to 60°C, more preferably 10 to 50°C, and further preferably 10 to 40°C.

It is preferred that the heat storage fiber F has a plurality of melting peak temperatures, at least one of which is within the range of 60 to 120°C.

The melting enthalpy (ΔH) between 10 and 60°C of the heat storage fiber F of the present invention is 5 J/g or more, preferably 10 J/g or more, and more preferably 15 J/g or more. In one mode, the heat storage fiber F has a melting peak temperature between 10 and 60°C, and a melting enthalpy of 20 J/g or more between 10 and 60°C.

The heat storage composition E of the heat storage fiber F does not have a sea-island structure, or has a sea-island structure in which the islands (dispersed phase) have a circle-equivalent particle diameter Di of less than 0.1 μm

or the islands (dispersed phase) have an area ratio of 15% or less. It is preferred that the circle-equivalent particle diameter Di of the islands (dispersed phase) be less than 0.1 μm and that the area ratio of the islands (dispersed phase) be 15% or less. When the heat storage composition E has a sea-island structure, the islands (dispersed phase) have a higher polymer 2 content than the sea (continuous phase). Di is preferably less than 0.1 μm, and more preferably 0.09 μm or less. When a plurality of types of dispersed phases are present, the Di calculated without classifying all of those types of dispersed phases satisfies the above-mentioned requirement.

When the heat storage composition E of the heat storage fiber F has a sea-island structure, the area ratio of the islands (dispersed phase) in a cross-section of the heat storage composition E is preferably 15% or less, more preferably 13% or less, and further preferably 100 or less. In addition, when a plurality of types of dispersed phases are present, the total area calculated without classifying all of those types of dispersed phases satisfies the above.

Preferably, the heat storage fiber F has a plurality of melting peak temperatures, at least one of which is within the range of 60 to 120°C.

The number of melting peaks of the heat storage fiber F at 60 to 120°C is preferably 3 or less, more preferably 2 or less, and further preferably 1.

Substance A

The heat storage composition E contains a substance (hereinafter, sometimes referred to as "substance A" or "phase change substance A") that has a melting peak temperature between 10 and 60°C and a melting enthalpy of 30 J/g or more between 10 and 60°C. As used herein, a phase change substance is a material that has heat storage properties due to a phase change.

The substance A has a melting peak temperature within the range of 10 to 60°C, preferably 10 to 50°C, and more preferably 10 to 40°C.

In one mode, the substance A has a melting enthalpy ΔH observed within the temperature range of 10 to 60°C of 30 J/g or more, preferably 40 J/g or more, further preferably 50 J/g or more, and even further preferably 60 J/g or more. Further, the ΔH is usually 200 J/g or less.

From the viewpoint of shape retention, the gel fraction of the heat storage composition E and the heat storage fiber F is preferably 15 wt.% or more, more preferably 20 wt.% or more, further preferably 40 wt.% or more, and even further preferably 60 wt.% or more. In addition, the gel fraction is a percentage with respect to 100 wt.% of the total weight of the heat storage composition E. The gel fraction indicates the degree of cross-linking of the crosslinked polymer. A higher gel fraction means that the polymer included in the composition or fiber has more crosslinked structures, and thus a stronger network structure is formed. When the gel fraction is high, the composition or fiber has high shape retention and does not easily deform.

On the other hand, from the viewpoint of spinnability, the heat storage composition E preferably has a gel fraction of 15 wt.% or less, more preferably 12 wt.% or less, and further preferably 10 wt.% or less. When the gel fraction is low, the composition or fiber tends to be more spinnable.

Examples of the substance A include a high-molecular-weight substance (sometimes referred to as polymer 1) and a low-molecular-weight substance (sometimes referred to as compound L). The heat storage composition E may include two or more kinds of the substance A, in which case it may include two or more kinds of the polymer 1 alone, may include two or more kinds of the compound L alone, or may include both the polymer 1 and the compound L.

Polymer 1

The polymer 1 satisfies the requirements for the substance A and has a molecular weight of more than 2000.

The polymer 1 has a melting peak temperature in the range of 10 to 60°C, preferably 10 to 50°C, and more preferably 10 to 40°C.

For example, the melting peak temperature of the polymer 1 can be adjusted by adjusting the number of structural units B described later in polymer 1 and the number of carbon atoms of $L^{16}$ in formula (1) of structural unit B. As a result, the heat storage performance and the like of the composition including the polymer 1 can be adjusted.

The polymer 1 has a melting enthalpy ΔH between 10 and 60°C of 30 J/g or more, preferably 40 J/g or more, more preferably 50 J/g or more, and further preferably 60 J/g or more. Further, ΔH is usually 200 J/g or less.

For example, ΔH can be set within the above range by adjusting the number of structural units B described later in the polymer 1 and the number of carbon atoms of $L^{16}$ in the following formula (1) of the structural unit B. As a result, the heat storage performance and the like of the composition including the polymer 1 can be adjusted.

From the viewpoint of reducing the extrusion load during molding, the flow activation energy $E_a$ of the polymer 1 is preferably 40 kJ/mol or higher, more preferably 50 kJ/mol or higher, and further preferably 60 kJ/mol or higher. To impart good appearance to the molded article obtained by extrusion, $E_a$ is preferably 100 kJ/mol or lower, more preferably 90 kJ/mol or lower, and further preferably 80 kJ/mol or lower. The magnitude of $E_a$ primarily depends on the number of

long chain branches in a polymer. A polymer including a larger number of long chain branches has a higher $E_a$.

The correlation coefficient in least squares approximation of [ln($a_T$)] and [1/(T+273.16)] by using the above formula (ii) is controlled to be 0.9 or higher.

The determination of melt complex viscosityangular frequency curves is performed by using a viscoelastometer (e.g., ARES, manufactured by TA Instruments, Inc.) typically under conditions of geometry: parallel plates, plate diameter: 25 mm, plate interval: 1.2 to 2 mm, strain: 5%, angular frequency: 0.1 to 100 rad/sec. The determination is performed under a nitrogen atmosphere. It is preferred to blend in advance a proper quantity (e.g., 1000 ppm by weight) of an antioxidant to a measurement sample.

From the viewpoint of excellent formability properties such as reduced neck-in and reduced unevenness in thickness in the obtained film during T-die film processing, and less foam-breaking during foam molding, the elongational viscosity nonlinear index k, which represents the intensity of strain hardening, of the polymer 1 is preferably 0.85 or higher, more preferably 0.90 or higher, and further preferably 0.95 or higher. The strain hardening of a polymer is a phenomenon that the elongational viscosity of the polymer drastically increases when strain applied to the polymer exceeds a certain amount of strain. From the viewpoint of ease of formation of the polymer 1 or the heat storage composition of the present invention including the polymer 1 into a desired shape, the index k is preferably 2.00 or lower, more preferably 1.50 or lower, further preferably 1.40 or lower, even further preferably 1.30 or lower, and particularly preferably 1.20 or lower.

The elongational viscosity nonlinear index k is determined in the following manner.

Determined are viscosity, $\eta_E1(t)$, at each elongation time, t, during uniaxially elongating a polymer at a temperature of 110°C and a strain rate of 1 $sec^{-1}$, and viscosity, $\eta_E0.1(t)$, at each elongation time, t, during uniaxially elongating the polymer at a temperature of 110°C and a strain rate of 0.1 $sec^{-1}$. The $\eta_E1(t)$ and the $\eta_E0.1(t)$ at the same, arbitrary elongation time, t, are substituted into the following formula to determine $\alpha(t)$.

$$\alpha(t) = \eta_E1(t)/\eta_E0.1(t)$$

Logarithms of $\alpha(t)$ ($\ln(\alpha(t))$) are plotted against elongation time, t, and $\ln(\alpha(t))$ and t within the range of t from 2.0 seconds to 2.5 seconds are subjected to least squares approximation by using the following formula. The value of slope of the line representing the following formula is k.

$$\ln(\alpha(t)) = kt$$

Employed is k for the case that the correlation function, r2, used in least squares approximation based on the above formula is 0.9 or higher.

The measurement of viscosity in uniaxial elongation is performed by using a viscoelastometer (e.g., ARES, manufactured by TA Instruments, Inc.) under a nitrogen atmosphere.

In measurement of elongational viscosity, polymers including a long chain branch have a tendency to undergo drastic increase of elongational viscosity beyond the linear region in a high-strain region, what is called "strain hardening property". The logarithm of $\alpha(t)$ ($\ln(\alpha(t))$) is known to increase in proportion to $\ln(l/l_0)$ for polymers having the strain hardening property (here, $l_0$ and 1 respectively represent the lengths of a sample at elongation times of 0 and t) [reference: Kiyohito Koyama, Osamu Ishizuka; Journal of Fiber Science and Technology, 37, T-258 (1981)]. For polymers having no strain hardening property, $\alpha(t)$ is 1 at any elongation time, and the slope k of a line obtained by plotting the logarithm of $\alpha(t)$ ($\ln(\alpha(t))$) against elongation time is 0. For polymers having a strain hardening property, the slope k of the line plot is not 0, particularly in a high-strain region. In the present invention, k is defined as the slope of a line obtained by plotting the logarithm of the nonlinear parameter $\alpha(t)$ ($\ln(\alpha(t))$) as a parameter indicative of the degree of the strain hardening property, against elongation time.

When measuring the polystyrene equivalent weight average molecular weight Mw of the polymer 1 according to the present invention by gel permeation chromatography (GPC), the mobile phase is usually ortho-dichlorobenzene, and the measurement temperature is 140°C.

The polymer 1 preferably includes a structural unit A derived from ethylene, because the formability of the polymer 1 is good.

Regarding polymer 1, the ratio A defined by the following formula (I) is preferably 0.95 or lower, more preferably 0.90 or lower, and further preferably 0.80 or lower.

$$A = \alpha_1/\alpha_0 \quad (I)$$

In formula (I), $\alpha_1$ represents a value obtained by measuring the absolute molecular weight and intrinsic viscosity of a polymer through gel permeation chromatography with an apparatus including a light scattering detector and a viscosity detector, plotting measurements in a manner such that logarithms of the absolute molecular weight are plotted on an abscissa and logarithms of the intrinsic viscosity are plotted on an ordinate, performing a least squares approximation for the logarithms of the absolute molecular weight and the logarithms of the intrinsic viscosity by using formula (I-I) within the range of not less than the logarithm of the weight-average molecular weight of the polymer and not more than the logarithm of the z-average molecular weight of the polymer along the abscissa, and calculating the value $\alpha_1$ from the slope of the line represented by formula (I-I).

$$\log[\eta_1] = \alpha_1 \log M_1 + \log K_1 \quad \text{(I-I)}$$

In the formula (I-I), $[\eta_1]$ represents the intrinsic viscosity (unit: dl/g) of the polymer, $M_1$ represents the absolute molecular weight of the polymer, and $K_1$ represents a constant.

$\alpha_0$ represents a value obtained by measuring the absolute molecular weight and intrinsic viscosity of Polyethylene Standard Reference Material 1475a (produced by National Institute of Standards and Technology) through gel permeation chromatography with an apparatus including a light scattering detector and a viscosity detector, plotting measurements in a manner such that logarithms of the absolute molecular weight are plotted on an abscissa and logarithms of the intrinsic viscosity are plotted on an ordinate, performing a least squares approximation for the logarithms of the absolute molecular weight and the logarithms of the intrinsic viscosity by using formula (I-II) within the range of not less than the logarithm of the weight-average molecular weight of the Polyethylene Standard Reference Material 1475a and not more than the logarithm of the z-average molecular weight of the Polyethylene Standard Reference Material 1475a along the abscissa, and calculating the value $\alpha_0$ from the slope of the line represented by formula (I-II).

$$\log[\eta_0] = \alpha_0 \log M_0 + \log K_0 \quad \text{(I-II)}$$

In formula (I-II), $[\eta_0]$ represents the intrinsic viscosity (unit: dl/g) of the Polyethylene Standard Reference Material 1475a, $M_0$ represents the absolute molecular weight of the Polyethylene Standard Reference Material 1475a, and $K_0$ represents a constant.

Here, in the measurement of the absolute molecular weight and the intrinsic viscosity for the polymer and the Polyethylene Standard Reference Material 1475a by gel permeation chromatography, the mobile phase is ortho-dichlorobenzene and the measurement temperature is 155°C.

To determine the absolute molecular weight from the data acquired with the light scattering detector and determine the intrinsic viscosity ($[\eta]$) with the viscosity detector, the calculations are performed by using the data processing software OmniSEC (registered trademark) (version 4.7) from Malvern Instruments Limited based on the literature "Size Exclusion Chromatography, Springer (1999)".

The Polyethylene Standard Reference Material 1475a (produced by National Institute of Standards and Technology) is an unbranched high-density polyethylene.

Each of the formula (I-I) and the formula (I-II), which is called "Mark-Hauwink-Sakurada equation", represents the correlation between the intrinsic viscosity and molecular weight of a polymer, and the smaller the $\alpha_1$, the larger the number of tangling polymer chains in a branched structure. Since no branched structure is formed in the Polyethylene Standard Reference Material 1475a, tangling of polymer chains in a branched structure is not generated. The smaller the A, which is the ratio of $\alpha_1$ to $\alpha_0$ of the Polyethylene Standard Reference Material 1475a, the larger the fraction of a long chain branched structure formed by the structural unit A, which is described later, in the polymer.

The weight-average molecular weight of the polymer 1 as measured through gel permeation chromatography with an apparatus including a light scattering detector is preferably 10,000 to 1,000,000, more preferably 50,000 to 750,000, and even more preferably 100,000 to 500,000.

In the measurement of the weight-average molecular weight of the polymer 1 through gel permeation chromatography, the mobile phase is ortho-dichlorobenzene, and the measurement temperature is 155°C.

Examples of the polymer 1 include polymers having a long-chain alkyl group or a long-chain ether group optionally branched or optionally substituted with a functional group in a side chain. Examples of the polymer include, but are not particularly limited to, a polymer having, as a main component, a (meth)acrylate having a long-chain alkyl group or a long-chain ether group that are optionally branched and optionally substituted with a functional group in a side chain, a polymer having, as a main component, a vinyl ester main chain having a long-chain alkyl group or a long-chain ether group that are optionally branched and optionally substituted with a functional group in a side chain, a polymer having, as a main component, a vinyl ether main chain having a long-chain alkyl group or a long-chain ether group that are optionally branched and optionally substituted with a functional group in a side chain, a polymer having, as a main

component, a polyolefin main chain having a long-chain alkyl group or a long-chain ether group that are optionally branched and optionally substituted with a functional group in a side chain, and the like. The side chain is preferably a long-chain alkyl group that is optionally branched and optionally substituted with a functional group, and a polymer having a (meth)acrylate or polyolefin main chain as a main component is preferred. Examples of the polymer 1 include the polymers described in Japanese Patent Laid Open No. 2015-091903, International Publication No. WO 2016/098674, and International Publication No. WO 2017/217419.

Two or more kinds of the above-mentioned polymer 1 may be used in combination. The heat storage composition E and the composite of the present invention described later may contain a sensible heat storage material. Examples of sensible heat storage materials include concrete, crushed stone, iron, copper, steel, and polyethylene.

An example of one mode of the polymer 1 is a polymer including a structural unit having an alkyl group having 14 to 30 carbon atoms.

The polymer 1 preferably has a structural unit represented by the following formula (1) (sometimes referred to as structural unit B).

[Formula 1]

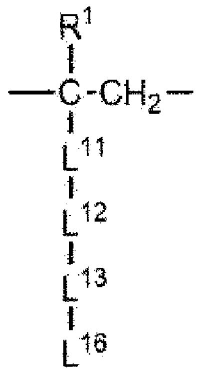

formula (1)

In formula (1),

$R^1$ represents a hydrogen atom or a methyl group,
$L^{11}$ represents a single bond, -CO-O-, -O-CO-, or -O-,
$L^{12}$ represents a single bond, $-CH_2-$, $-CH_2-CH_2-$, $-CH_2-CH_2-CH_2-$, $-CH_2-CH(OH)-CH_2-$, or $-CH_2-CH(CH_2OH)-$,
$L^{13}$ represents a single bond, -CO-O-, -O-CO-, -O-,-CO-NH-, -NH-CO-, -CO-NH-CO-, -NH-CO-NH-, -NH-, or-$N(CH_3)$-, and
$L^{16}$ represents an alkyl group having 14 to 30 carbon atoms.

For each of the horizontal chemical formulas of $L^{11}$, $L^{12}$, and $L^{13}$, the left side corresponds to the upper side (main chain side of the polymer) of formula (1) and the right side corresponds to the lower side (terminal side of a side chain of the polymer) of formula (1).

$R^1$ is preferably a hydrogen atom.

$L^{11}$ is preferably -CO-O-, -O-CO-, or -O-, more preferably -CO-O- or -O-CO-, and further preferably -COO-.

$L^{12}$ is preferably a single bond, $-CH_2-$, $-CH_2-CH_2-$, or $-CH_2-CH_2-CH_2-$, and more preferably a single bond.

$L^{13}$ is preferably a single bond, -O-CO-, -O-, -NH-, or $-N(CH_3)-$, and more preferably a single bond.

$L^{16}$ in formula (1) is an alkyl group having 14 to 30 carbon atoms so that the moldability of the composition including the polymer 1 is good. Examples of the alkyl group having 14 to 30 carbon atoms include a linear alkyl group having 14 to 30 carbon atoms and a branched alkyl group having 14 to 30 carbon atoms. $L^{16}$ is preferably a linear alkyl group having 14 to 30 carbon atoms, more preferably a linear alkyl group having 14 to 24 carbon atoms, and further preferably a linear alkyl group having 16 to 22 carbon atoms.

Examples of the linear alkyl group having 14 to 30 carbon atoms include a n-tetradecyl group, a n-pentadecyl group, a n-hexadecyl group, a n-heptadecyl group, a n-octadecyl group, a n-nonadecyl group, a n-eicosyl group, a n-heneicosyl group, a n-docosyl group, a n-tricosyl group, a n-tetracosyl group, a n-pentacosyl group, a n-hexacosyl group, a n-heptacosyl group, a n-octacosyl group, a n-nonacosyl group, and n-triacontyl group.

Examples of the branched alkyl group having 14 to 30 carbon atoms include an isotetradecyl group, an isopentadecyl group, an isohexadecyl group, an isoheptadecyl group, an isooctadecyl group, an isononadecyl group, an isoeicosyl group, an isoheneicosyl group, an isodocosyl group, an isotricosyl group, an isotetracosyl group, an isopentacosyl group, an isohexacosyl group, an isoheptacosyl group, an isooctacosyl group, an isononacosyl group, and an isotriacontyl group.

Examples of the combination of $R^1$, $L^{11}$, $L^{12}$, and $L^{13}$ in formula (1) include the following.

[Formula 2]

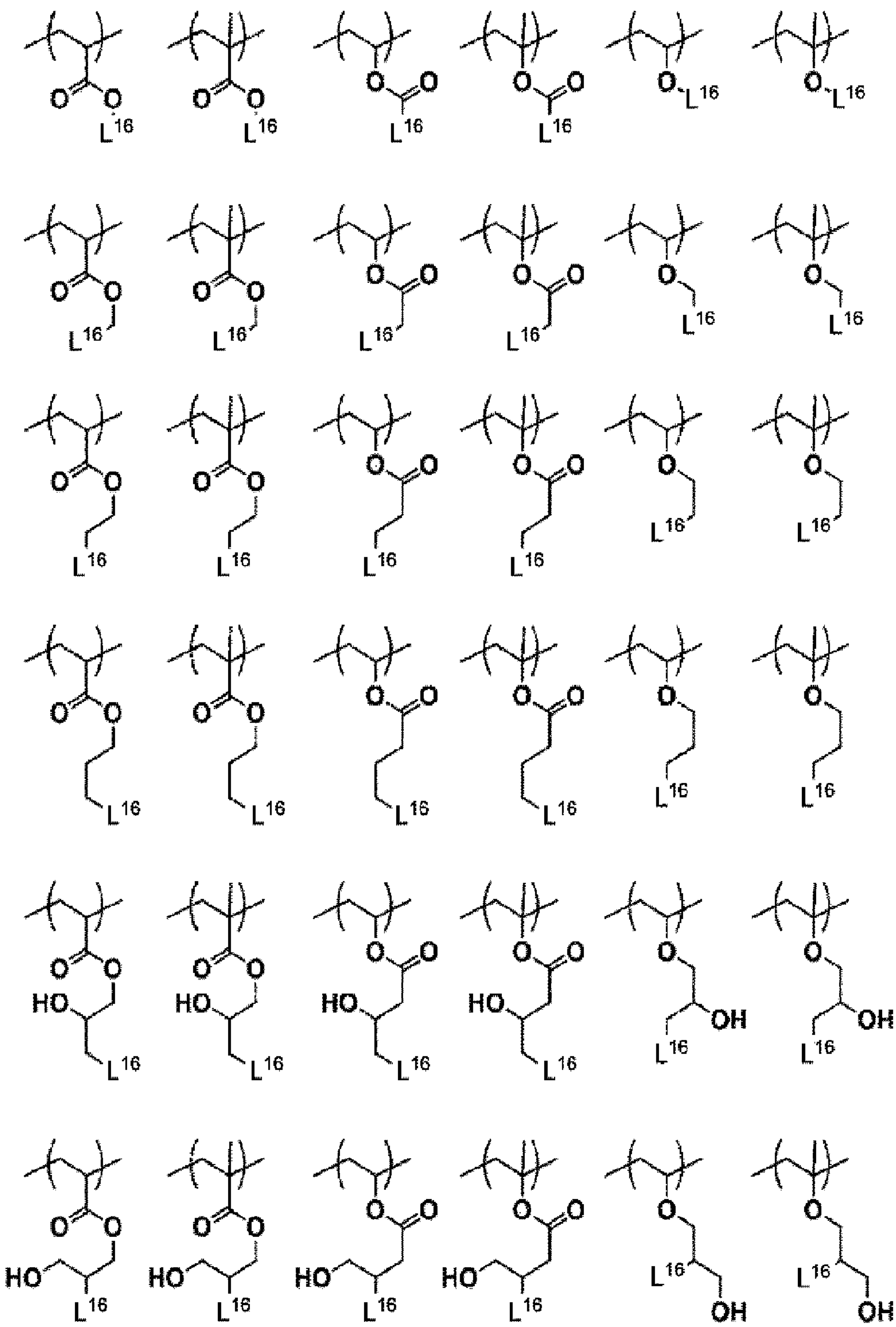

[Formula 3]

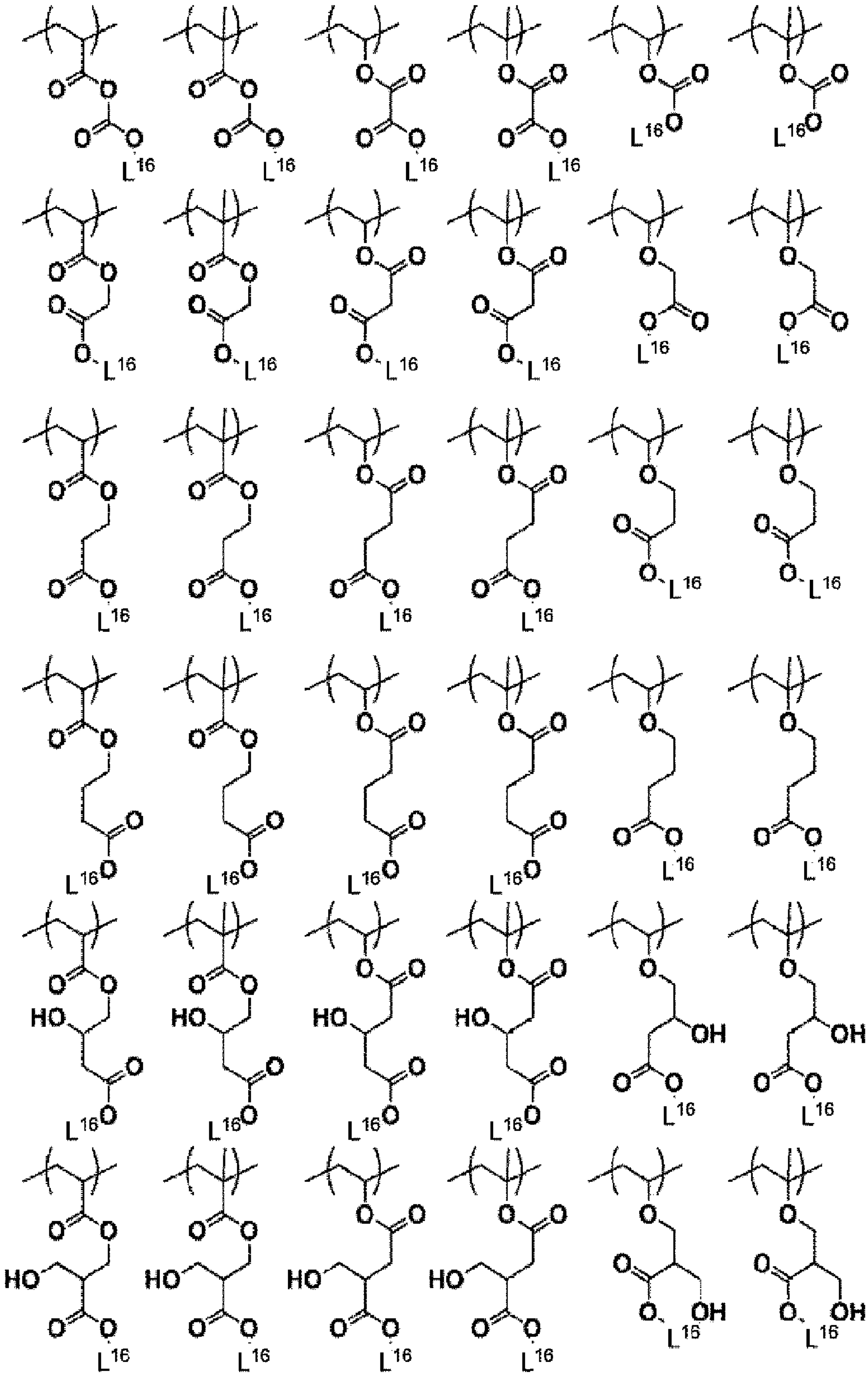

[Formula 4]

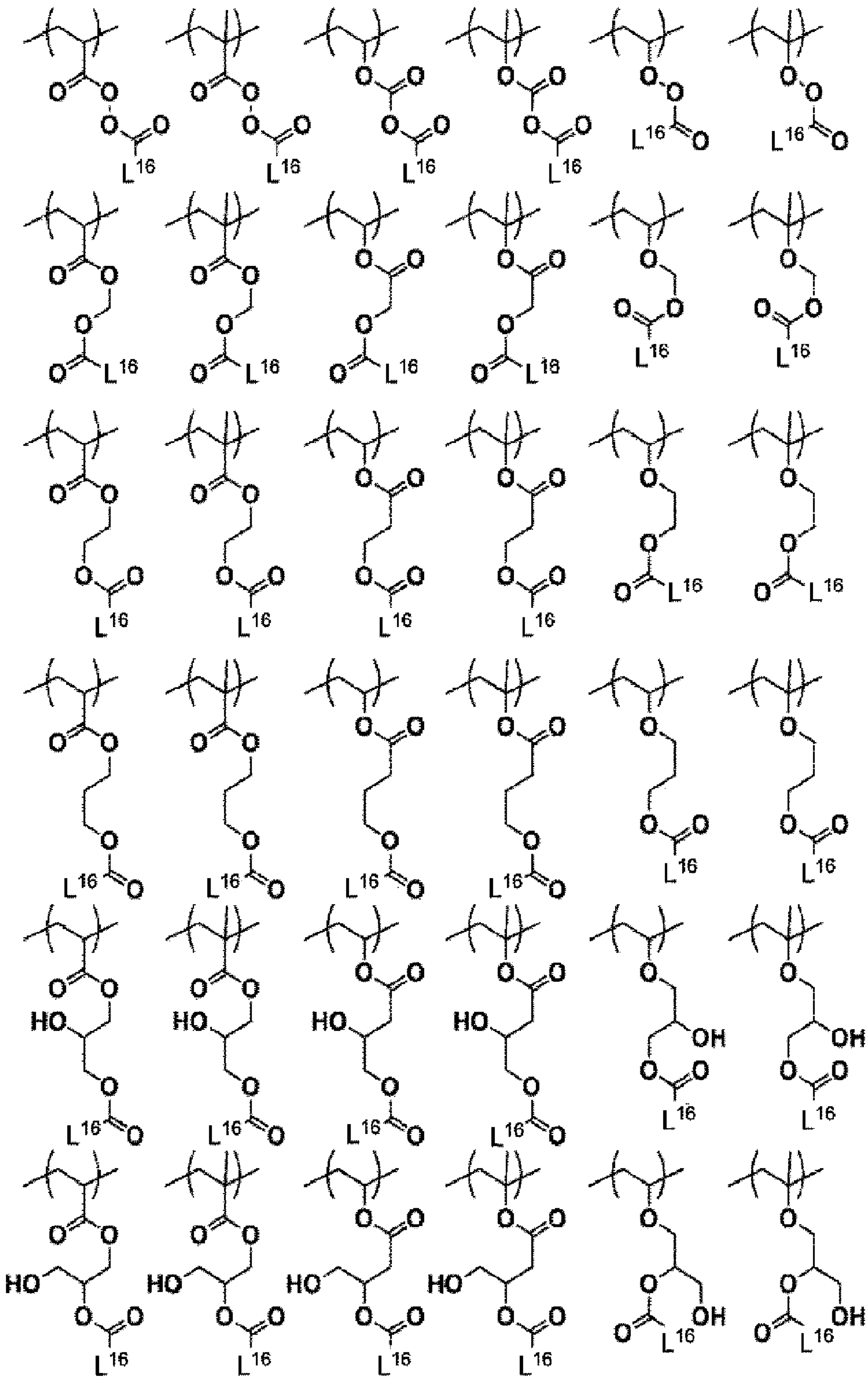

[Formula 5]

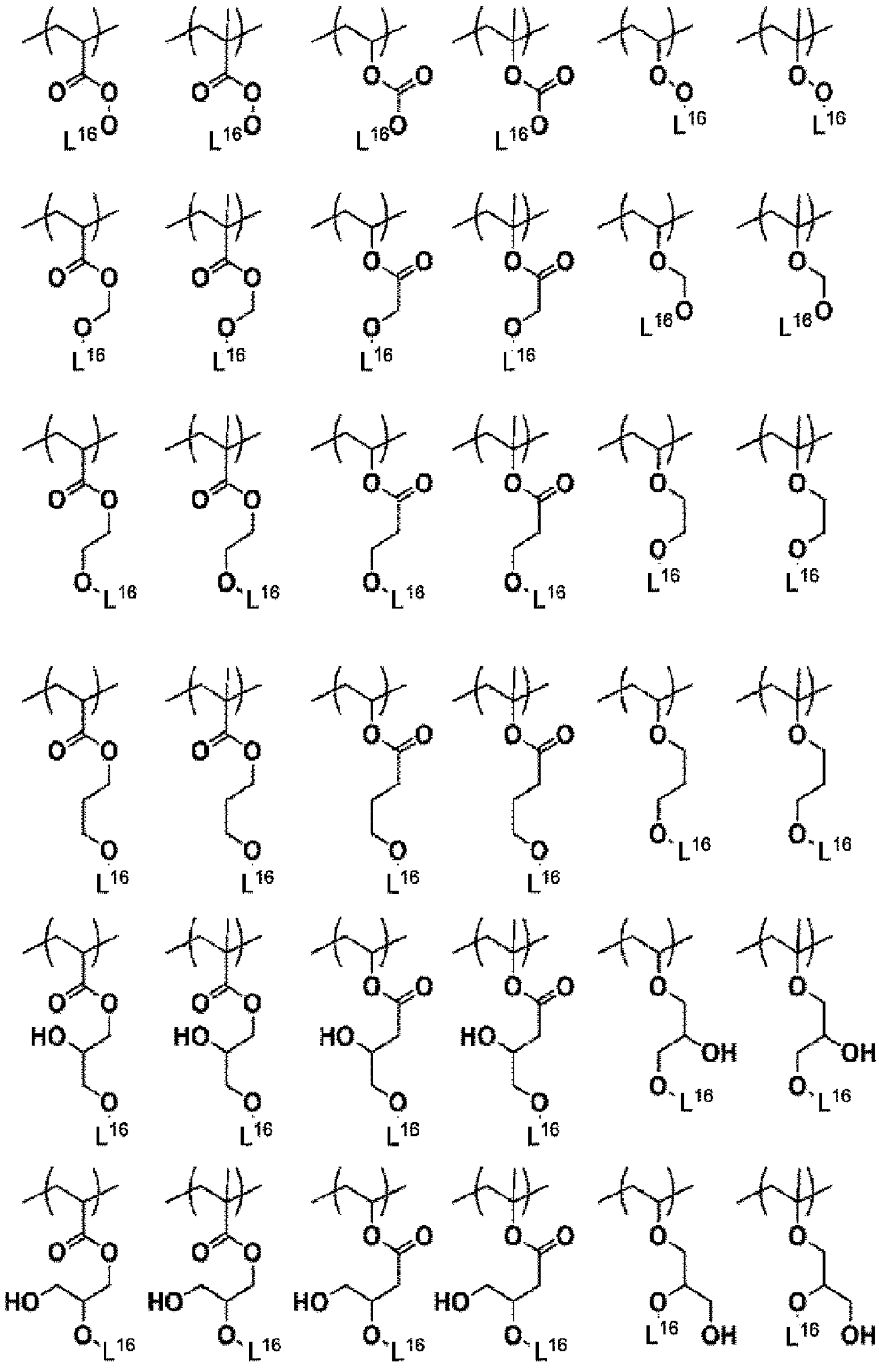

[Formula 6]

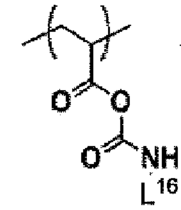 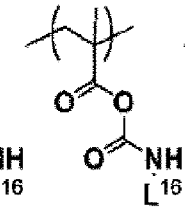 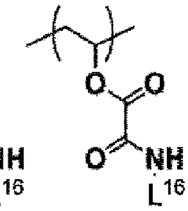 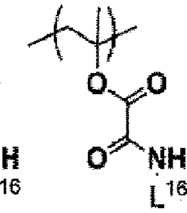 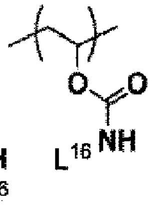 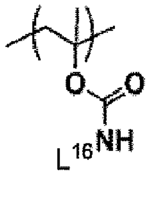
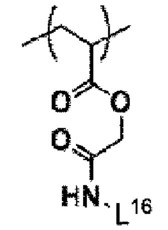 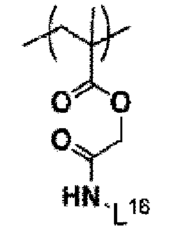 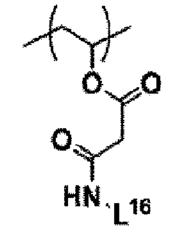 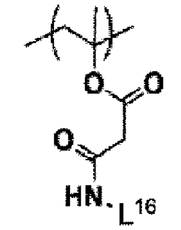 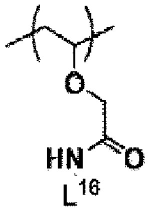 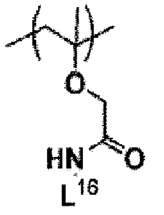
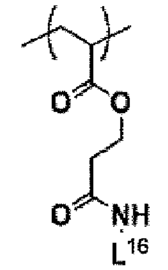 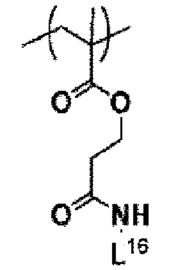 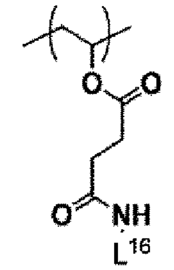 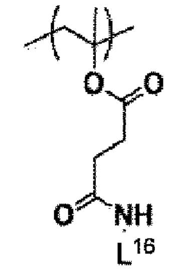 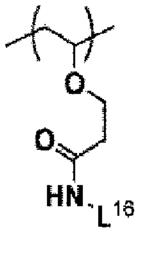 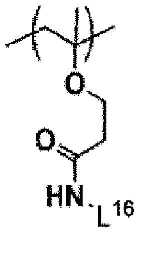
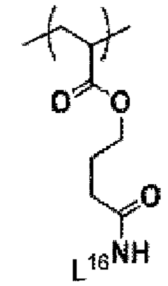 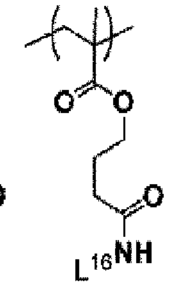 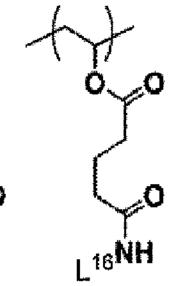 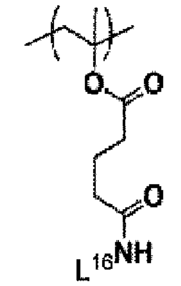 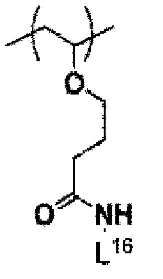 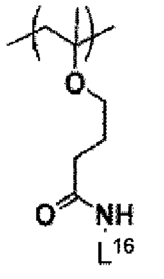
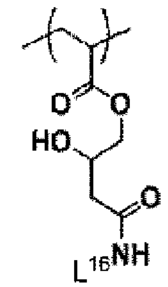 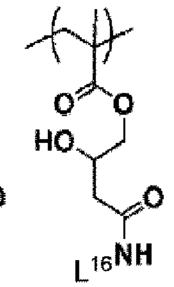 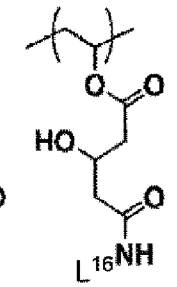 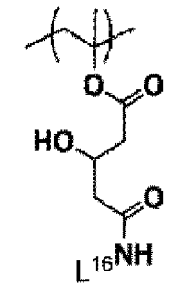 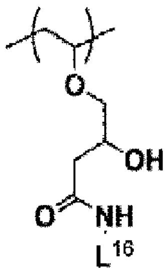 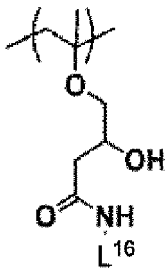
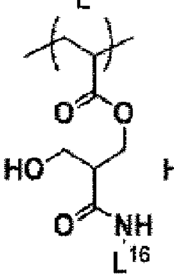 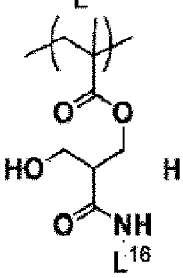 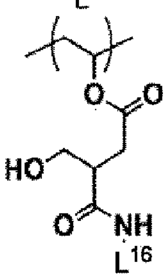 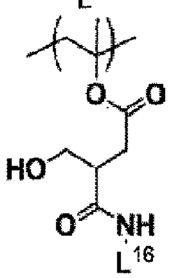 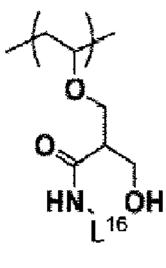 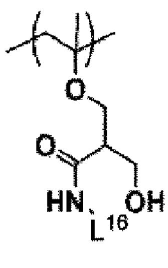

[Formula 7]

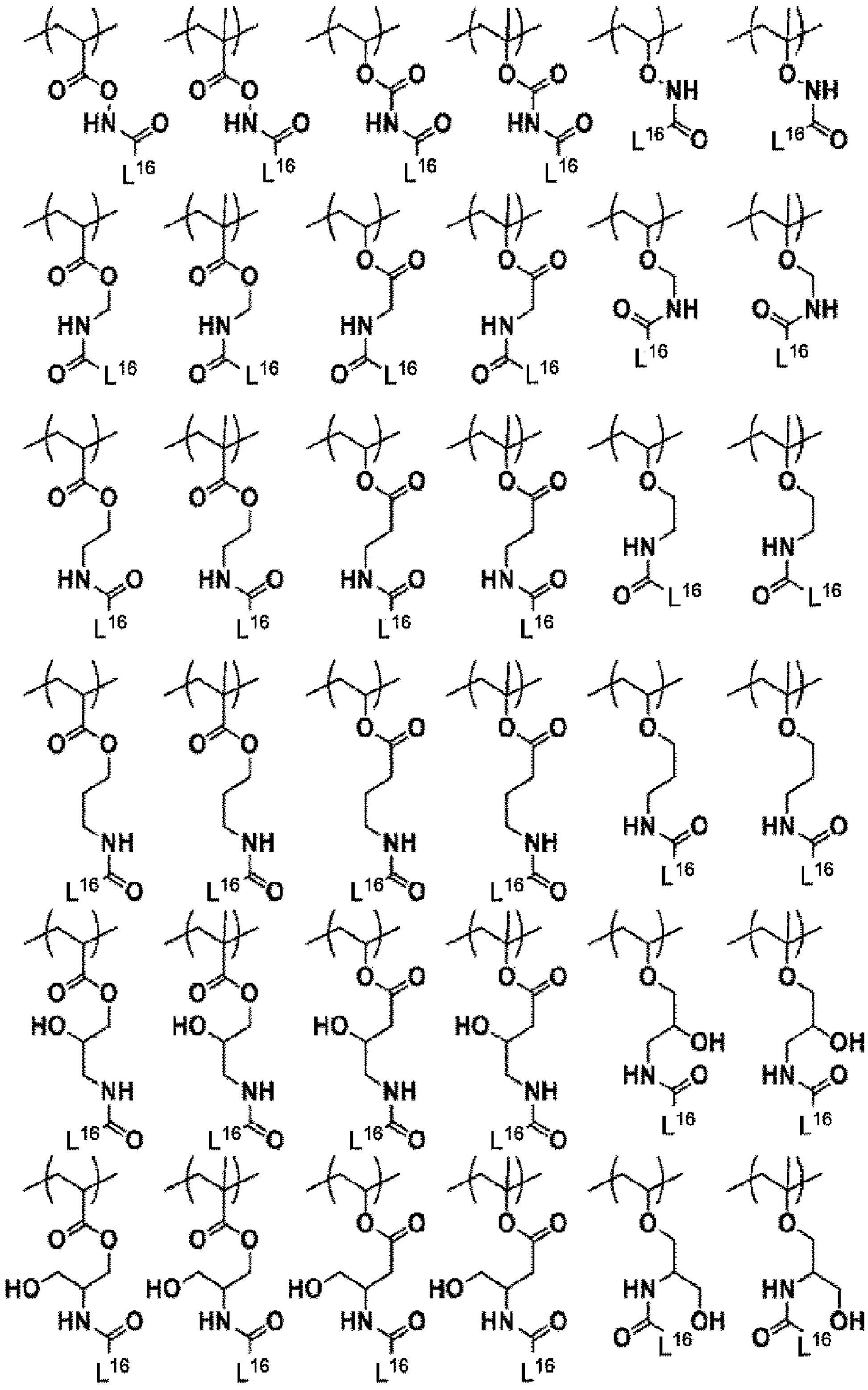

[Formula 8]

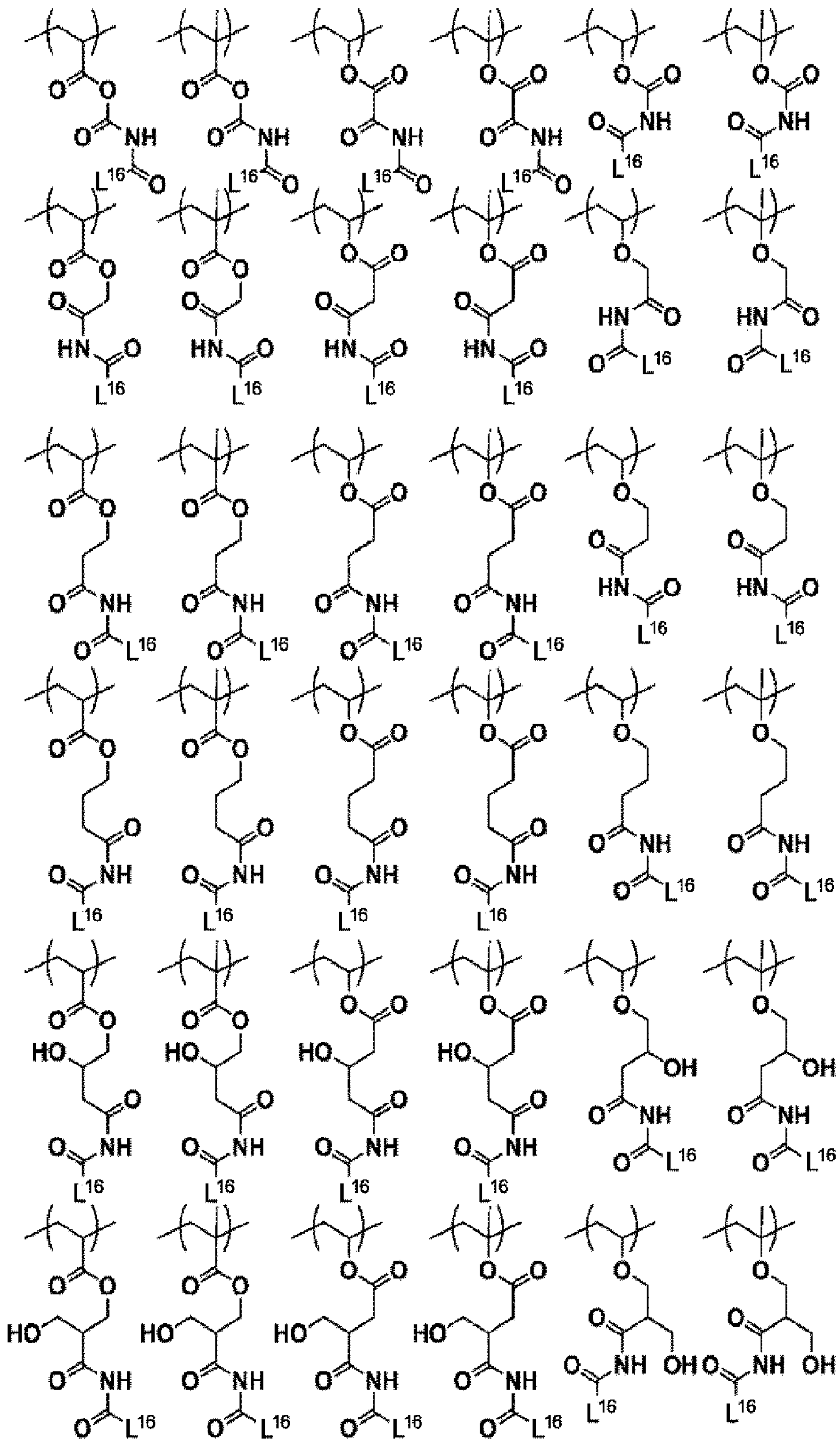

[Formula 9]

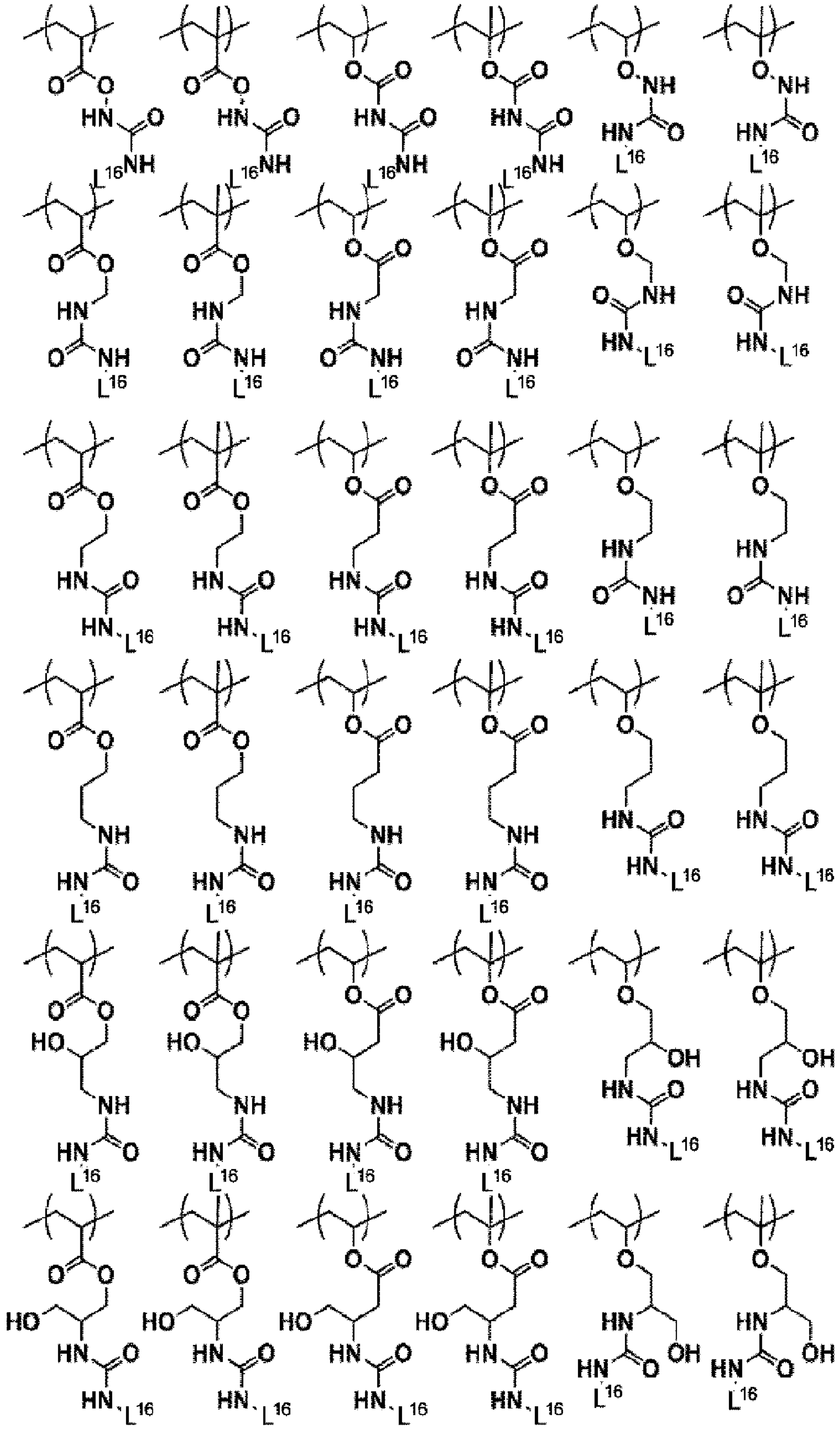

[Formula 10]

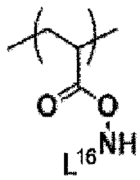 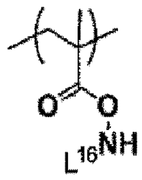 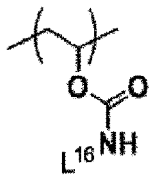 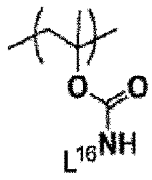 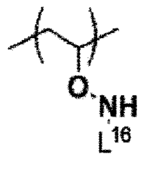 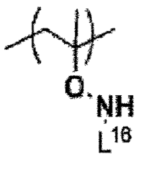

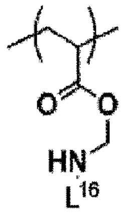 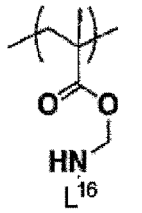 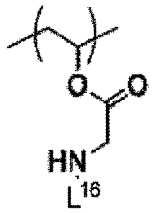 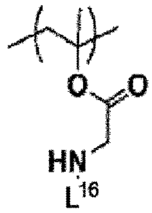 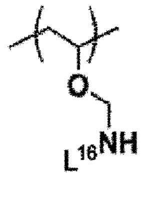 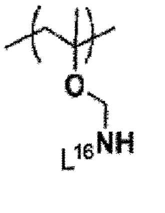

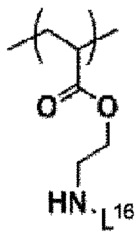 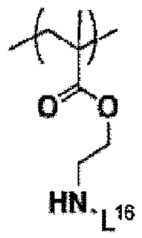 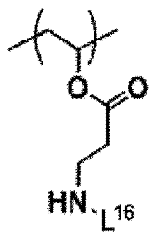 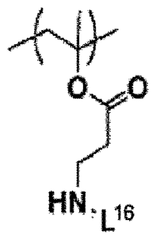 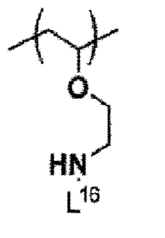 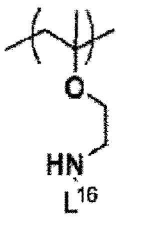

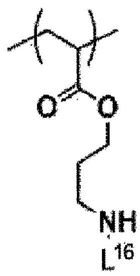 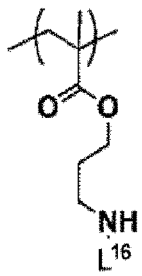 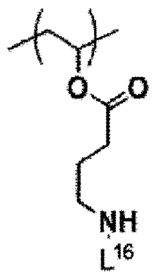 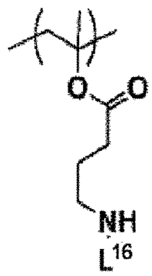 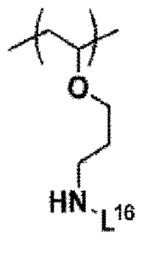 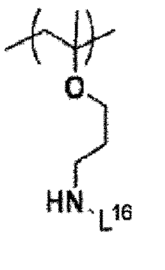

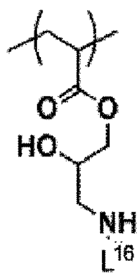 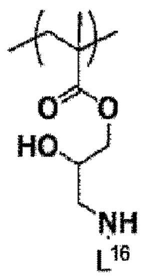 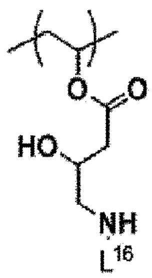 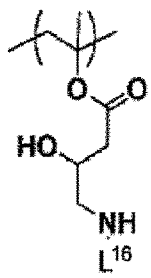 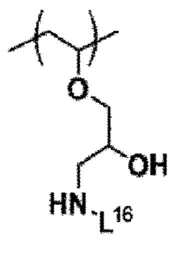 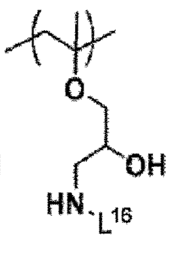

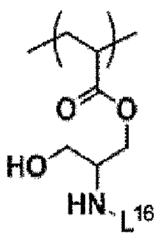 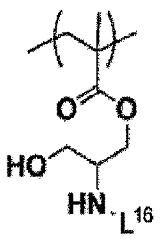 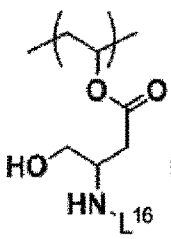 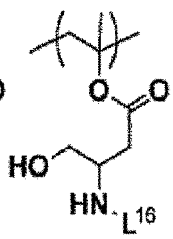 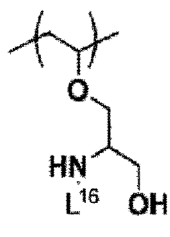 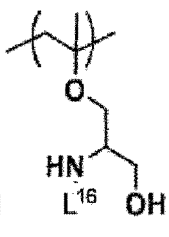

[Formula 11]

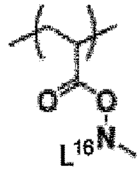 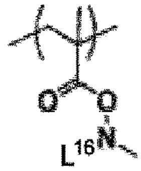 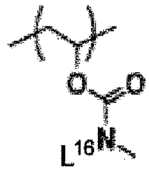 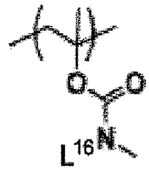 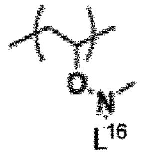 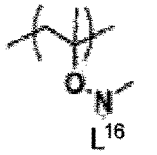

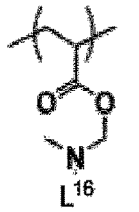 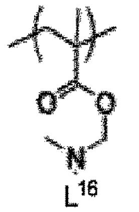 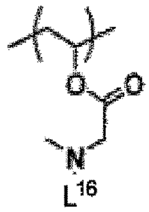 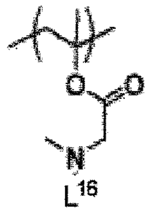 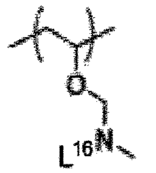 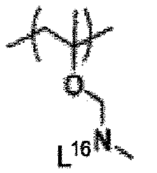

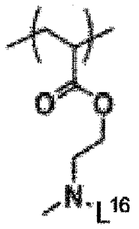 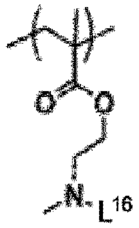 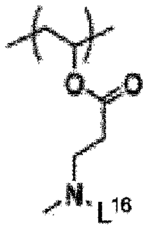 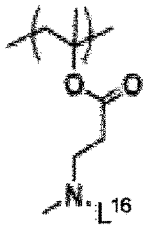 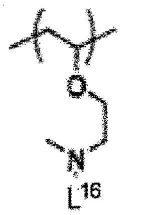 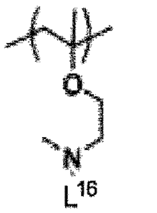

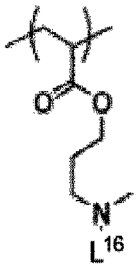 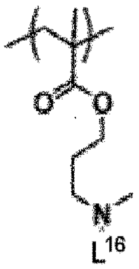 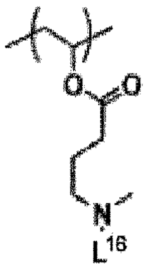 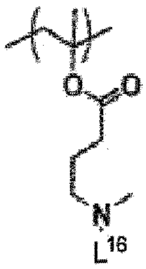 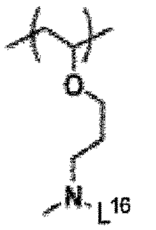 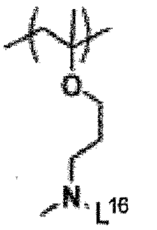

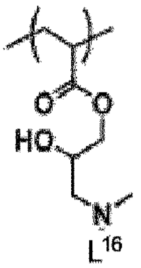 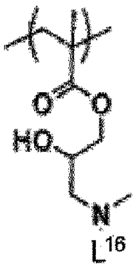 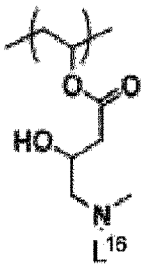 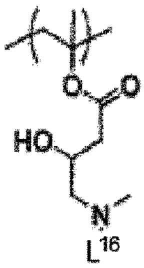 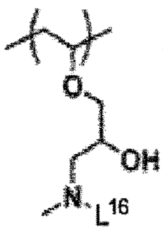 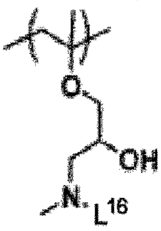

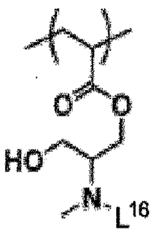 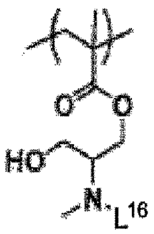 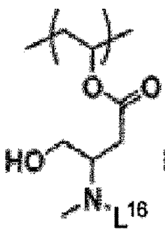 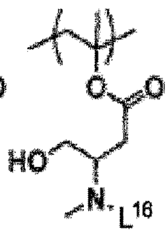 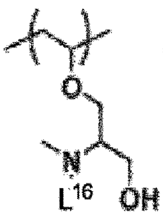 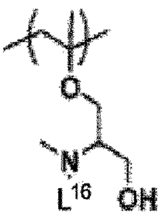

Preferred combinations of $R^1$, $L^{11}$, $L^{12}$, and $L^{13}$ in formula (1) are as follows.

[Formula 12]

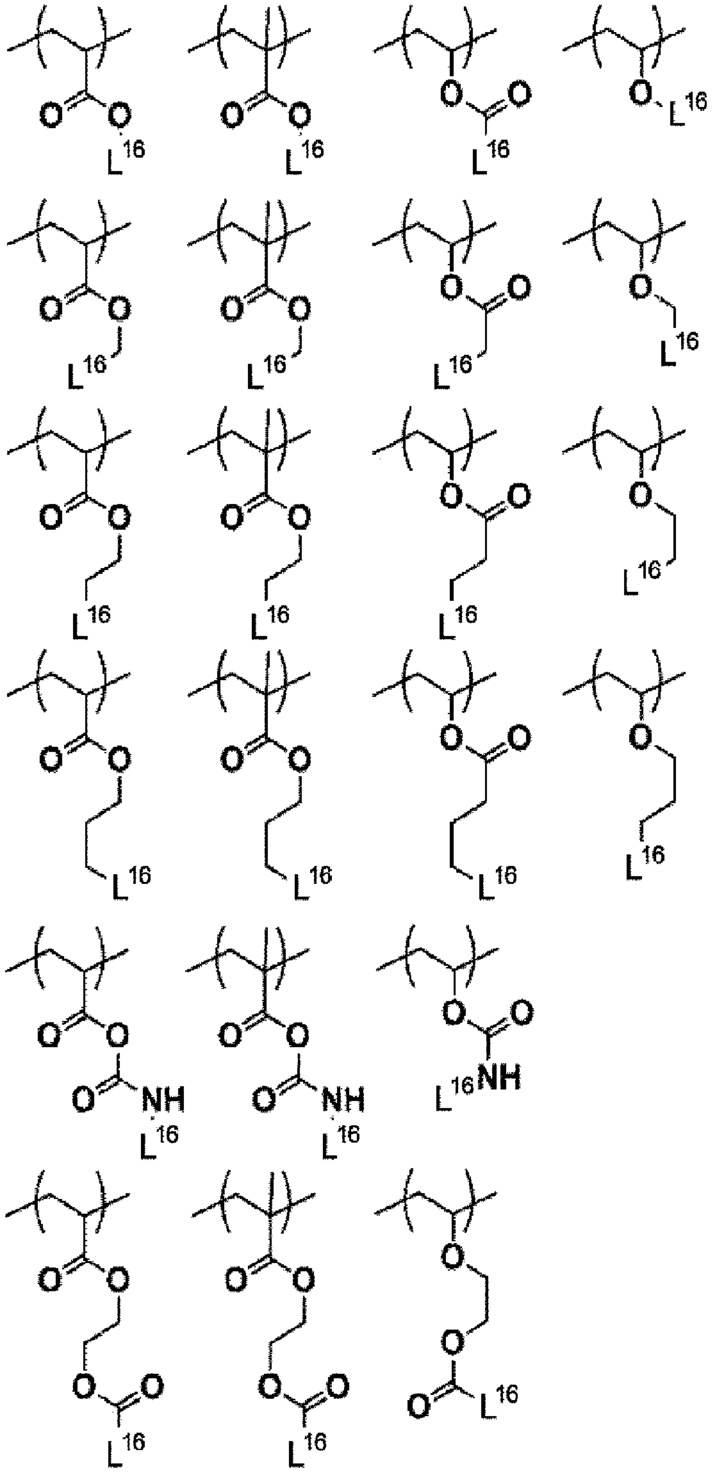

[Formula 13]

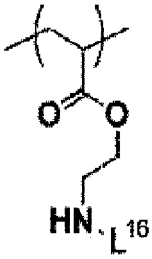
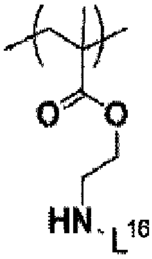
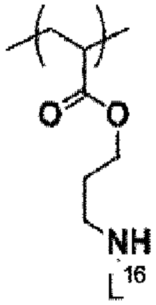
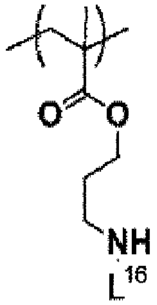
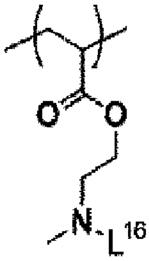
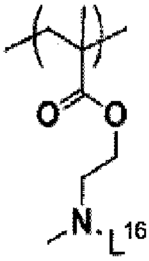
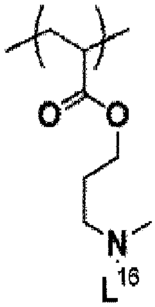
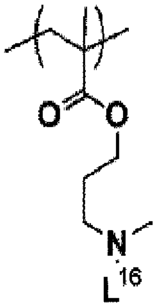
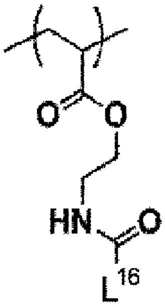
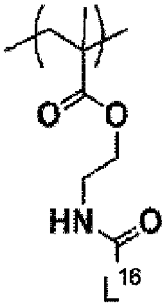
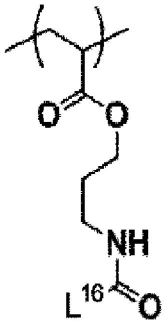
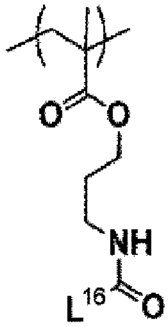
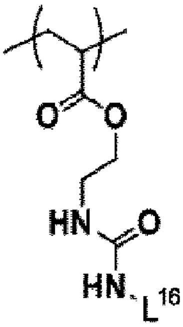
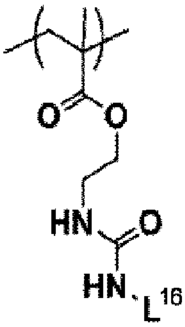
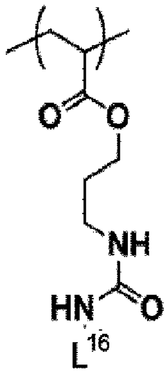
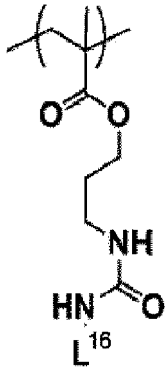

[Formula 14]

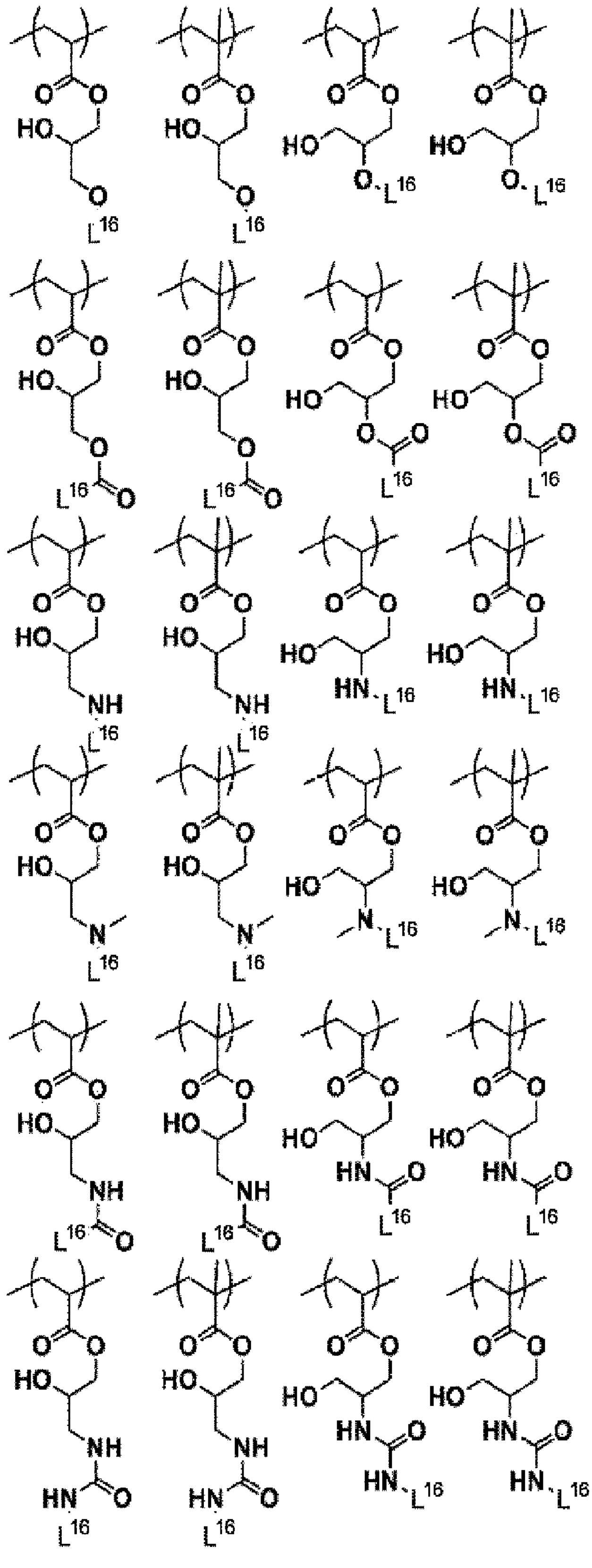

Preferred combinations of $R^1$, $L^{11}$, $L^{12}$, and $L^{13}$ in formula (1) are as follows:

a combination in which $R^1$ is a hydrogen atom, $L^{11}$, $L^{12}$, and $L^{13}$ are each a single bond, and $L^{16}$ is an alkyl group having 14 to 30 carbon atoms; and

a combination in which $R^1$ is a hydrogen atom or a methyl group, $L^{11}$ is -CO-O-, $L^{12}$ and $L^{13}$ are each a single bond, and $L^{16}$ is an alkyl group having 14 to 30 carbon atoms.

More preferred combinations of $R^1$, $L^{11}$, $L^{12}$, and $L^{13}$ in formula (1) are as follows.

[Formula 15]

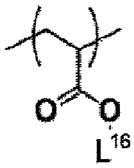
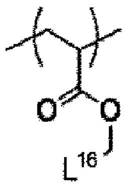
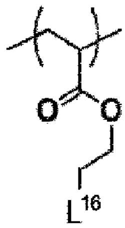
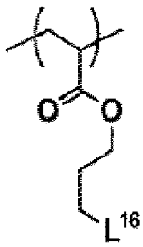
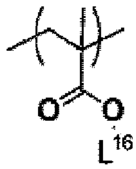
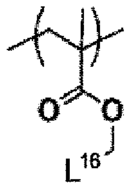
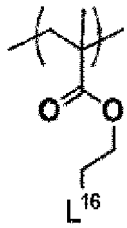
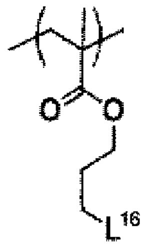
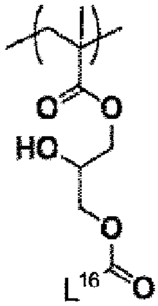
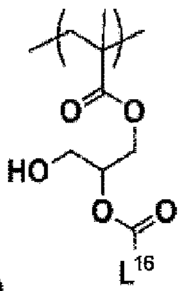

Even more preferred combinations of $R^1$, $L^{11}$, $L^{12}$, and $L^{13}$ in formula (1) are as follows.

[Formula 16]

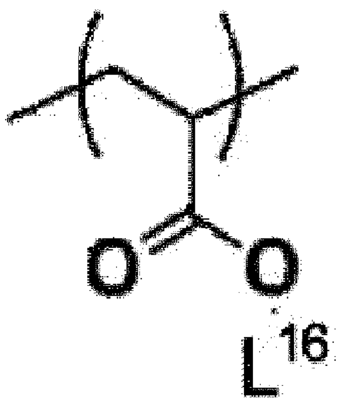

The structural unit B is preferably derived from n-hexadecene, n-octadecene, n-eicosene, n-docosene, n-tetracosene, n-hexacosene, n-octacosene, n-triacontene, n-dotriacontene, n-tetradecyl acrylate, n-pentadecyl acrylate, n-hexadecyl acrylate, n-heptadecyl acrylate, n-octadecyl acrylate, n-nonadecyl acrylate, n-eicosyl acrylate, n-heneicosyl

acrylate, n-docosyl acrylate, n-tricosyl acrylate, n-tetracosyl acrylate, n-pentacosyl acrylate, n-hexacosyl acrylate, n-heptacosyl acrylate, n-octacosyl acrylate, n-nonacosyl acrylate, n-triacontyl acrylate, n-tetradecyl methacrylate, n-pentadecyl methacrylate, n-hexadecyl methacrylate, n-heptadecyl methacrylate, n-octadecyl methacrylate, n-nonadecyl methacrylate, n-eicosyl methacrylate, n-heneicosyl methacrylate, n-docosyl methacrylate, n-tricosyl methacrylate, n-tetracosyl methacrylate, n-pentacosyl methacrylate, n-hexacosyl methacrylate, n-heptacosyl methacrylate, n-octacosyl methacrylate, n-nonacosyl methacrylate, n-triacontyl methacrylate, n-vinyl tetradecylate, n-vinyl hexadecylate, n-vinyl octadecylate, n-vinyl eicosylate, n-vinyl docosylate, n-tetradecyl vinyl ether, n-hexadecyl vinyl ether, n-octadecyl vinyl ether, n-eicosyl vinyl ether, or n-docosyl vinyl ether.

The polymer 1 may have two or more kinds of the structural unit B, and, for example, may be a polymer having a structural unit derived from n-hexadecyl acrylate and a structural unit derived from n-octadecyl acrylate.

The polymer 1 is preferably a polymer having a structural unit (sometimes referred to as "structural unit A") derived from ethylene for imparting good shape retention to a molded article including a composition that includes the polymer 1 and good formability to the composition that includes the polymer 1 at temperatures equal to or higher than the melting peak temperature of the polymer 1. The structural unit A is a structural unit obtained by polymerization of ethylene, and the structural unit A may be forming a branched structure in the polymer.

The polymer 1 is preferably a polymer having the structural unit B represented by formula (1) and the structural unit A derived from ethylene.

The polymer 1 may have at least one structural unit (sometimes referred to as "structural unit C") selected from the group consisting of a structural unit represented by the following formula (2) and a structural unit represented by the following formula (3).

[Formula 17]

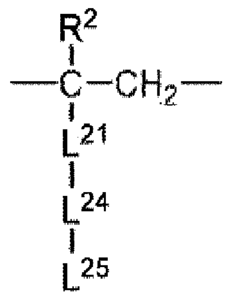

formula (2)

[Formula 18]

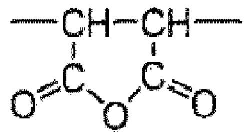

formula (3)

In formula (2),

$R^2$ represents a hydrogen atom or a methyl group,
$L^{21}$ represents a single bond, -CO-O-, -O-CO-, or -O-,
$L^{24}$ represents an alkylene group having 1 to 8 carbon atoms,
$L^{25}$ represents a hydrogen atom, an epoxy group,-CH(OH)-$CH_2$OH, a carboxy group, a hydroxy group, an amino group, or an alkylamino group having 1 to 4 carbon atoms. It is noted that for each of the horizontal chemical formulas of the chemical structure of $L^1$, the left side corresponds to the upper side (main chain side of the polymer) of formula (2) and the right side corresponds to the lower side (terminal side of a side chain of the polymer) of formula (2).

In formula (2), $R^2$ is preferably a hydrogen atom.

In formula (2), $L^{21}$ is preferably -CO-O-, -O-CO-, or -O-, more preferably -CO-O- or -O-CO-, and further preferably -CO-O-.

In formula (2), examples of the alkylene group having 1 to 8 carbon atoms as $L^{24}$ include a methylene group, an ethylene group, a n-propylene group, a 1-methylethylene group, a n-butylene group, a 1,2-dimethylethylene group, a 1,1-dimethylethylene group, a 2,2-dimethylethylene group, a n-pentylene group, a n-hexylene group, a n-heptalene

group, a n-octylene group, and a 2-ethyl-n-hexylene group.

In formula (2), $L^{24}$ is preferably a methylene group, an ethylene group, or a n-propylene group, and more preferably a methylene group.

In formula (2), examples of the alkylamino group having 1 to 4 carbon atoms as $L^{25}$ include a methylamino group, an ethylamino group, a propylamino group, a butylamino group, a dimethylamino group, and a diethylamino group.

In formula (2), $L^{25}$ is preferably a hydrogen atom, an epoxy group, or $CH(OH)-CH_2OH$, and more preferably a hydrogen atom.

Examples of combinations of $R^2$, $L^{21}$, $L^{24}$, and $L^{25}$ in formula (2) are as follows.

[Formula 19]

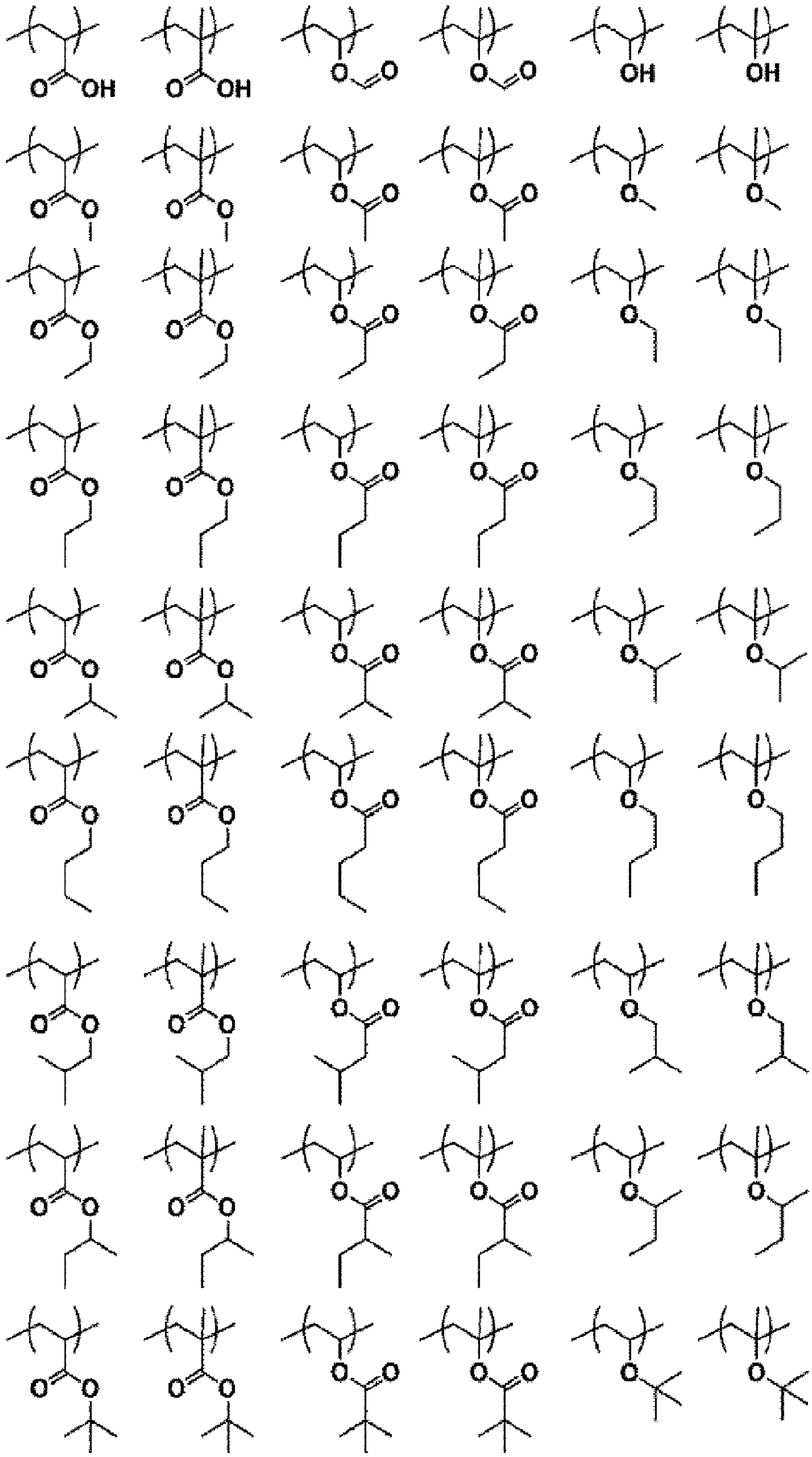

[Formula 20]

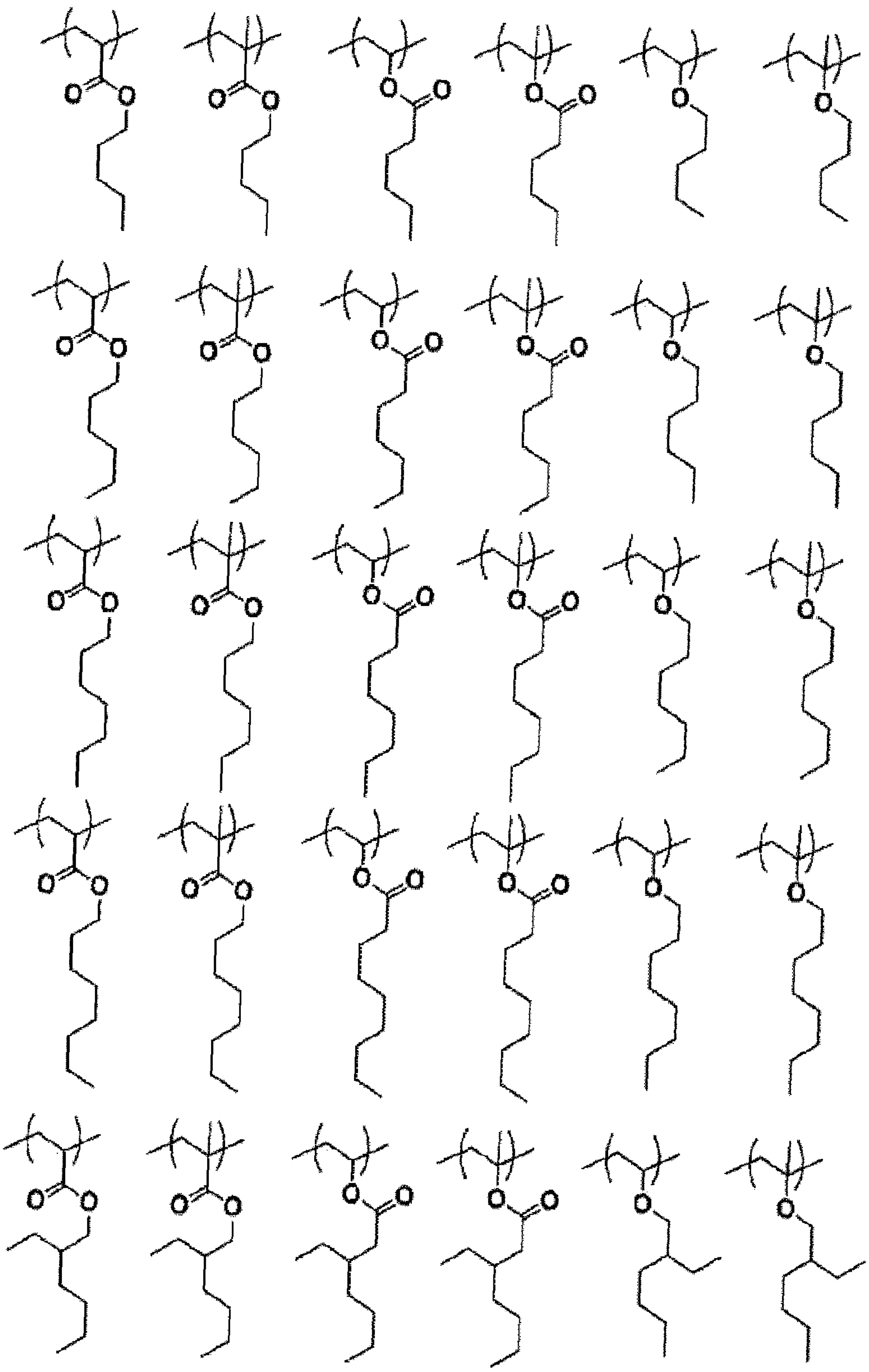

[Formula 21]

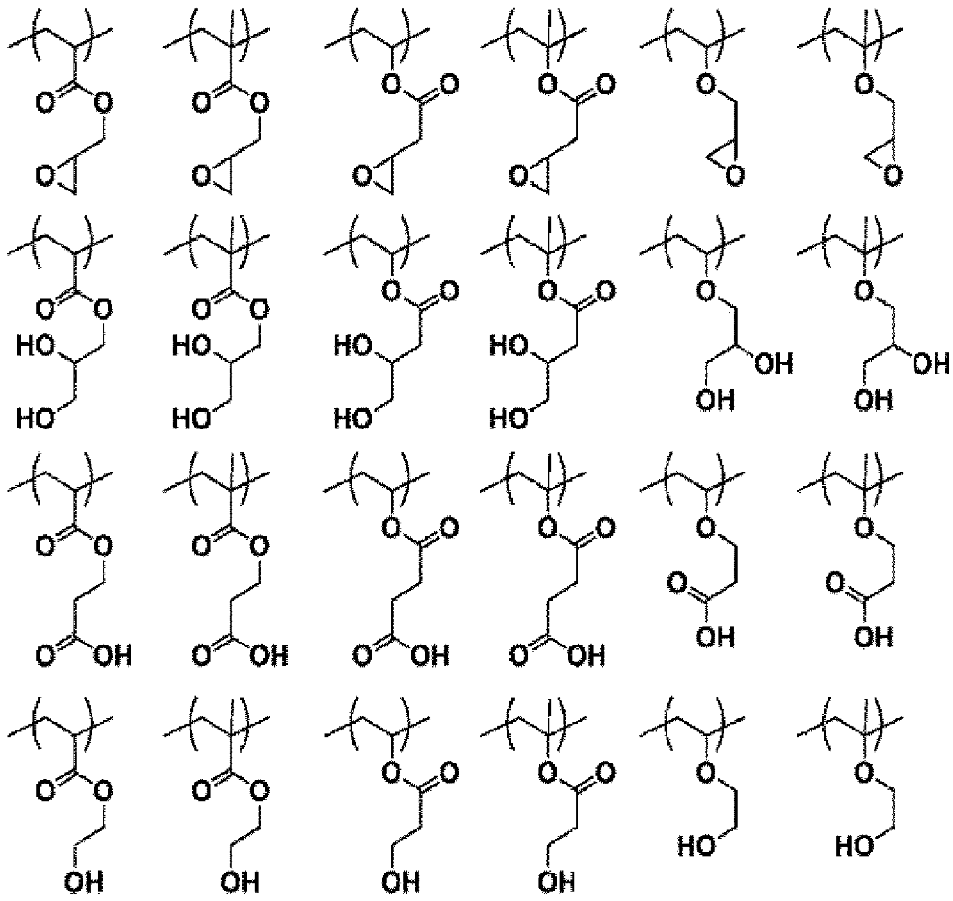

[Formula 22]

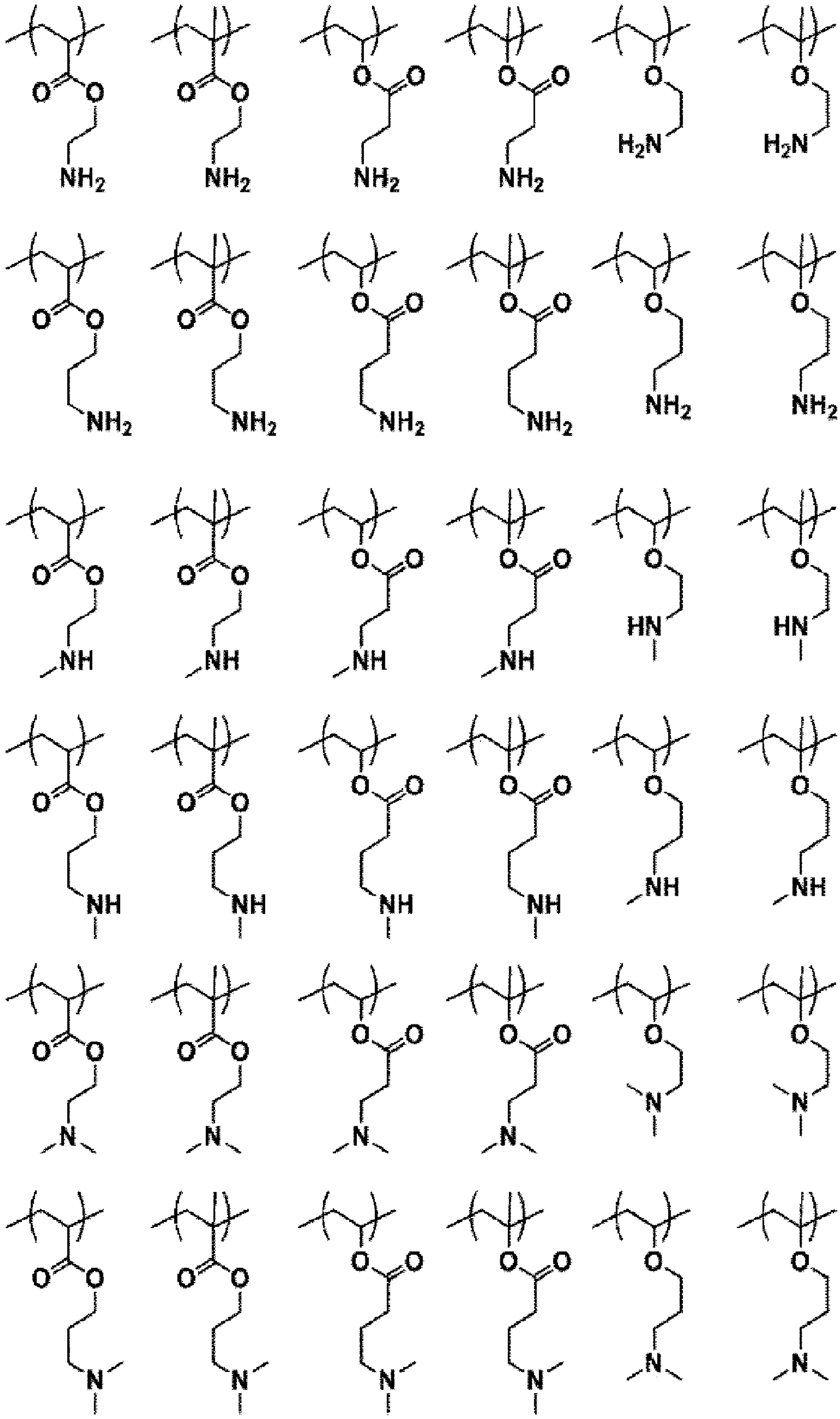

Preferred combinations of $R^2$, $L^{21}$, $L^{24}$, and $L^{25}$ in formula (2) are as follows.

[Formula 23]

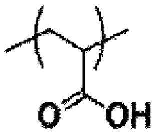 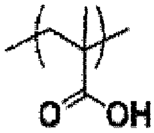 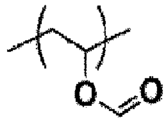 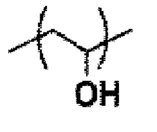

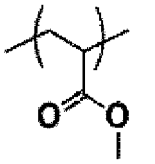 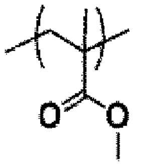 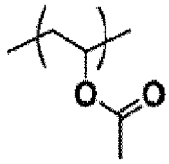 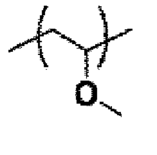

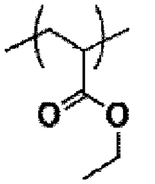 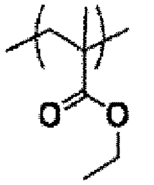 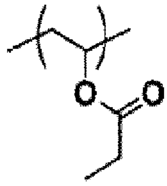 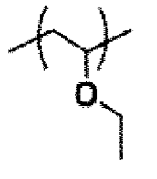

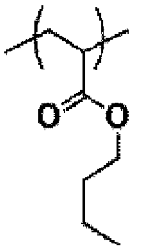 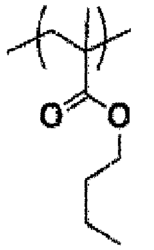 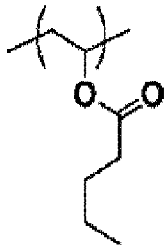 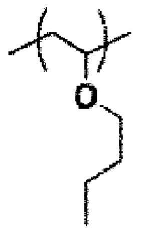

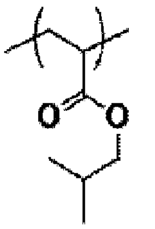 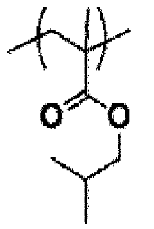 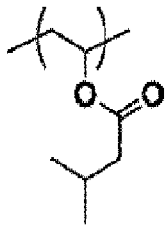 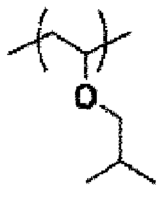

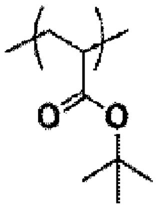 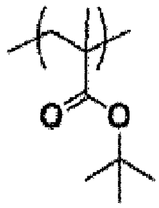 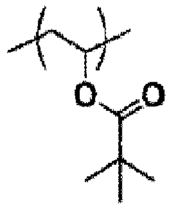 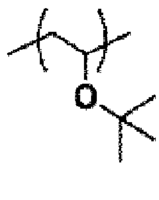

[Formula 24]

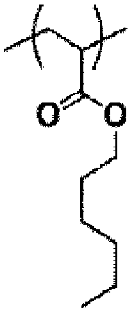
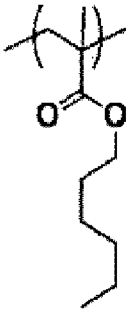
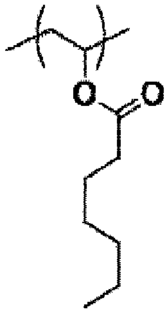
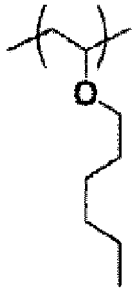
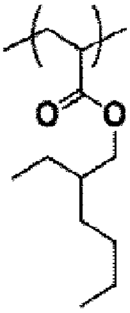
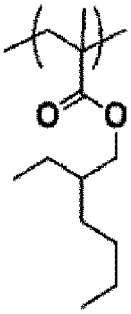
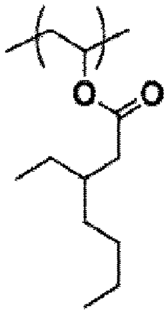
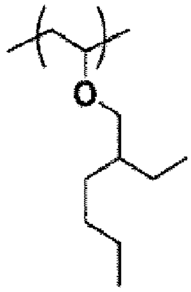
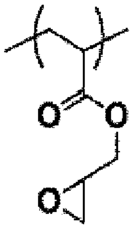
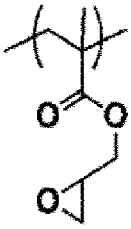
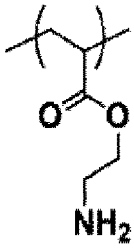
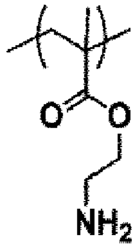
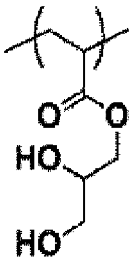
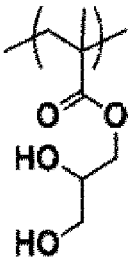
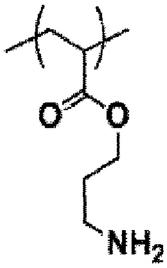
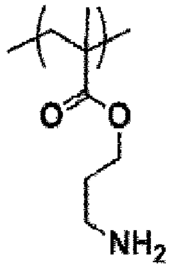

[Formula 25]

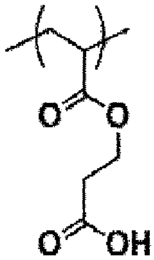
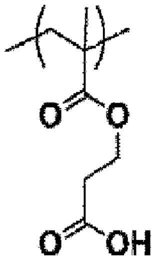
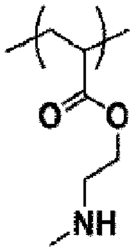
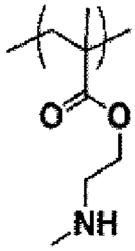
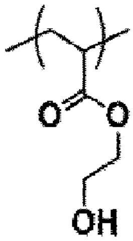
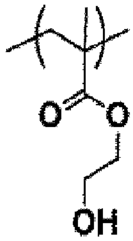
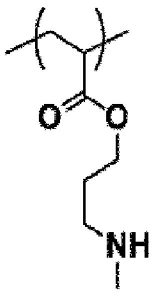
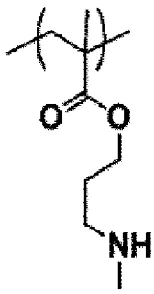
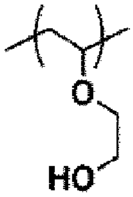
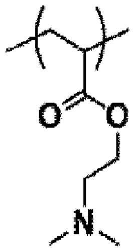
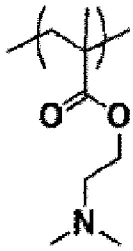
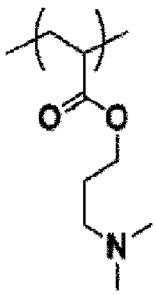
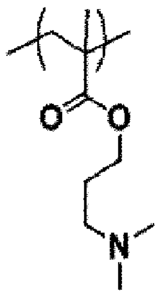

More preferred combinations of $R^2$, $L^{21}$, $L^{24}$, and $L^{25}$ in formula (2) are as follows.

[Formula 26]

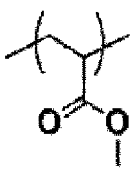
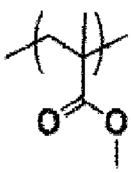
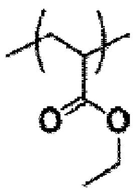
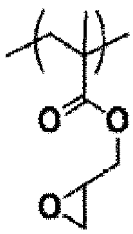
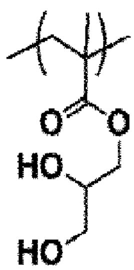

Even more preferred combinations of $R^2$, $L^{21}$, $L^{24}$, and $L^{25}$ in formula (2) are as follows.

[Formula 27]

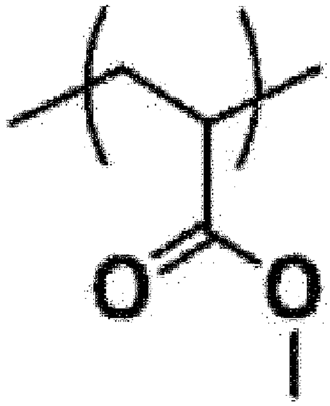

The structural unit represented by formula (2) is derived from, for example, propylene, butene, 1-pentene, 1-hexene, 1-heptene, 1-octene, acrylic acid, methacrylic acid, vinyl alcohol, methyl acrylate, ethyl acrylate, n-propyl acrylate, isopropyl acrylate, n-butyl acrylate, isobutyl acrylate, sec-butyl acrylate, tert-butyl acrylate, methyl methacrylate, ethyl methacrylate, n-propyl methacrylate, isopropyl methacrylate, n-butyl methacrylate, isobutyl methacrylate, sec-butyl methacrylate, tert-butyl methacrylate, vinyl formate, vinyl acetate, vinyl propionate, vinyl(n-butyrate), vinyl(isobutyrate), methyl vinyl ether, ethyl vinyl ether, n-propyl vinyl ether, isopropyl vinyl ether, n-butyl vinyl ether, isobutyl vinyl ether, sec-butyl vinyl ether, tert-butyl vinyl ether, glycidyl acrylate, glycidyl methacrylate, 2,3-dihydroxypropyl acrylate, 2,3-dihydroxypropyl methacrylate, 3-(dimethylamino)propyl acrylate, and 3-(dimethylamino)propyl methacrylate.

When the polymer 1 includes the structural unit C, and the structural unit C is represented by formula (3), the structural unit may be derived from maleic anhydride. Further, the structural unit C may be formed by a condensation reaction of two structural units which may be overlappingly selected from the structural unit B and the structural unit C represented by the formula (2).

The polymer 1 may have two or more kinds of the structural unit C, and, for example, may be a polymer having a structural unit derived from methyl acrylate, a structural unit derived from ethyl acrylate, and a structural unit derived from glycidyl methacrylate.

The polymer 1 is preferably a polymer having a structural unit B represented by formula (1). Examples of the polymer 1 having the structural unit B represented by formula (1) include:

a polymer 1 composed of a structural unit B,
a polymer 1 having a structural unit B and a structural unit A,
a polymer 1 having a structural unit B and a structural unit C, and
a polymer 1 having a structural unit B, a structural unit A, and the structural unit C.

Examples of the above-mentioned "polymer 1 composed of a structural unit B" include the following:

a polymer composed of a structural unit B represented by the formula (1) in which $L^{11}$, $L^{12}$, and $L^{13}$ are each a single bond, and $L^{16}$ is an alkyl group having 14 to 30 carbon atoms, and
a polymer composed of a structural unit B represented by formula (1) in which $L^{11}$ is -CO-O-, $L^{12}$ and $L^{13}$ are each a single bond, and $L^{16}$ is an alkyl group having 14 to 30 carbon atoms.

Examples of the above-mentioned "polymer 1 having a structural unit B and a structural unit A" include the following:

a polymer having a structural unit B represented by formula (1) in which $R^1$ is a hydrogen atom, $L^{11}$, $L^{12}$, and $L^{13}$ are each a single bond, and $L^{16}$ is an alkyl group having 14 to 30 carbon atoms, and the structural unit A, wherein the total number of the structural units A and structural units B with respect to the total number of 100% of all the structural units included in the polymer is 90% or more, and
a polymer having a structural unit B represented by formula (1) in which $R^1$ is a hydrogen atom or a methyl group, $L^{11}$ is -CO-O-, $L^{12}$ and $L^{13}$ are each a single bond, and $L^{16}$ is an alkyl group having 14 to 30 carbon atoms, and the structural unit A, and the polymer 1 optionally has the structural unit C, wherein the total number of the structural units A and structural units B with respect to the total number of 100% of all the structural units included in the

polymer is 90% or more.

From the viewpoint of increasing ΔH, the polymer 1 is preferably a polymer in which the number of structural units B is 50% to 80% with respect to 100% of the total number of the structural units B and structural units A included in the polymer.

From the viewpoint of formability, the polymer 1 is preferably a polymer in which the number of structural units B is 10% to 50% with respect to 100% of the total number of the structural units B and structural units A included in the polymer.

Examples of the "polymer 1 having a structural unit B and a structural unit C" include a polymer having a structural unit B represented by formula (1) in which $R^1$ is a hydrogen atom or a methyl group, $L^{11}$ is -CO-O-, $L^{12}$ and $L^{13}$ are each a single bond, and $L^{16}$ is an alkyl group having 14 to 30 carbon atoms, and a structural unit C represented by formula (2) in which $R^2$ is a hydrogen atom or a methyl group, $L^{21}$ is -CO-O-, $L^{24}$ is a methylene group, and $L^{25}$ is a hydrogen atom. In this case, a polymer in which the number of structural units B is 80% or more with respect to 100% of the total number of the structural units B and structural units C included in the polymer is preferred.

In one mode of the polymer 1, with respect to 100% of the total number of the structural units A, structural units B, and structural units C, the number of structural units A is usually 0 to 99% and the total number of the structural units B and structural units C is usually 1 to 100%, and with respect to 100% of the total number of the structural units B and structural units C, the number of structural units B is usually 1 to 100% and the number of structural units C is usually 0 to 99%.

In one mode, the number of structural units A in the polymer 1 is 1 to 99% with respect to 100% of the total number of the structural units A, structural units B, and structural units C. From the perspective of imparting good shape retention to a molded article including the heat storage composition of the present invention, the number is preferably 70 to 99%, more preferably 80 to 97.5%, and further preferably 85 to 92.5%. From the perspective of imparting good shape retention to a molded article including the heat storage composition of the present invention, the total number of the structural units B and structural units C in the polymer 1 is, with respect to 100% of the total number of the structural units A, structural units B, and structural units C, 1 to 30%, more preferably 2.5 to 20%, and further preferably 7.5 to 15%.

In one mode, the number of structural units B in the polymer 1 is usually 1 to 100% with respect to 100% of the total number of the structural units B and structural units C, and from the perspective of imparting good heat storage performance to the composition including the polymer 1, this number is preferably 60 to 100%, and more preferably 80 to 100%.

In one mode, the number of structural units C in the polymer 1 is usually 0 to 99% with respect to 100% of the total number of the structural units B and structural units C, and from the perspective of imparting good heat storage performance to the composition including the polymer 1, this number is preferably 0 to 40%, and more preferably 0 to 20%.

The number of each of structural units A, structural units B, and structural units C can be determined from an integrated value for a signal attributed to the corresponding structural unit in a $^{13}C$ nuclear magnetic resonance spectrum (hereinafter, referred to as "$^{13}C$-NMR spectrum") or a $^{1}H$ nuclear magnetic resonance spectrum (hereinafter, referred to as "$^{1}H$-NMR spectrum") measured by a well-known method.

If the polymer 1 is a polymer produced by a method of reacting a precursor polymer P, which is described later, and a compound α, which is described later, the number of each of structural units A, structural units B, and structural units C can be determined, for example, in the following manner.

<Number of structural units $A_1$ derived from ethylene and structural units $C_1$ derived from methyl acrylate when the precursor polymer P is an ethylene-methyl acrylate copolymer> (unit: %)

When the precursor polymer P includes a structural unit A derived from ethylene, first, the number of structural units $A_1$ and number of structural units $C_1$ included in the precursor polymer P are obtained. In the case of determining these numbers from the $^{13}C$-NMR spectrum, for example, the integral values in the range of the following $a_1$, $b_1$, $c_1$, $d_1$, and $e_1$ are determined, the number of dyads (AA, AC, CC) of the structural units A and C are determined from the following formulas, and the determined numbers are substituted into the below formulas to calculate the number of structural units A and structural units C. It is noted that AA is a structural unit A-structural unit A dyad, AC is a structural unit A-structural unit C dyad, and CC is a structural unit C-structural unit C dyad.

$a_1$: 28.1 to 30.5 ppm

$b_1$: 31.9 to 32.6 ppm

$c_1$: 41.7 ppm

$d_1$: 43.1 to 44.2 ppm

$e_1$: 45.0 to 46.5 ppm

$$AA = a_1/4+b_1/2$$

$$AC = e_1$$

$$CC = c_1+d_1$$

<Conversion rate $X_B$ of the structural unit $C_1$ derived from methyl acrylate to the structural unit B represented by formula (1)> (unit: %)

Since the structural unit B in the polymer 1 is formed through reaction between the structural unit C included in the precursor polymer P and the compound $\alpha$, which is described later, the conversion rate $X_B$ at which the structural unit C is converted to structural unit B in the reaction is determined in the following manner.

An integrated value for a signal (range $f_1$) attributed to a specific carbon included in the side chain of the structural unit C in the precursor polymer P (hereinafter, referred to as "integrated value $F_1$") and an integrated value for a signal (range $g_1$) attributed to a specific carbon included in the side chain of the structural unit B in the polymer 1 (hereinafter, referred to as "integrated value $G_1$") are substituted into the following formula to determine the conversion rate.

| | |
|---|---|
| $f_1$: | 50.0 to 51.2 ppm |
| $g_1$: | 55.0 to 56.8 ppm |

<Number of structural units A derived from ethylene, structural units B represented by formula (1), and structural units C derived from methyl acrylate included in polymer 1> (unit: %)

Since the structural unit A included in the precursor polymer P does not change in the reaction between the precursor polymer P and the compound $\alpha$ described later, the number of structural units A included in the polymer 1 and the number of structural units $A_1$ included in the precursor polymer P are taken to be the same (number of structural units A = number of structural units $A_1$). The number of structural units B included in the polymer 1 is determined as the product of the number of structural units $C_1$ included in the precursor polymer P and the conversion rate $X_B$ (number of structural units B = number of structural units $C_1$ × conversion rate $X_B$ / 100). The number of structural units C included in the polymer 1 is determined as the difference between the number of structural units $C_1$ included in the precursor polymer P and the number of structural units B included in the polymer 1 (number of structural units C = number of structural units $C_1$ - number of structural units B).

The content (wt.%) of each of the structural unit A, the structural unit B, and the structural unit C included in the polymer 1 according to the present invention can be calculated from the following formulas.

wt.% of structural unit A = (number of structural units A × molecular weight of structural unit A) / (number of structural units A × molecular weight of structural unit A + number of structural units B × molecular weight of structural unit B + number of structural units C × molecular weight of structural unit C)

wt.% of structural unit B = (number of structural units B × molecular weight of structural unit B) / (number of structural units A × molecular weight of structural unit A + number of structural units B × molecular weight of structural unit B + number of structural units C × molecular weight of structural unit C)

wt.% of structural unit C = (number of structural units C × molecular weight of structural unit C) / (number of structural units A × molecular weight of structural unit A + number of structural units B × molecular weight of structural unit B + number of structural units C × molecular weight of structural unit C)

In one example, the precursor polymer P may be a polymer having at least one structural unit C selected from the group consisting of structural units represented by the above formula (2) and structural units represented by the above formula (3) (however, in formula (2), $L^{21}$ is -CO-O-, -O-CO-, or O-).

Compound $\alpha$

The compound (sometimes referred to as compound $\alpha$) for forming the structural unit B by reacting with the structural unit C in the precursor polymer P is at least one compound selected from the group consisting of:

an alcohol having an alkyl group having 14 to 30 carbon atoms,
an amine having an alkyl group having 14 to 30 carbon atoms,
an alkyl halide having an alkyl group having 14 to 30 carbon atoms,
a carboxylic acid having an alkyl group having 14 to 30 carbon atoms,
a carboxamide having an alkyl group having 14 to 30 carbon atoms,
a carboxylic acid halide having an alkyl group having 14 to 30 carbon atoms,
a carbamic acid having an alkyl group having 14 to 30 carbon atoms,
an alkylurea having an alkyl group having 14 to 30 carbon atoms, and
an isocyanate having an alkyl group having 14 to 30 carbon atoms.

Examples of the method for producing the polymer 1 include a method of reacting the precursor polymer P and the compound $\alpha$, and a method of polymerizing each monomer corresponding to the structural units of the polymer 1. The alkyl group of the compound $\alpha$ may be, for example, a linear alkyl group or a branched alkyl group, but is preferably a linear alkyl group.

The above-mentioned precursor polymer P is a raw material for producing the polymer 1, and the precursor polymer P does not substantially include the structural unit B represented by formula (1). The precursor polymer P may include a structural unit that does not correspond to any of the structural unit A, the structural unit B, or the structural unit C.

The above-mentioned precursor polymer P is a polymer in which, with respect 100% of the total number of the structural units A and structural units C, the number of structural units A is preferably 0 to 99% and the total number of

structural units C is preferably 1 to 100%, and more preferably the number of structural units A is 70 to 99% and the total number of structural units C is 1 to 30%.

Examples of methods for forming the structural unit B in the polymer 1 include: a method of reacting the structural unit C included in the precursor polymer P and the compound α; a method of polymerizing a monomer to serve as a raw material of the structural unit B; or a method of copolymerizing ethylene and a monomer to serve as a raw material of the structural unit B. It is preferred that the alkyl group of the compound α be a linear alkyl group. A polymerization initiator such as an azo compound may be used in the methods of polymerizing a monomer. Examples of the azo compound include azobisisobutyronitrile.

Examples of the above-mentioned precursor polymer P include the following: acrylic acid polymer, methacrylic acid polymer, vinyl alcohol polymer, methyl acrylate polymer, ethyl acrylate polymer, n-propyl acrylate polymer, n-butyl acrylate polymer, methyl methacrylate polymer, ethyl methacrylate polymer, n-propyl methacrylate polymer, n-butyl methacrylate polymer, vinyl formate polymer, vinyl acetate polymer, vinyl propionate polymer, vinyl(n-butyrate) polymer, methyl vinyl ether polymer, ethyl vinyl ether polymer, n-propyl vinyl ether polymer, n-butyl vinyl ether polymer, maleic anhydride polymer, glycidyl acrylate polymer, glycidyl methacrylate polymer, 3-(dimethylamino)propyl acrylate polymer, 3-(dimethylamino)propyl methacrylate polymer, ethylene-acrylic acid copolymer, ethylenemethacrylic acid copolymer, ethylene-vinyl alcohol copolymer, ethylene-methyl acrylate copolymer, ethylene-ethyl acrylate copolymer, ethylene-n-propyl acrylate copolymer, ethylene-n-butyl acrylate copolymer, ethylene-methyl methacrylate copolymer, ethylene-ethyl methacrylate copolymer, ethylene-n-propyl methacrylate copolymer, ethylene-n-butyl methacrylate copolymer, ethylene-vinyl formate copolymer, ethylene-vinyl acetate copolymer, ethylene-vinyl propionate copolymer, ethylenevinyl(n-butyrate) copolymer, ethylene-methyl vinyl ether copolymer, ethylene-ethyl vinyl ether copolymer, ethylene-n-propyl vinyl ether copolymer, ethylene-n-butyl vinyl ether copolymer, ethylene-maleic anhydride copolymer, ethylene-glycidyl acrylate copolymer, ethylene-glycidyl methacrylate copolymer, ethylene-3-(dimethylamino)propyl acrylate copolymer, and ethylene-3-(dimethylamino)propyl methacrylate copolymer.

Examples of the alcohol including a linear alkyl group having 14 to 30 carbon atoms include n-tetradecyl alcohol, n-pentadecyl alcohol, n-hexadecyl alcohol, n-heptadecyl alcohol, n-octadecyl alcohol, n-nonadecyl alcohol, n-eicosyl alcohol, n-heneicosyl alcohol, n-docosyl alcohol, n-tricosyl alcohol, n-tetracosyl alcohol, n-pentacosyl alcohol, n-hexacosyl alcohol, n-heptacosyl alcohol, n-octacosyl alcohol, n-nonacosyl alcohol, and n-triacontyl alcohol.

Examples of the alcohol including a branched alkyl group having 14 to 30 carbon atoms include isotetradecyl alcohol, isopentadecyl alcohol, isohexadecyl alcohol, isoheptadecyl alcohol, isooctadecyl alcohol, isononadecyl alcohol, isoeicosyl alcohol, isoheneicosyl alcohol, isodocosyl alcohol, isotricosyl alcohol, isotetracosyl alcohol, isopentacosyl alcohol, isohexacosyl alcohol, isoheptacosyl alcohol, isooctacosyl alcohol, isononacosyl alcohol, and isotriacontyl alcohol.

Examples of the amine including a linear alkyl group having 14 to 30 carbon atoms include n-tetradecylamine, n-pentadecylamine, n-hexadecylamine, n-heptadecylamine, n-octadecylamine, n-nonadecylamine, n-eicosylamine, n-heneicosylamine, n-docosylamine, n-tricosylamine, n-tetracosylamine, n-pentacosylamine, n-hexacosylamine, n-heptacosylamine, n-octacosylamine, n-nonacosylamine, and n-triacontylamine.

Examples of the amine including a branched alkyl group having 14 to 30 carbon atoms include isotetradecylamine, isopentadecylamine, isohexadecylamine, isoheptadecylamine, isooctadecylamine, isononadecylamine, isoeicosylamine, isoheneicosylamine, isodocosylamine, isotricosylamine, isotetracosylamine, isopentacosylamine, isohexacosylamine, isoheptacosylamine, isooctacosylamine, isononacosylamine, and isotriacontylamine.

Examples of the alkyl halide including a linear alkyl group having 14 to 30 carbon atoms include n-tetradecyl iodide, n-pentadecyl iodide, n-hexadecyl iodide, n-heptadecyl iodide, n-octadecyl iodide, n-nonadecyl iodide, n-eicosyl iodide, n-heneicosyl iodide, n-docosyl iodide, n-tricosyl iodide, n-tetracosyl iodide, n-pentacosyl iodide, n-hexacosyl iodide, n-heptacosyl iodide, n-octacosyl iodide, n-nonacosyl iodide, and n-triacontyl iodide.

Examples of the alkyl halide including a branched alkyl group having 14 to 30 carbon atoms include isotetradecyl iodide, isopentadecyl iodide, isohexadecyl iodide, isoheptadecyl iodide, isooctadecyl iodide, isononadecyl iodide, isoeicosyl iodide, isoheneicosyl iodide, isodocosyl iodide, isotricosyl iodide, isotetracosyl iodide, isopentacosyl iodide, isohexacosyl iodide, isoheptacosyl iodide, isooctacosyl iodide, isononacosyl iodide, and isotriacontyl iodide.

Examples of the carboxylic acid including a linear alkyl group having 14 to 30 carbon atoms include n-tetradecanoic acid, n-pentadecanoic acid, n-hexadecanoic acid, n-heptadecanoic acid, n-octadecanoic acid, n-nonadecanoic acid, n-eicosanoic acid, n-heneicosanoic acid, n-docosanoic acid, n-tricosanoic acid, n-tetracosanoic acid, n-pentacosanoic acid, n-hexacosanoic acid, n-heptacosanoic acid, n-octacosanoic acid, n-nonacosanoic acid, and n-triacontanoic acid.

Examples of the carboxylic acid including a branched alkyl group having 14 to 30 carbon atoms include isotetradecanoic acid, isopentadecanoic acid, isohexadecanoic acid, isoheptadecanoic acid, isooctadecanoic acid, isononadecanoic acid, isoeicosanoic acid, isoheneicosanoic acid, isodocosanoic acid, isotricosanoic acid, isotetracosanoic acid, isopentacosanoic acid, isohexacosanoic acid, isoheptacosanoic acid, isooctacosanoic acid, isononacosanoic acid, and isotriacontanoic acid.

Examples of the carboxamide including a linear alkyl group having 14 to 30 carbon atoms include n-tetradecanamide, n-pentadecanamide, n-hexadecanamide, n-heptadecanamide, n-octadecanamide, n-nonadecanamide, n-eicosanamide, n-heneicosanamide, n-docosanamide, n-tricosanamide, n-tetracosanamide, n-pentacosanamide, n-hexacosanamide, n-heptacosanamide, n-octacosanamide, n-nonacosanamide, and n-triacontanamide.

Examples of the carboxamide including a branched alkyl group having 14 to 30 carbon atoms include isotetradecanamide, isopentadecanamide, isohexadecanamide, isoheptadecanamide, isooctadecanamide, isononadecanamide, isoeicosanamide, isoheneicosanamide, isodocosanamide, isotricosanamide, isotetracosanamide, isopentacosanamide, isohexacosanamide, isoheptacosanamide, isooctacosanamide, isononacosanamide, and isotriacontanamide.

Examples of the carboxylic acid halide including a linear alkyl group having 14 to 30 carbon atoms include n-tetradecanoic acid chloride, n-pentadecanoic acid chloride, n-hexadecanoic acid chloride, n-heptadecanoic acid chloride, n-octadecanoic acid chloride, n-nonadecanoic acid chloride, n-eicosanoic acid chloride, n-heneicosanoic acid chloride, n-docosanoic acid chloride, n-tricosanoic acid chloride, n-tetracosanoic acid chloride, n-pentacosanoic acid chloride, n-hexacosanoic acid chloride, n-heptacosanoic acid chloride, n-octacosanoic acid chloride, n-nonacosanoic acid chloride, and n-triacontanoic acid chloride.

Examples of the carboxylic acid halide including a branched alkyl group having 14 to 30 carbon atoms include isotetradecanoic acid chloride, isopentadecanoic acid chloride, isohexadecanoic acid chloride, isoheptadecanoic acid chloride, isooctadecanoic acid chloride, isononadecanoic acid chloride, isoeicosanoic acid chloride, isoheneicosanoic acid chloride, isodocosanoic acid chloride, isotricosanoic acid chloride, isotetracosanoic acid chloride, isopentacosanoic acid chloride, isohexacosanoic acid chloride, isoheptacosanoic acid chloride, isooctacosanoic acid chloride, isononacosanoic acid chloride, and isotriacontanoic acid chloride.

Examples of the carbamic acid including a linear alkyl group having 14 to 30 carbon atoms include n-tetradecylcarbamic acid, n-pentadecylcarbamic acid, n-hexadecylcarbamic acid, n-heptadecylcarbamic acid, n-octadecylcarbamic acid, n-nonadecylcarbamic acid, n-eicosylcarbamic acid, n-heneicosylcarbamic acid, n-docosylcarbamic acid, n-tricosylcarbamic acid, n-tetracosylcarbamic acid, n-pentacosylcarbamic acid, n-hexacosylcarbamic acid, n-heptacosylcarbamic acid, n-octacosylcarbamic acid, n-nonacosylcarbamic acid, and n-triacontylcarbamic acid.

Examples of the carbamic acid including a branched alkyl group having 14 to 30 carbon atoms include isotetradecylcarbamic acid, isopentadecylcarbamic acid, isohexadecylcarbamic acid, isoheptadecylcarbamic acid, isooctadecylcarbamic acid, isononadecylcarbamic acid, isoeicosylcarbamic acid, isoheneicosylcarbamic acid, isodocosylcarbamic acid, isotricosylcarbamic acid, isotetracosylcarbamic acid, isopentacosylcarbamic acid, isohexacosylcarbamic acid, isoheptacosylcarbamic acid, isooctacosylcarbamic acid, isononacosylcarbamic acid, and isotriacontylcarbamic acid.

Examples of the alkylurea including a linear alkyl group having 14 to 30 carbon atoms include n-tetradecylurea, n-pentadecylurea, n-hexadecylurea, n-heptadecylurea, n-octadecylurea, n-nonadecylurea, n-eicosylurea, n-heneicosylurea, n-docosylurea, n-tricosylurea, n-tetracosylurea, n-pentacosylurea, n-hexacosylurea, n-heptacosylurea, n-octacosylurea, n-nonacosylurea, and n-triacontylurea.

Examples of the alkylurea including a branched alkyl group having 14 to 30 carbon atoms include isotetradecylurea, isopentadecylurea, isohexadecylurea, isoheptadecylurea, isooctadecylurea, isononadecylurea, isoeicosylurea, isoheneicosylurea, isodocosylurea, isotricosylurea, isotetracosylurea, isopentacosylurea, isohexacosylurea, isoheptacosylurea, isooctacosylurea, isononacosylurea, and isotriacontylurea.

Examples of the isocyanate including a linear alkyl group having 14 to 30 carbon atoms include n-tetradecyl isocyanate, n-pentadecyl isocyanate, n-hexadecyl isocyanate, n-heptadecyl isocyanate, n-octadecyl isocyanate, n-nonadecyl isocyanate, n-eicosyl isocyanate, n-heneicosyl isocyanate, n-docosyl isocyanate, n-tricosyl isocyanate, n-tetracosyl isocyanate, n-pentacosyl isocyanate, n-hexacosyl isocyanate, n-heptacosyl isocyanate, n-octacosyl isocyanate, n-nonacosyl isocyanate, and n-triacontyl isocyanate.

Examples of the isocyanate including a branched alkyl group having 14 to 30 carbon atoms include isotetradecyl isocyanate, isopentadecyl isocyanate, isohexadecyl isocyanate, isoheptadecyl isocyanate, isooctadecyl isocyanate, isononadecyl isocyanate, isoeicosyl isocyanate, isoheneicosyl isocyanate, isodocosyl isocyanate, isotricosyl isocyanate, isotetracosyl isocyanate, isopentacosyl isocyanate, isohexacosyl isocyanate, isoheptacosyl isocyanate, isooctacosyl isocyanate, isononacosyl isocyanate, and isotriacontyl isocyanate.

If the precursor polymer P includes a structural unit A derived from ethylene, the product of reactivity ratios $r1 \times r2$, where r1 represents the reactivity ratio of ethylene to be used as a raw material in the production of the precursor polymer P and r2 represents the reactivity ratio of the monomer to form the structural unit C, is preferably 0.5 to 5.0, and more preferably 0.5 to 3.0 because this allows good shape retention to be imparted to the molded article including the polymer 1 derived from the precursor polymer P.

The reactivity ratio of ethylene, r1, is a value defined as the formula $r1 = k11/k12$, where k11 represents the reaction rate of ethylene to bond to a polymer including the structural unit A at an end and k12 represents the reaction rate of the monomer to form the structural unit C to bond to the polymer including the structural unit A at an end in the copolymerization of ethylene and the monomer to form the structural unit C. The reactivity ratio r1 is an index indicative

of which of ethylene and a monomer to form the structural unit C a polymer including the structural unit A at an end is more reactive with in copolymerizing ethylene and a monomer to form the structural unit C. A higher r1 indicates that the polymer including the structural unit A at an end is more reactive with ethylene, and hence a chain of the structural unit A is likely to be generated.

The reactivity ratio of a monomer to form the structural unit C, r2, is a value defined as r2 = k22/k21, where k21 represents the reaction rate of ethylene to bond to a polymer including the structural unit C at an end and k22 represents the reaction rate of the monomer to form the structural unit C to bond to the polymer including the structural unit C at an end in the copolymerization of ethylene and the monomer to form the structural unit C. The reactivity ratio r2 is an index indicative of which of ethylene and a monomer to form the structural unit C a polymer including the structural unit C at an end is more reactive with in copolymerizing ethylene and a monomer to form the structural unit C. A higher r2 indicates that the polymer including the structural unit C at an end is more reactive with the monomer to form the structural unit C, and hence a chain of the structural unit C is likely to be generated.

The product of the reactivity ratios, r1×r2, is calculated by using a method described in the literature "Kakugo, M.; Naito, Y.; Mizunuma, K.; Miyatake, T. Macromolecules, 1982, 15, 1150". In the present invention, the product of the reactivity ratios, r1×r2, is obtained by substituting the fractions of each of the dyads of the structural unit A and the structural unit C, namely, AA, AC, and CC, calculated from a $^{13}C$ nuclear magnetic resonance spectrum for the precursor polymer P into the following formula.

$$r1 \times r2 = AA[CC/(AC/2)^2]$$

The product of the reactivity ratios, r1×r2, is an index indicative of the monomer chain distribution of a copolymer. The closer the product of the reactivity ratios r1×r2 is to 1, the higher the randomness of the monomer chain distribution of the copolymer. The closer the product of the reactivity ratios r1×r2 is to 0, the higher the degree of alternating copolymerization character of the monomer chain distribution of the copolymer. The larger the product of the reactivity ratios r1×r2 is beyond 1, the higher the degree of block copolymerization character of the monomer chain distribution of the copolymer.

The melt flow rate (MFR) of the precursor polymer P as measured in accordance with JIS K7210 at a temperature of 190°C with a load of 21 N is preferably 0.1 to 500 g/10 min, more preferably 1 to 100 g/10, and further preferably 5 to 50 g/10 min.

Examples of methods for producing the precursor polymer P include a coordination polymerization method, a cationic polymerization method, an anionic polymerization method, and a radical polymerization method, and a radical polymerization method is preferred, and a radical polymerization method under high pressure is more preferred.

The temperature for reacting the precursor polymer P and the compound α is usually 40 to 250°C. This reaction may be performed in the presence of a solvent. Examples of the solvent include hexane, heptane, octane, nonane, decane, toluene, and xylene. If any byproduct is generated in this reaction, the reaction may be performed while the byproduct is distilled off under reduced pressure to promote the reaction, or performed while the byproduct is azeotroped with the solvent, the volatilized byproduct and the solvent are cooled, the distillate containing the byproduct and the solvent is separated into a byproduct layer and a solvent layer, and only the recovered solvent layer is returned as a reflux solution into the reaction system.

The reaction between the precursor polymer P and the compound α may be performed while melt-kneading the precursor polymer P with the compound α. If byproducts are generated in reacting the precursor polymer P and the compound α while melt-kneading, the reaction may be performed while the byproducts are distilled off under reduced pressure to promote the reaction. Examples of the melt-kneading apparatus for the melt-kneading include a single-screw extruder, a twin-screw extruder, and a Banbury mixer. The temperature of the melt-kneading apparatus is preferably 100 to 250°C.

When reacting the precursor polymer P and the compound α, a catalyst may be added to promote the reaction. Examples of the catalyst include alkali metal salts and group 4 metal complexes. Examples of alkali metal salts include alkali metal hydroxides such as lithium hydroxide, sodium hydroxide, and potassium hydoroxide; and alkali metal alkoxides such as lithium methoxide and sodium methoxide. Examples of group 4 metal complexes include tetra(isopropyl) orthotitanate, tetra(n-butyl) orthotitanate, and tetraoctadecyl orthotitanate. The loading of the catalyst is, with respect to 100 parts by weight of the total amount of the precursor polymer P and the compound α to be used for the reaction, preferably 0.01 to 50 parts by weight, and more preferably 0.01 to 5 parts by weight.

The polymer 1 preferably includes the structural unit A derived from ethylene so as to impart good shape retention to the molded article of the present invention and to impart good formability to the composition including the polymer 1 at temperatures equal to or higher than the melting peak temperature of the polymer 1.

The polymer 1 may form a mixture with unreacted compound α, or with a catalyst added to promote the reaction. The content of unreacted compound α in the mixture is preferably less than 3 parts by weight with respect to 100 parts

by weight of the polymer.

The polymer 1 may be a crosslinked polymer, or an uncrosslinked polymer.

In one mode, the polymer 1 is an uncrosslinked polymer (hereinafter, sometimes referred to as "polymer α").

In one mode, the polymer α has a gel fraction of less than 20 wt.%.

The polymer α is a polymer in which the total number of the structural units A, structural units B, and structural units C with respect to the total number of 100% of all the structural units included in the polymer is preferably 90% or more, more preferably 95% or more, and further preferably 100%.

<Crosslinking>

In one mode, the polymer 1 and/or the polymer 2 described later is/are crosslinked. Specifically, at least a part of molecules of the polymer 1 and polymer 2 are linked together via intermolecular covalent bonding. It is noted that "the polymer 1 is crosslinked" refers to any one of or both of a case in which the molecules of the polymer 1 are linked to each other by intermolecular covalent bonds, and a case in which the molecules of the polymer 1 and the molecules of a polymer different from the polymer 1 (this polymer may be the polymer 2 or a polymer other than the polymers 1 and 2) are linked to each other by intermolecular covalent bonds.

Examples of methods for crosslinking the polymer include a method of crosslinking through irradiation with ionizing radiation and a method of crosslinking with an organic peroxide.

In crosslinking through irradiating the polymer with ionizing radiation, the polymer α molded into a desired shape in advance is typically irradiated with ionizing radiation. Any known method is used for molding, and extrusion, injection molding, and press molding are preferred. The molded article to be irradiated with ionizing radiation may be a molded article including the polymer 1 and polymer 2 as the only polymer components, or a molded article of a composition including the polymer 1 and polymer 2 as well as a polymer different from the polymer 1 and polymer 2. In the latter case, examples of the polymer different from the polymer 1 include a base resin described later. In the case that the molded article contains a non-crosslinked polymer according to the present invention and the base resin, it is preferred that the content of the non-crosslinked polymer according to the present invention be 1 to 99 wt.% with respect to 100 wt.% of the total amount of the non-crosslinked polymer according to the present invention and the base resin.

Examples of ionizing radiation include α-rays, β-rays, γ-rays, electron beams, neutron beams, and X-rays, and γ-rays from cobalt-60 and electron beams are preferred. In the case that the molded article containing the polymer is in the form of a sheet, at least one surface of the molded article in the form of a sheet can be suitably irradiated with ionizing radiation.

Irradiation with ionizing radiation is performed by using an ionizing radiation irradiator, and the dose is typically 5 to 300 kGy, and preferably 10 to 150 kGy. The above-mentioned polymer 1 can attain a higher degree of crosslinking with a dose lower than those in typical cases.

In obtaining the polymer 1 crosslinked through irradiation with ionizing radiation, a higher degree of crosslinking is achieved for the polymer 1 if the molded article to be irradiated with ionizing radiation includes a crosslinking aid. The crosslinking aid is for the purpose of increasing the degree of crosslinking of the polymer 1 to improve the mechanical properties, and a compound including a plurality of double bonds in the molecule is preferably used. Examples of the crosslinking aid include N,N'-m-phenylene bismaleimide, toluylene bismaleimide, triallyl isocyanurate, triallyl cyanurate, p-quinone dioxime, nitrobenzene, diphenylguanidine, divinylbenzene, ethylene glycol dimethacrylate, polyethylene glycol dimethacrylate, trimethylolpropane trimethacrylate, trimethylolpropane triacrylate, and allyl methacrylate. A plurality of these crosslinking aids may be used in combination.

The loading of the crosslinking aid is, with respect to 100 parts by weight of the total weight of the polymers included in the molded article to be irradiated with ionizing radiation, preferably 0.01 to 4.0 parts by weight, and more preferably 0.05 to 2.0 parts by weight.

Examples of the method of crosslinking with an organic peroxide include a method of crosslinking of the polymer α by subjecting a composition including the polymer α, the polymer 2, and an organic peroxide to a known molding method involving heating. Examples of the known molding method involving heating include extrusion, injection molding, and press molding.

In the crosslinking with an organic peroxide, an organic peroxide having a decomposition temperature equal to or higher than the fluidizing temperature of the resin component included in the heat storage composition E is suitably used, and preferred examples of the organic peroxide include dicumyl peroxide, 2,5-dimethyl-2,5-di-tert-butylperoxyhexane, 2,5-dimethyl-2,5-di-tert-butylperoxyhexyne, α,α-di-tert-butylperoxyisopropylbenzene, and tert-butylperoxy-2-ethylhexyl carbonate.

The heat storage composition E and the composite of the present invention, which will be described later, optionally contains known additives. Examples of such additives include an inorganic filler, an organic filler, a flame retardant, an antioxidant, a weatherproofing agent, a UV absorber, a thermal stabilizer, a light stabilizer, a lubricant, an antiblocking agent, an antistatic agent, an antifogging agent, an anti-dripping agent, a crystal-nucleating agent, a pigment,

a dye, an adsorbent, a metal chloride, hydrotalcite, an aluminate, a silicone compound, an antibacterial agent, a deodorant, a light-absorbing heat-generating material, a moisture-absorbing heat-generating materials, and a far-infrared heat-generating material.

Compound L

The compound L satisfies the requirements for the substance A and has a molecular weight of 2000 or less.

The compound L has a melting peak temperature (maximum crystal transition temperature) within a range of 10 to 60°C. The melting peak temperature is more preferably in the range of 10 to 50°C, and further preferably 10 to 40°C.

The melting enthalpy ΔH of the compound L at 10 to 60°C is 30 J/g or more, preferably 100 J/g or more, and more preferably 150 J/g or more.

The molecular weight of the compound L is 2000 or less. The compound L may be a compound including one or a plurality of structural units (repeating units) in the molecule as long as the molecular weight is 2000 or less. The molecular weight of the compound L is preferably 150 to 500, more preferably 150 to 400, and further preferably 150 to 300. The compound L may be a "polymer", e.g., a dimer.

Further, in one mode, the heat storage composition E may include both the polymer 1 and the compound L. In that case, the temperature difference between the melting peak temperature of the compound L and the melting peak temperature of the polymer 1 included in the composition is preferably 15°C or less, more preferably 10°C or less, and further preferably 5°C or less.

The offset temperature of the melting curve (the intersection of the baseline with the tangent line at the inflection point of the melting curve on the melting end side) is preferably 10 to 110°C, more preferably 20 to 50°C, and further preferably 20 to 40°C. The larger the difference between the offset temperature of the melting curve and the melting peak temperature, the greater the heat storage effect in a wider temperature range.

Examples of the compound L include an organic low-molecular-weight substance. Examples of the organic low-molecular-weight substance include paraffin, a long-chain fatty acid, a long-chain alcohol, a long-chain fatty acid ester, and a sugar alcohol. These may be encapsulated in an organic microcapsule, fixed with a gelling agent, or encapsulated in a container such as plastic.

The compound L preferably has an alkyl group having 14 to 30 carbon atoms. Examples of the alkyl group having 14 to 30 carbon atoms include a linear alkyl group having 14 to 30 carbon atoms and a branched alkyl group having 14 to 30 carbon atoms. The alkyl group having 14 to 30 carbon atoms is preferably a linear alkyl group having 14 to 30 carbon atoms, more preferably a linear alkyl group having 14 to 24 carbon atoms, and further preferably a linear alkyl group having 16 to 22 carbon atoms.

Examples of the above-mentioned linear alkyl group having 14 to 30 carbon atoms include a n-tetradecyl group, a n-pentadecyl group, a n-hexadecyl group, a n-heptadecyl group, a n-octadecyl group, a n-nonadecyl group, a n-eicosyl group, a n-heneicosyl group, a n-docosyl group, a n-tricosyl group, a n-tetracosyl group, a n-pentacosyl group, a n-hexacosyl group, a n-heptacosyl group, a n-octacosyl group, a n-nonacosyl group, and n-triacontyl group.

Examples of the above-mentioned branched alkyl group having 14 to 30 carbon atoms include an isotetradecyl group, an isopentadecyl group, an isohexadecyl group, an isoheptadecyl group, an isooctadecyl group, an isononadecyl group, an isoeicosyl group, an isoheneicosyl group, an isodocosyl group, an isotricosyl group, an isotetracosyl group, an isopentacosyl group, an isohexacosyl group, an isoheptacosyl group, an isooctacosyl group, an isononacosyl group, and isotriacontyl group.

The compound L may be at least one heat storage substance selected from the group consisting of a hydrocarbon, a fatty acid, a fatty acid salt, a fatty acid ester, an aliphatic ether, an aliphatic ketone, an aliphatic alcohol, and an aliphatic amide. Further, the compound L may be a mixture of two or more compounds (which may be the same or different) selected from the above compounds.

The above-mentioned hydrocarbon is preferably a linear saturated hydrocarbon, a linear unsaturated hydrocarbon, a branched saturated hydrocarbon, or a branched unsaturated hydrocarbon, and particularly preferably is a linear saturated hydrocarbon. Examples of the linear saturated hydrocarbon include n-tetradecane, n-pentadecane, n-hexadecane, n-heptadecane, n-octadecane, n-nonadecane, n-eicosane, n-henicosane, n-docosane, n-tricosane, n-tetracosane, n-pentacosane, n-hexacosane, n-heptacosane, n-octacosane, n-nonacosane, n-triacontane, and the like. Various paraffin compounds are also included as the hydrocarbon.

The above-mentioned fatty acid is preferably a linear saturated fatty acid, a linear unsaturated fatty acid, a branched saturated fatty acid, or a branched unsaturated fatty acid, and particularly preferably is a linear saturated fatty acid. Examples of the linear saturated fatty acid include n-tetradecanoic acid, n-hexadecanoic acid, n-octadecanoic acid, n-eicosanoic acid, n-henicosanoic acid, n-docosanoic acid, n-tricosanoic acid, n-tetracosanoic acid, n -pentacosanoic acid, n-hexacosanoic acid, n-heptacosanoic acid, n-octacosanoic acid, n-nonacosanoic acid, n-triacontanoic acid, and the like.

Examples of the above-mentioned fatty acid salt include a sodium salt, a potassium salt, and an ammonium

salt of the above-mentioned fatty acids.

The fatty acid ester is preferably a linear saturated fatty acid ester, a linear unsaturated fatty acid ester, a branched saturated fatty acid ester, or a branched unsaturated fatty acid ester, and particularly preferably is a linear saturated fatty acid ester. Examples of the linear saturated fatty acid esters include the following:

n-tetradecyl methanoate, hexadecyl n-methanoate, octadecyl n-methanoate, eicosyl n-methanoate, docosyl n-methanoate, tetracosyl n-methanoate, hexacosyl n-methanoate, octacosyl n-methanoate, and n-triacontyl methanoate;
n-tetradecyl ethanoate, hexadecyl n-ethanoate, octadecyl n-ethanoate, eicosyl n-ethanoate, docosyl n-ethanoate, tetracosyl n-ethanoate, hexacosyl n-ethanoate, octacosyl n-ethanoate, and n-triacontyl ethanoate;
n-tetradecyl propanoate, hexadecyl n-propanoate, octadecyl n-propanoate, eicosyl n-propanoate, docosyl n-propanoate, tetracosyl n-propanoate, hexacosyl n-propanoate, octacosyl n-propanoate, and n-triacontyl propanoate;
n-tetradecyl butanoate, hexadecyl n-butanoate, octadecyl n-butanoate, eicosyl n-butanoate, docosyl n-butanoate, tetracosyl n-butanoate, hexacosyl n-butanoate, octacosyl n-butanoate, and n-triacontyl butanoate;
n-tetradecyl pentanoate, hexadecyl n-pentanoate, octadecyl n-pentanoate, eicosyl n-pentanoate, docosyl n-pentanoate, tetracosyl n-pentanoate, hexacosyl n-pentanoate, octacosyl n-pentanoate, and n-triacontyl pentanoate;
n-tetradecyl hexanoate, hexadecyl n-hexanoate, octadecyl n-hexanoate, eicosyl n-hexanoate, docosyl n-hexanoate, tetracosyl n-hexanoate, hexacosyl n-hexanoate, octacosyl n-hexanoate, and n-triacontyl hexanoate;
n-tetradecyl heptanoate, hexadecyl n-heptanoate, octadecyl n-heptanoate, eicosyl n-heptanoate, docosyl n-heptanoate, tetracosyl n-heptanoate, hexacosyl n-heptanoate, octacosyl n-heptanoate, and n-triacontyl heptanoate;
n-tetradecyl octanoate, hexadecyl n-octanoate, octadecyl n-octanoate, eicosyl n-octanoate, docosyl n-octanoate, tetracosyl n-octanoate, hexacosyl n-octanoate, octacosyl n-octanoate, and n-triacontyl octanoate;
n-tetradecyl nonanoate, hexadecyl n-nonanoate, octadecyl n-nonanoate, eicosyl n-nonanoate, docosyl n-nonanoate, tetracosyl n-nonanoate, hexacosyl n-nonanoate, octacosyl n-nonanoate, and n-triacontyl nonanoate;
n-tetradecyl decanoate, hexadecyl n-decanoate, octadecyl n-decanoate, eicosyl n-decanoate, docosyl n-decanoate, tetracosyl n-decanoate, hexacosyl n-decanoate, octacosyl n-decanoate, and n-triacontyl decanoate;
n-tetradecyl dodecanoate, hexadecyl n-dodecanoate, octadecyl n-dodecanoate, eicosyl n-dodecanoate, docosyl n-dodecanoate, tetracosyl n-dodecanoate, hexacosyl n-dodecanoate, octacosyl n-dodecanoate, and n-triacontyl dodecanoate;
methyl n-tetradecanoate, ethyl n-tetradecanoate, propyl n-tetradecanoate, butyl n-tetradecanoate, pentyl n-tetradecanoate, hexyl n-tetradecanoate, heptyl n-tetradecanoate, octyl n-tetradecanoate, nonyl n-tetradecanoate, decyl n-tetradecanoate, dodecyl n-tetradecanoate, tetradecyl n-tetradecanoate, hexadecyl n-tetradecanoate, octadecyl n-tetradecanoate, eicosyl n-tetradecanoate, docosyl n-tetradecanoate, tetracosyl n-tetradecanoate, hexacosyl n-tetradecanoate, octacosyl n-tetradecanoate, and triacontyl n-tetradecanoate;
methyl n-hexadecanoate, ethyl n-hexadecanoate, propyl n-hexadecanoate, butyl n-hexadecanoate, pentyl n-hexadecanoate, hexyl n-hexadecanoate, heptyl n-hexadecanoate, octyl n-hexadecanoate, nonyl n-hexadecanoate, decyl n-hexadecanoate, dodecyl n-hexadecanoate, tetradecyl n-hexadecanoate, hexadecyl n-hexadecanoate, octadecyl n-hexadecanoate, eicosyl n-hexadecanoate, docosyl n-hexadecanoate, tetracosyl n-hexadecanoate, hexacosyl n-hexadecanoate, octacosyl n-hexadecanoate, and triacontyl n-hexadecanoate;
methyl n-octadecanoate, ethyl n-octadecanoate, propyl n-octadecanoate, butyl n-octadecanoate, pentyl n-octadecanoate, hexyl n-octadecanoate, heptyl n-octadecanoate, octyl n-octadecanoate, nonyl n-octadecanoate, decyl n-octadecanoate, dodecyl n-octadecanoate, tetradecyl n-octadecanoate, hexadecyl n-octadecanoate, octadecyl n-octadecanoate, eicosyl n-octadecanoate, docosyl n-octadecanoate, tetracosyl n-octadecanoate, hexacosyl n-octadecanoate, octacosyl n-octadecanoate, and triacontyl n-octadecanoate;
methyl n-eicosanoate, ethyl n-eicosanoate, propyl n-eicosanoate, butyl n-eicosanoate, pentyl n-eicosanoate, hexyl n-eicosanoate, heptyl n-eicosanoate, octyl n-eicosanoate, nonyl n-eicosanoate, decyl n-eicosanoate, dodecyl n-eicosanoate, tetradecyl n-eicosanoate, hexadecyl n-eicosanoate, octadecyl n-eicosanoate, eicosyl n-eicosanoate, docosyl n-eicosanoate, tetracosyl n-eicosanoate, hexacosyl n-eicosanoate, octacosyl n-eicosanoate, and triacontyl n-eicosanoate;
methyl n-docosanoate, ethyl n-docosanoate, propyl n-docosanoate, butyl n-docosanoate, pentyl n-docosanoate, hexyl n-docosanoate, heptyl n-docosanoate, octyl n-docosanoate, nonyl n-docosanoate, decyl n-docosanoate, dodecyl n-docosanoate, tetradecyl n-docosanoate, hexadecyl n-docosanoate, octadecyl n-docosanoate, eicosyl n-docosanoate, docosyl n-docosanoate, tetracosyl n-docosanoate, hexacosyl n-docosanoate, octacosyl n-docosanoate, and triacontyl n-docosanoate;
methyl n-tetracosanoate, ethyl n-tetracosanoate, propyl n-tetracosanoate, butyl n-tetracosanoate, pentyl n-tetracosanoate, hexyl n-tetracosanoate, heptyl n-tetracosanoate, octyl n-tetracosanoate, nonyl n-tetracosanoate, decyl n-tetracosanoate, dodecyl n-tetracosanoate, tetradecyl n-tetracosanoate, hexadecyl n-tetracosanoate, octadecyl n-tetracosanoate, eicosyl n-tetracosanoate, docosyl n-tetracosanoate, tetracosyl n-tetracosanoate, hexacosyl n-tetracosanoate, octacosyl n-tetracosanoate, and triacontyl n-tetracosanoate;

methyl n-hexacosanoate, ethyl n-hexacosanoate, propyl n-hexacosanoate, butyl n-hexacosanoate, pentyl n-hexacosanoate, hexyl n-hexacosanoate, heptyl n-hexacosanoate, octyl n-hexacosanoate, nonyl n-hexacosanoate, decyl n-hexacosanoate, dodecyl n-hexacosanoate, tetradecyl n-hexacosanoate, hexadecyl n-hexacosanoate, octadecyl n-hexacosanoate, eicosyl n-hexacosanoate, docosyl n-hexacosanoate, tetracosyl n-hexacosanoate, hexacosyl n-hexacosanoate, octacosyl n-hexacosanoate, and triacontyl n-hexacosanoate;
methyl n-octacosanoate, ethyl n-octacosanoate, propyl n-octacosanoate, butyl n-octacosanoate, pentyl n-octacosanoate, hexyl n-octacosanoate, heptyl n-octacosanoate, octyl n-octacosanoate, nonyl n-octacosanoate, decyl n-octacosanoate, dodecyl n-octacosanoate, tetradecyl n-octacosanoate, hexadecyl n-octacosanoate, octadecyl n-octacosanoate, eicosyl n-octacosanoate, docosyl n-octacosanoate, tetracosyl n-octacosanoate, hexacosyl n-octacosanoate, octacosyl n-octacosanoate, and triacontyl n-octacosanoate; and
methyl n-triacontanoate, ethyl n-triacontanoate, propyl n-triacontanoate, butyl n-triacontanoate, pentyl n-triacontanoate, hexyl n-triacontanoate, heptyl n-triacontanoate, octyl n-triacontanoate, nonyl n-triacontanoate, decyl n-triacontanoate, dodecyl n-triacontanoate, tetradecyl n-triacontanoate, hexadecyl n-triacontanoate, octadecyl n-triacontanoate, eicosyl n-triacontanoate, docosyl n-triacontanoate, tetracosyl n-triacontanoate, hexacosyl n-triacontanoate, octacosyl n-triacontanoate, and triacontyl n-triacontanoate.

Further, the fatty acid ester may be a compound in which a plurality of fatty acid esters are bonded, such as triacylglycerol.

The above-mentioned aliphatic ether is preferably a linear saturated aliphatic ether, a linear unsaturated aliphatic ether, a branched saturated aliphatic ether, or a branched unsaturated aliphatic ether, and particularly preferably is a linear saturated aliphatic ether. Examples of the linear saturated aliphatic ethers include the following:

n-tetradecyl methyl ether, n-tetradecyl ethyl ether, n-tetradecyl propyl ether, n-tetradecyl butyl ether, n-tetradecyl pentyl ether, n-tetradecyl hexyl ether, n-tetradecyl heptyl ether, n-tetradecyl octyl ether, n-tetradecyl nonyl ether, n-tetradecyl decyl ether, n-tetradecyl dodecyl ether, n-ditetradecyl ether, n-tetradecyl hexadecyl ether, n-tetradecyl octadecyl ether, n-tetradecyl eicosyl ether, n-tetradecyl docosyl ether, n-tetradecyl tetracosyl ether, n-tetradecyl hexacosyl ether, n-tetradecyl octacosyl ether, and n-tetradecyl triacontyl ether;
n-hexadecyl methyl ether, n-hexadecyl ethyl ether, n-hexadecyl propyl ether, n-hexadecyl butyl ether, n-hexadecyl pentyl ether, n-hexadecyl hexyl ether, n-hexadecyl heptyl ether, n-hexadecyl octyl ether, n-hexadecyl nonyl ether, n-hexadecyl decyl ether, n-hexadecyl dodecyl ether, n-dihexadecyl ether, n-hexadecyl octadecyl ether, n-hexadecyl eicosyl ether, n-hexadecyl docosyl ether, n-hexadecyl tetracosyl ether, n-hexadecyl hexacosyl ether, n-hexadecyl octacosyl ether, and n-hexadecyl triacontyl ether;
n-octadecyl methyl ether, n-octadecyl ethyl ether, n-octadecyl propyl ether, n-octadecyl butyl ether, n-octadecyl pentyl ether, n-octadecyl hexyl ether, n-octadecyl heptyl ether, n-octadecyl octyl ether, n-octadecyl nonyl ether, n-octadecyl decyl ether, n-octadecyl dodecyl ether, n-dioctadecyl ether, n-octadecyl eicosyl ether, n-octadecyl docosyl ether, n-octadecyl tetracosyl ether, n-octadecyl hexacosyl ether, n-octadecyl octacosyl ether, and n-octadecyl triacontyl ether;
n-eicosyl methyl ether, n-eicosyl ethyl ether, n-eicosyl propyl ether, n-eicosyl butyl ether, n-eicosyl pentyl ether, n-eicosyl hexyl ether, n-eicosyl heptyl ether, n-eicosyl octyl ether, n-eicosyl nonyl ether, n-eicosyl decyl ether, n-eicosyl dodecyl ether, n-dieicosyl ether, n-eicosyl docosyl ether, n-eicosyl tetracosyl ether, n-eicosyl hexacosyl ether, n-eicosyl octacosyl ether, and n-eicosyl triacontyl ether;
n-docosyl methyl ether, n-docosyl ethyl ether, n-docosyl propyl ether, n-docosyl butyl ether, n-docosyl pentyl ether, n-docosyl hexyl ether, n-docosyl heptyl ether, n-docosyl octyl ether, n-docosyl nonyl ether, n-docosyl decyl ether, n-docosyl dodecyl ether, n-didocosyl ether, n-docosyl tetracosyl ether, n-docosyl hexacosyl ether, n-docosyl octacosyl ether, and n-docosyl triacontyl ether;
n-tetracosyl methyl ether, n-tetracosyl ethyl ether, n-tetracosyl propyl ether, n-tetracosyl butyl ether, n-tetracosyl pentyl ether, n-tetracosyl hexyl ether, n-tetracosyl heptyl ether, n-tetracosyl octyl ether, n-tetracosyl nonyl ether, n-tetracosyl decyl ether, n-tetracosyl dodecyl ether, n-ditetracosyl ether, n-tetracosyl hexacosyl ether, n-tetracosyl octacosyl ether, and n-tetracosyl triacontyl ether;
n-hexacosyl methyl ether, n-hexacosyl ethyl ether, n-hexacosyl propyl ether, n-hexacosyl butyl ether, n-hexacosyl pentyl ether, n-hexacosyl hexyl ether, n-hexacosyl heptyl ether, n-hexacosyl octyl ether, n-hexacosyl nonyl ether, n-hexacosyl decyl ether, n-hexacosyl dodecyl ether, n-dihexacosyl ether, n-hexacosyl octacosyl ether, and n-hexacosyl triacontyl ether;
n-octacosyl methyl ether, n-octacosyl ethyl ether, n-octacosyl propyl ether, n-octacosyl butyl ether, n-octacosyl pentyl ether, n-octacosyl hexyl ether, n-octacosyl heptyl ether, n-octacosyl octyl ether, n-octacosyl nonyl ether, n-octacosyl decyl ether, n-octacosyl dodecyl ether, n-dioctacosyl ether, and n-octacosyl triacontyl ether; and
n-triacontyl methyl ether, n-triacontyl ethyl ether, n-triacontyl propyl ether, n-triacontyl butyl ether, n-triacontyl pentyl ether, n-triacontyl hexyl ether, n-triacontyl heptyl ether, n-triacontyl octyl ether, n-triacontyl nonyl ether, n-triacontyl

decyl ether, n-triacontyl dodecyl ether, and n-ditriacontyl ether.

The above-mentioned aliphatic ketone is preferably a linear saturated aliphatic ketone, a linear unsaturated aliphatic ketone, a branched saturated aliphatic ketone, or a branched unsaturated aliphatic ketone, and particularly preferably is a linear saturated aliphatic ketone. Examples of the linear saturated aliphatic ketones include the following:

n-tetradecyl methyl ketone, n-tetradecyl ethyl ketone, n-tetradecyl propyl ketone, n-tetradecyl butyl ketone, n-tetradecyl pentyl ketone, n-tetradecyl hexyl ketone, n-tetradecyl heptyl ketone, n-tetradecyl octyl ketone, n-tetradecyl nonyl ketone, n-tetradecyl decyl ketone, n-tetradecyl dodecyl ketone, n-ditetradecyl ketone, n-tetradecyl hexadecyl ketone, n-tetradecyl octadecyl ketone, n-tetradecyl eicosyl ketone, n-tetradecyl docosyl ketone, n-tetradecyl tetracosyl ketone, n-tetradecyl hexacosyl ketone, n-tetradecyl octacosyl ketone, and n-tetradecyl triacontyl ketone;
n-hexadecyl methyl ketone, n-hexadecyl ethyl ketone, n-hexadecyl propyl ketone, n-hexadecyl butyl ketone, n-hexadecyl pentyl ketone, n-hexadecyl hexyl ketone, n-hexadecyl heptyl ketone, n-hexadecyl octyl ketone, n-hexadecyl nonyl ketone, n-hexadecyl decyl ketone, n-hexadecyl dodecyl ketone, n-dihexadecyl ketone, n-hexadecyl octadecyl ketone, n-hexadecyl eicosyl ketone, n-hexadecyl docosyl ketone, n-hexadecyl tetracosyl ketone, n-hexadecyl hexacosyl ketone, n-hexadecyl octacosyl ketone, and n-hexadecyl triacontyl ketone;
n-octadecyl methyl ketone, n-octadecyl ethyl ketone, n-octadecyl propyl ketone, n-octadecyl butyl ketone, n-octadecyl pentyl ketone, n-octadecyl hexyl ketone, n-octadecyl heptyl ketone, n-octadecyl octyl ketone, n-octadecyl nonyl ketone, n-octadecyl decyl ketone, n-octadecyl dodecyl ketone, n-dioctadecyl ketone, n-octadecyl eicosyl ketone, n-octadecyl docosyl ketone, n-octadecyl tetracosyl ketone, n-octadecyl hexacosyl ketone, n-octadecyl octacosyl ketone, and n-octadecyl triacontyl ketone;
n-eicosyl methyl ketone, n-eicosyl ethyl ketone, n-eicosyl propyl ketone, n-eicosyl butyl ketone, n-eicosyl pentyl ketone, n-eicosyl hexyl ketone, n-eicosyl heptyl ketone, n-eicosyl octyl ketone, n-eicosyl nonyl ketone, n-eicosyl decyl ketone, n-eicosyl dodecyl ketone, n-dieicosyl ketone, n-eicosyl docosyl ketone, n-eicosyl tetracosyl ketone, n-eicosyl hexacosyl ketone, n-eicosyl octacosyl ketone, and n-eicosyl triacontyl ketone;
n-docosyl methyl ketone, n-docosyl ethyl ketone, n-docosyl propyl ketone, n-docosyl butyl ketone, n-docosyl pentyl ketone, n-docosyl hexyl ketone, n-docosyl heptyl ketone, n-docosyl octyl ketone, n-docosyl nonyl ketone, n-docosyl decyl ketone, n-docosyl dodecyl ketone, n-didocosyl ketone, n-docosyl tetracosyl ketone, n-docosyl hexacosyl ketone, n-docosyl octacosyl ketone, and n-docosyl triacontyl ketone;
n-tetracosyl methyl ketone, n-tetracosyl ethyl ketone, n-tetracosyl propyl ketone, n-tetracosyl butyl ketone, n-tetracosyl pentyl ketone, n-tetracosyl hexyl ketone, n-tetracosyl heptyl ketone, n-tetracosyl octyl ketone, n-tetracosyl nonyl ketone, n-tetracosyl decyl ketone, n-tetracosyl dodecyl ketone, n-ditetracosyl ketone, n-tetracosyl hexacosyl ketone, n-tetracosyl octacosyl ketone, and n-tetracosyl triacontyl ketone;
n-hexacosyl methyl ketone, n-hexacosyl ethyl ketone, n-hexacosyl propyl ketone, n-hexacosyl butyl ketone, n-hexacosyl pentyl ketone, n-hexacosyl hexyl ketone, n-hexacosyl heptyl ketone, n-hexacosyl octyl ketone, n-hexacosyl nonyl ketone, n-hexacosyl decyl ketone, n-hexacosyl dodecyl ketone, n-dihexacosyl ketone, n-hexacosyl octacosyl ketone, and n-hexacosyl triacontyl ketone;
n-octacosyl methyl ketone, n-octacosyl ethyl ketone, n-octacosyl propyl ketone, n-octacosyl butyl ketone, n-octacosyl pentyl ketone, n-octacosyl hexyl ketone, n-octacosyl heptyl ketone, n-octacosyl octyl ketone, n-octacosyl nonyl ketone, n-octacosyl decyl ketone, n-octacosyl dodecyl ketone, n-dioctacosyl ketone, and n-octacosyl triacontyl ketone; and
n-triacontyl methyl ketone, n-triacontyl ethyl ketone, n-triacontyl propyl ketone, n-triacontyl butyl ketone, n-triacontyl pentyl ketone, n-triacontyl hexyl ketone, n-triacontyl heptyl ketone, n-triacontyl octyl ketone, n-triacontyl nonyl ketone, n-triacontyl decyl ketone, n-triacontyl dodecyl ketone, and n-ditriacontyl ketone.

The above-mentioned aliphatic alcohol is preferably a linear saturated aliphatic alcohol, a linear unsaturated aliphatic alcohol, a branched saturated aliphatic alcohol or a branched unsaturated aliphatic alcohol, and particularly preferably is a linear saturated aliphatic alcohol. Examples of the linear saturated aliphatic alcohol include n-tetradecyl alcohol, n-pentadecyl alcohol, n-hexadecyl alcohol, n-heptadecyl alcohol, n-octadecyl alcohol, n-nonadecyl alcohol, n-eicosyl alcohol, n-heneicosyl alcohol, n-docosyl alcohol, n-tricosyl alcohol, n-tetracosyl alcohol, n-pentacosyl alcohol, n-hexacosyl alcohol, n-heptacosyl alcohol, n-octacosyl alcohol, n-nonacosyl alcohol, n-triacontyl alcohol, and the like.
The above-mentioned aliphatic amide is preferably a linear saturated aliphatic amide, a linear unsaturated aliphatic amide, a branched saturated aliphatic amide or a branched unsaturated aliphatic amide, and particularly preferably is a linear saturated aliphatic amide. Examples of the linear saturated aliphatic amide include n-tetradecyl amide, n-pentadecyl amide, n-hexadecyl amide, n-heptadecyl amide, n-octadecyl amide, n-nonadecyl amide, n-eicosyl amide, n-heneicosyl amide, n-docosyl amide, n-tricosyl amide, n-tetracosyl amide, n-pentacosyl amide, n-hexacosyl amide, n-heptacosyl amide, n-octacosyl amide, n-nonacosyl amide, n-triacontyl amide, and the like.
In one mode, to further suppress bleeding of the compound L, the compound L may be contained in the heat

storage composition E in the form of being encapsulated in microcapsules, or may be contained in the heat storage composition E in the form of being filled in porous fine particles.

In one mode, the microcapsule containing the compound L has a coating including a resin as an outer shell, and the compound L is enclosed therein. Examples of the material for forming the coating include thermoplastic resins and thermosetting resins. Specific examples of the resin for forming the coating include melamine resin, acrylic resin, urethane resin, nylon resin, and olefin resin. The material forming the coating is preferably a resin that does not break when producing the heat storage composition E containing the microcapsules that contain the compound L and the polymer 1, or when producing a molded article including the heat storage composition E. In one mode, the microcapsules (hereinafter, sometimes referred to as "primary particles") containing the compound L have an average primary particle size of preferably 0.2 to about 1,000 μm, and more preferably 0.2 to 500 μm. In another mode, the microcapsules having an average primary particle size of 0.2 to 50 μm, and more preferably 0.2 to 10 μm, aggregate to form secondary particles, and the average particle size of the secondary particles (average secondary particle size) is preferably 10 to about 1,000 μm, and more preferably 50 to 500 μm. Examples of microcapsules containing a paraffin, which is compound L, include Micronal 5001 X (manufactured by BASF), Riken Resin PMCD-25SP (manufactured by Mikiriken Industrial Co., Ltd.), and the like.

As used herein, "porous fine particles" means fine particles including an inorganic or organic substance having pores that penetrate from the surface to the inside. The porous fine particles may be hollow fine particles having cavities inside them, or may be fine particles having no cavities. Examples of porous fine particles including an inorganic substance include those containing metal oxides such as silica and alumina, silicates such as calcium silicate and magnesium silicate, carbonates such as calcium carbonate and magnesium carbonate, and phosphates such as magnesium phosphate and apatite. Examples of porous fine particles including an organic substance include foams containing various resins such as polyethylene and polyurethane, and expanded graphite. From the viewpoint of mechanical strength and chemical stability, porous fine particles including an inorganic substance are preferred, and porous silica is more preferred because many fine particles having a uniform particle size are commercially available and easy to obtain. The particle size of the porous fine particles is preferably 0.2 μm to 500 μm, and more preferably 0.2 μm to 300 μm.

When the porous fine particles include an inorganic substance, the surface of the porous fine particles may be coated with a resin layer. Examples of the resin of the resin layer include various reactive resins such as melamine resin, acrylic resin, and urethane resin, and thermoplastic resins such as nylon resin and polyolefin resin.

The porous fine particles filled with the compound L may be obtained by introducing a trapping component that traps the compound L in the porous fine particles, and the compound L is trapped in the trapping substance. For example, when the compound L is paraffin and the porous fine particles are silica, the trapping substance is a substance having an affinity for paraffin, for example, is a substance in which a reactive silyl group, which is a reaction group that has affinity and reactivity with silica and bonds therewith, is bonded to an oligomer or polymer such as polyisobutylene, polyoxypropylene, polyacrylate, polyether polyol, and polymethacrylate.

Polymer 2

The heat storage composition E contains a substance A and a base resin (sometimes referred to as "polymer 2") having a melting peak temperature or glass transition temperature between 60 and 120°C.

In one mode, the polymer 2 has a melting peak temperature or glass transition temperature of preferably 60 to 120°C, and more preferably 70 to 110°C.

The heat storage composition E may include two or more kinds of polymers 2.

Examples of the polymer 2 having a melting peak temperature in the range of 60 to 120°C include high-pressure low-density polyethylene (LDPE), ethylene-α-olefin copolymer, and ethylene-vinyl acetate copolymer (EVA) .

Examples of the polymer 2 having a glass transition temperature in the range of 60 to 120°C include cyclic olefin polymer (COP), cyclic olefin copolymer (COC), polystyrene (PS), polyvinyl chloride (PVC), acrylonitrile-styrene copolymer (AS), acrylonitrile-butadiene-styrene copolymer (ABS), polymethyl methacrylate (PMMA), polyvinyl alcohol (PVA), polyethylene terephthalate (PET), polyacrylonitrile (PAN), polyamide 6 (PA6), polyamide 66 (PA66), polycarbonate (PC), polyphenylene sulfide (PPS), and polyether ether ketone (PEEK).

The ethylene-α-olefin copolymer as the polymer 2 is a copolymer having a structural unit derived from ethylene and a structural unit derived from α-olefin. Examples of the α-olefin include propylene, 1-butene, 1-pentene, 1-hexene, 1-heptene, 1-octene, 4-methyl-1-pentene, and 4-methyl-1-hexene, and the α-olefin may be one of these, or two or more thereof. The α-olefin is preferably an α-olefin having four to eight carbon atoms, and more preferably 1-butene, 1-hexene, or 1-octene.

The density of the high-pressure low-density polyethylene or ethylene-α-olefin copolymer as the polymer 2 is 860 to 960 kg/$m^3$.

In one mode, the polymer 2 has the structural unit A and the structural unit C, and in this case the structural unit A and the structural unit C are as described regarding polymer 1. The polymer 2 is a polymer in which, with respect

100% of the total number of the structural units A and structural units C, the number of structural units A is preferably 0 to 99% and the total number of structural units C is preferably 1 to 100%, and more preferably the number of structural units A is 70 to 99% and the total number of structural units C is 1 to 30%.

Examples of the polymer 2 include the following: acrylic acid polymer, methacrylic acid polymer, vinyl alcohol polymer, methyl acrylate polymer, ethyl acrylate polymer, n-propyl acrylate polymer, n-butyl acrylate polymer, methyl methacrylate polymer, ethyl methacrylate polymer, n-propyl methacrylate polymer, n-butyl methacrylate polymer, vinyl formate polymer, vinyl acetate polymer, vinyl propionate polymer, vinyl(n-butyrate) polymer, methyl vinyl ether polymer, ethyl vinyl ether polymer, n-propyl vinyl ether polymer, n-butyl vinyl ether polymer, maleic anhydride polymer, glycidyl acrylate polymer, glycidyl methacrylate polymer, 3-(dimethylamino)propyl acrylate polymer, 3-(dimethylamino)propyl methacrylate polymer, ethylene-acrylic acid copolymer, ethylene-methacrylic acid copolymer, ethylene-vinyl alcohol copolymer, ethylene-methyl acrylate copolymer, ethylene-ethyl acrylate copolymer, ethylene-n-propyl acrylate copolymer, ethylene-n-butyl acrylate copolymer, ethylene-methyl methacrylate copolymer, ethylene-ethyl methacrylate copolymer, ethylene-n-propyl methacrylate copolymer, ethylene-n-butyl methacrylate copolymer, ethylene-vinyl formate copolymer, ethylene-vinyl acetate copolymer, ethylene-vinyl propionate copolymer, ethylene-vinyl(n-butyrate) copolymer, ethylene-methyl vinyl ether copolymer, ethylene-ethyl vinyl ether copolymer, ethylene-n-propyl vinyl ether copolymer, ethylene-n-butyl vinyl ether copolymer, ethylene-maleic anhydride copolymer, ethylene-glycidyl acrylate copolymer, ethylene-glycidyl methacrylate copolymer, ethylene-3-(dimethylamino)propyl acrylate copolymer, and ethylene-3-(dimethylamino)propyl methacrylate copolymer.

Preferably, the polymer 2 is an ethylenic copolymer. Examples of the ethylenic copolymer include ethylene-unsaturated carboxylic acid copolymers, ethylene-vinyl alcohol copolymers, ethylene-unsaturated carboxylate copolymers, ethylene-vinyl carboxylate copolymers, and ethylene-alkyl vinyl ether copolymers.

Examples of the ethylene-unsaturated carboxylic acid copolymer include ethylene-acrylic acid copolymers, ethylene-methacrylic acid copolymers, and ethylene-maleic anhydride copolymers.

Examples of the ethylene-unsaturated carboxylate copolymer include ethylene-methyl acrylate copolymer, ethylene-ethyl acrylate copolymer, ethylene-n-propyl acrylate copolymer, ethylene-n-butyl acrylate copolymer, ethylene-methyl methacrylate copolymer, ethylene-ethyl methacrylate copolymer, ethylene-n-propyl methacrylate copolymer, ethylene-n-butyl methacrylate copolymer, ethylene-glycidyl acrylate copolymer, ethylene-glycidyl methacrylate copolymer, ethylene-3-(dimethylamino)propyl acrylate copolymer, and ethylene-3-(dimethylamino)propyl methacrylate copolymer.

Examples of the ethylene-vinyl carboxylate copolymer include ethylene-vinyl formate copolymer, ethylene-vinyl acetate copolymer, ethylene-vinyl propionate copolymer, and ethylene-vinyl(n-butyrate) copolymer.

More preferably, the polymer 2 is an ethylene-unsaturated carboxylic acid copolymer or an ethylene-unsaturated carboxylate copolymer, and further preferably is ethylene-acrylic acid copolymer, ethylene-methacrylic acid copolymer, ethylene-vinyl alcohol copolymer, ethylene-methyl acrylate copolymer, ethylene-ethyl acrylate copolymer, ethylene-n-propyl acrylate copolymer, ethylene-n-butyl acrylate copolymer, ethylene-methyl methacrylate copolymer, ethylene-ethyl methacrylate copolymer, ethylene-n-propyl methacrylate copolymer, or ethylene-n-butyl methacrylate copolymer.

From the viewpoint of formability, the polymer 2 preferably has a melt flow rate (MFR) as measured in accordance with JIS K7210 at a temperature of 190°C with a load of 21 N of 0.1 to 100 g/10 min, and more preferably 0.1 to 30 g/10 min.

The amount of the ethylene structural unit in the above ethylenic copolymer resin is preferably 50 to 99 wt.%.

The heat storage composition E may be formed into any shape. In the case of extrusion, injection molding, vacuum forming, blow molding, or roll forming, from the viewpoint of formability, the heat storage composition E has a melt flow rate (MFR) as measured in accordance with JIS K7210 at a temperature of 230°C with a load of 2.16 kbf of preferably 0.1 to 30 g/10 min.

In the case of forming the fiber through spinning as described later, the heat storage composition E has a melt flow rate (MFR) as measured in accordance with JIS K7210 at a temperature of 230°C with a load of 2.16 kbf of preferably 0.1 to 1,000 g/10 min, more preferably 10 to 500 g/10 min, and further preferably 20 to 100 g/10 min.

In the case of forming the fiber through spinning as described later, the heat storage composition E has a shear viscosity $\eta$ as measured by a capillary rheometer at 270°C and a shear rate of $1.216 \times 10^3$ $sec^{-1}$ of preferably 3 to 100 Pa·s, more preferably 4 to 80 Pa·s, and further preferably 5 to 60 Pa·s.

In the case that the heat storage composition E includes an additive, the additive may be blended in advance in one or more raw materials to be used in production of the heat storage composition E, or blended after the heat storage composition E is produced.

In the case that the production process includes a step of cross-linking the polymer, the additive may be blended into the polymer before cross-linking or after cross-linking.

In the case that the heat storage composition E is produced and an additive is then blended in the heat storage composition E, the additive can be blended while the heat storage composition E is melt-kneaded.

The blending amount of these additives is, with respect to 100 parts by weight of the heat storage composition E, preferably 0.001 to 10 parts by weight, more preferably 0.005 to 5 parts by weight, and further preferably 0.01 to 1

part by weight.

Examples of inorganic fillers include talc, calcium carbonate, and calcined kaolin.

Examples of organic fillers include fibers, wood flours, and cellulose powders.

Examples of antioxidants include phenol-based antioxidants, sulfur-containing antioxidants, phosphorus-containing antioxidants, lactone antioxidants, and vitamin antioxidants.

Examples of UV absorbers include benzotriazole-based UV absorbers, tridiamine-based UV absorbers, anilide UV absorbers, and benzophenone-based UV absorbers.

Examples of light stabilizers include hindered amine light stabilizers and benzoate light stabilizers.

Examples of pigments include titanium dioxide and carbon black.

Examples of adsorbents include metal oxides such as zinc oxide and magnesium oxide.

Examples of metal chlorides include iron chloride and calcium chloride.

Examples of lubricants include fatty acids, higher alcohols, aliphatic amides, and aliphatic esters.

The heat storage composition E may be produced by melt-kneading the phase change substance A and the polymer 2 and, if necessary, other additives and the like in advance to prepare a high-concentration masterbatch, then further adding the phase change substance A and/or the polymer 2, and melt-kneading.

The heat storage composition E may be produced by simply mixing the phase change substance A and the polymer 2 with, if necessary, other additives and the like, or by dissolving the phase change substance A in a solvent and then mixing the polymer 2 and, if necessary, other additives and the like, or by dissolving the polymer 2 in a solvent and then mixing the phase change substance A and, if necessary, other additives and the like, or by mixing the phase change substance A and the polymer 2 with a solvent or a solution in which other additives and the like, if necessary, are dissolved in a solvent, or by mixing a solution in which the phase change substance A is dissolved in a solvent with a solution in which the polymer 2 and, if necessary, other additives and the like are dissolved in a solvent.

The heat storage composition E may be produced by simply mixing, or dissolving in a solvent and then mixing, the phase change substance A and the polymer 2 and, if necessary, other additives and the like in advance to prepare a high-concentration masterbatch, then further adding the phase change substance A or polymer 2 as is or after being dissolved in a solvent as necessary, and mixing to produce the composition.

The heat storage composition E may be produced by mixing the monomer or prepolymer of the polymer 1, the monomer or prepolymer of the polymer 2, and, if necessary, other additives and the like to produce the composition, or further polymerizing to produce the composition. Examples of the polymerization method include, for example, bulk polymerization, cast polymerization, solution polymerization, suspension polymerization, and emulsion polymerization.

A polymer and a molded article can be produced using the heat storage composition E obtained by the above method as a raw material.

Molded article

By forming the heat storage composition E, a molded article containing the composition can be produced.

Examples of the method for forming the heat storage composition E include, but are not particularly limited to, injection molding, extrusion, vacuum forming, air pressure forming, press molding, transfer molding, cast molding, compression molding, laminate molding, inflation molding, calendering, blow molding, blowing molding, two-color molding, foam molding, insert molding, in-mold coating molding, rotational molding, hand lay-up molding, spray-up molding, matched die molding, vacuum injection molding, filament winding forming, centrifugal molding, pultrusion molding, and the like.

Example of the molded article of the present invention include an injection molded article, an extruded article, a vacuum formed article, a pressure formed article, a press molded article, a transfer molded article, a cast molded article, a compression molded article, a laminate molded article, an inflation molded article, a calendar molded article, a blow molded article, a blowing molded article, a two-color molded article, a foam molded article, an insert molded article, an in-mold coating molded article, a rotational molded article, a hand lay-up molded article, a spray-up molded article, a matched die molded article, a vacuum injection molded article, a filament winding formed article, a centrifugal molded article, a pultrusion molded article, sheets, films, and the like. The molded article may have a single-layer structure or a multilayer structure.

The molded article of the present invention may have a multilayer structure of a layer of the composition of the present invention and a layer different from the layer of the composition of the present invention. Examples of the material constituting the layer different from the layer of the composition of the present invention include a resin different from the composition of the present invention, a metal, paper, leather, and the like. The multilayer structure can be produced by laminating the layer of the composition of the present invention and the layer that is different from the layer of the composition of the present invention.

The heat storage composition E has excellent formability and shape retention, and thus may have any shape. Examples thereof include shapes such as a sphere, a cuboid (cube), a particle (bead), a cylinder (pellet), a powder, a

bar (stick), a needle, a filament (fiber), a strand, a thread, a string, a cord, a rope, a plate, a sheet, a membrane (film), a woven fabric, a nonwoven fabric, a box (capsule), and a foam, and any other three-dimensional shape, and any shape can be selected in accordance with the intended use.

When the heat storage composition E is in the shape of a sphere, a cuboid (cube), a particle (bead), a cylinder (pellet), or a powder, the heat storage composition E may form a core-shell structure in which the heat storage composition E is covered with a material different from the heat storage composition E (hereinafter, sometimes referred to as "material D"), or a core-shell structure in which the material D is covered with the heat storage composition E. The material D is, for example, an organic compound, a polymer, a metal, or an inorganic compound other than a metal. The material D may be a thermal functional material described later.

When the heat storage composition E is in the shape of a bar (stick), a needle, a filament (fiber), a strand, a thread, a string, a cord, or a rope, the heat storage composition E may form a core-sheath structure in which the heat storage composition E is covered with the material D, or a core-sheath structure in which the material D is covered with the heat storage composition E.

When the heat storage composition E is in the shape of a plate, a sheet, a membrane (film), a woven fabric, a nonwoven fabric, a box, or a capsule, the heat storage composition E may form a laminate structure in which both surfaces or one surface of the heat storage composition E are/is covered with the material D, or a laminate structure in which both surfaces or one surface of the material D are/is covered with the heat storage composition E.

A molded article in the shape of a foam, and

a molded article that is not in the shape of a foam or the material D,
may form a core-shell structure, a core-sheath structure, or a laminate structure.

The heat storage composition E may be spun. The heat storage composition E may be formed, for example, into a part of a fiber, a fiber, a filament, a thread, a textile, a nonwoven fabric, wadding, or a building material.

In one mode, the heat storage composition E is a heat storage material (fiber, building material, etc.). The cross-sectional shape of the heat storage material (fiber, building material, etc.) may be a circular cross-section, an irregular cross-section such as a polygon or multilobal shape, or a hollow cross-section.

In one mode, the heat storage composition E is in the shape of a fiber. From the viewpoint of ease of fiber formation, it is preferred that the single yarn fineness of the fiber be 1 dtex or higher, and from the viewpoint of the softness of the fiber, it is preferred that the single yarn fineness of the fiber be 20 dtex or lower, though the single yarn fineness is not limited thereto.

Examples of methods for producing the fiber include dry spinning, wet spinning, and melt spinning, and melt spinning is preferred. Common spinning uses chips including a heat storage composition as a raw material, and mainly includes two steps, namely, a step of spinning and a step of drawing. Examples of spinning methods suitable for the method for producing the fiber including the heat storage composition E include: continuous polymerization/spinning, in which a heat storage composition is spun continuously after a step of producing the heat storage composition E without forming chips from the heat storage composition E; direct spinning/drawing (spin-drawing), in which a step of spinning and a step of drawing are performed in one step; high-speed spinning, in which a step of drawing is not needed; a POY-DTY method, in which partially-oriented yarn (POY) is obtained and drawn yarn (DTY) is then obtained in a step of false-twisting; and spun-bonding. These methods are more rationalized methods than the common spinning.

In one mode, the fiber including the heat storage composition E may be a composite fiber. Composite fibers are fibers in which two or more kinds of fibers consisting of different components are bonded together in single yarn. Examples of the composite fiber include a core-sheath type composite fiber, a laminated composite fiber, a splittable composite fiber, and a sea-island composite fiber.

From the viewpoint of ease of fiber formation, it is preferred that the single yarn fineness of the composite fiber including the heat storage composition E be 1 dtex or higher, and from the viewpoint of the softness of the fiber, it is preferred that the single yarn fineness of the composite fiber be 20 dtex or lower, though the single yarn fineness is not limited thereto.

Examples of the structure of the core-sheath type composite fiber include a core-sheath structure in which the heat storage composition E is covered with the material D, and a core-sheath structure in which the material D is covered with the heat storage composition E. The structure of the core-sheath type composite fiber is preferably a core-sheath structure in which the heat storage composition E is covered with the material D. The material D is preferably the polymer 2, and more preferably polypropylene (PP), polyethylene terephthalate (PET), polytrimethylene terephthalate (PTT), polybutylene terephthalate (PBT), polyamide 6 (PA6), or polyamide 66 (PA66).

It is preferred that the composite fiber with a core-sheath structure in which the heat storage composition E is covered with the material D be a composite fiber having a core area fraction of 10 to 90% in a cross-section in the fiber radial direction. From the viewpoint of a temperature control function, the core area fraction is preferably 10% or more, and from the viewpoint of a fiber strength, the core area fraction is preferably 90% or less. When the core includes

polypropylene, the core area fraction is preferably 20 to 60% from the viewpoint of the dyeability of the whole fiber.

In order to control the composite form of the core-sheath, it is preferred that the melt viscosity ratio of the sheath component to the core component is in the range of 0.3 or more and 4.0 or less.

The laminated composite fiber is generally crimped, for example, because of different shrinkage factors, and in the case that the composite fiber is crimped into a spiral, the heat storage composition E may be present on the inner side of the spiral, or the material D may be present on the inner side of the spiral, but the laminated composite fiber preferably has the heat storage composition E on the inner side of the spiral. The material D is preferably the polymer 2, and more preferably polypropylene (PP), polyethylene terephthalate (PET), polytrimethylene terephthalate (PTT), polybutylene terephthalate (PBT), polyamide 6 (PA6), or polyamide 66 (PA66).

In the case that the structure of the splittable composite fiber is formed of a radial fiber at the center and a plurality of wedge-shaped fibers therearound, the heat storage composition E may constitute the radial fiber at the center, or the material D may constitute the radial fiber at the center, but preferably the splittable composite fiber has the heat storage composition E constituting the radial fiber at the center. The material D is preferably the polymer 2, and more preferably polypropylene (PP), polyethylene terephthalate (PET), polytrimethylene terephthalate (PTT), polybutylene terephthalate (PBT), polyamide 6 (PA6), or polyamide 66 (PA66). The splittable composite fiber can be split/opened through chemical treatment to provide an ultrafine fiber.

The structure of the sea-island composite fiber may be such that the heat storage composition E constitute the sea-portion fibers or the material D constitute the sea-portion fibers. Preferably, the sea-island composite fiber has a structure in which the material D constitutes the sea-portion fibers. The material D is preferably the polymer 2, and more preferably polypropylene (PP), polyethylene terephthalate (PET), polytrimethylene terephthalate (PTT), polybutylene terephthalate (PBT), polyamide 6 (PA6), or polyamide 66 (PA66). An ultrafine fiber composed of a plurality of island-portion fibers may be obtained by removing the sea-portion fibers from the sea-island composite fiber through a chemical treatment.

Examples of the form of the fiber including the heat storage composition E include a filament (multifilament, monofilament) and a short fiber (staple). A filament (multifilament, monofilament) may be directly used, or formed into false-twisted yarn through false-twisting, or formed into combined filament yarn through air-mingling and the like. A short fiber (staple) may be directly used, or formed into spun yarn through spinning, or formed into blended yarn through mixed spinning. A filament and a short fiber may be combined into core-spun yarn, or formed into twisted yarn, twisted union yarn, or covered yarn through twisting.

The fiber including the heat storage composition E may contain an additive such as an antioxidant, a pigment, a dye, an antibacterial agent, a deodorant, an antistatic agent, a flame retardant, an inert fine particle, a light-absorbing heat-generating material, a moisture-absorbing heat-generating material, a far-infrared heat-generating material, a UV absorber, a UV scattering agent, an infrared shielding agent, a lubricant, an oil, a sizing agent, and other additives. The additive can be added during spinning or after spinning.

The antioxidant to be added is not particularly limited, and can be appropriately selected according to the intended purpose. Examples thereof include a phenolic compound, a phosphorus-based compound, a hindered amine compound, and the like. The antioxidant may be used alone or in combination of two or more.

The phenolic compound antioxidant is a radical chain reaction inhibitor having a phenol structure, and may be used alone or in combination of two or more. Among them, pentaerythritol-tetrakis(3-(3,5-di-t-butyl-4-hydroxyphenol)propionate) (for example, Irganox 1010 manufactured by BASF), 2,4,6-tris(3',5'-di-t-butyl-4'-hydroxybenzyl)mesitylene (for example, ADK Stab AO-330 manufactured by ADEKA), 3,9-bis[1,1-dimethyl-2-[β-(3-t-butyl-4-hydroxy-5-methylphenyl)propionyloxy]ethyl]-2,4,8,10-tetraoxaspiro[5,5]-undecane (for example, Sumilizer GA-80 manufactured by Sumitomo Chemical, ADK Stab AO-80 manufactured by ADEKA), and 1,3,5-tris[[4-(1,1-dimethylethyl)-3-hydroxy- 2,6-dimethylphenyl]methyl]-1,3,5-triazine-2,4,6(1H,3H,5H)-trione (for example, THANOX 1790 manufactured by Tokyo Chemical Industry Co., Ltd., CYANOX 1790 manufactured by CYTEC) are highly effective in suppressing oxidative decomposition and can be suitably employed. Of these, 3,9-bis[1,1-dimethyl-2-[β-(3-t-butyl-4-hydroxy-5-methylphenyl)propionyloxy]ethyl]-2,4,8,10-tetraoxaspiro[5,5]-undecane (for example, Sumilizer GA-80 manufactured by Sumitomo Chemical, ADK Stab AO-80 manufactured by ADEKA), and 1,3,5-tris[[4-(1,1-dimethylethyl)-3-hydroxy- 2,6-dimethylphenyl]methyl]-1,3,5-triazine-2,4,6(1H,3H,5H)-trione (for example, THANOX 1790 manufactured by Tokyo Chemical Industry Co., Ltd., CYANOX 1790 manufactured by CYTEC) can be employed particularly suitably because when exposed to nitrogen oxide gas, the phenolic compound itself does not easily change into a quinone compound, which is the substance that causes yellowing, and therefore it is possible to suppress the yellowing of the composition that is caused by nitrogen oxide gas during long-term storage.

The phosphorus-based compound antioxidant is a phosphorus-based antioxidant that reduces peroxides without generating radicals and is itself oxidized, and may be used alone or in combination of two or more. Among them, tris(2,4-di-t-butylphenyl)phosphite (for example, Irgafos 168 manufactured by BASF) and 3,9-bis(2,6-di-t-butyl-4-methylphenoxy)-2,4,8,10-tetraoxa-3,9-diphosphaspiro[5,5]undecane (for example, ADK Stab PEP-36 manufactured by ADEKA) are highly effective in suppressing oxidative decomposition and can be suitably employed.

In addition, as an antioxidant having a phenolic and a phosphorus skeleton, 2,4,8,10-tetra-t-butyl-6-[3-(3-methyl-4-hydroxy-5-t-butylphenyl)propoxy]dibenzo[d,f] [1,3,2]dioxaphosphepin (Sumilizer GP manufactured by Sumitomo Chemical Co., Ltd.) exhibits an excellent effect of suppressing oxidative decomposition particularly in high-temperature processing of 230°C or higher, and hence can be suitably employed.

The hindered amine compound antioxidant is a hindered amine antioxidant that has the effect of scavenging radicals generated by ultraviolet rays and heat, and an effect of regenerating a phenolic antioxidant deactivated by functioning as an antioxidant. The hindered amine compound antioxidant may be used alone or in combination of two or more. Among them, an amino ether hindered amine compound or a high molecular weight hindered amine compound having a molecular weight of 1,000 or more can be suitably employed. Among hindered amine compounds, amino ether hindered amine compounds have low basicity. As a result of intensive investigation of the yellowing of polyolefin compounds caused by nitrogen oxide gas and phenolic compounds, the present inventors found that the lower the basicity of the hindered amine compound, the greater the suppression of antioxidant phenolic compounds and phenolic compounds contained in packaging from changing into the quinone compound that causes yellowing. That is, an amino ether hindered amine compound is preferred because the yellowing of polyolefin compounds caused by nitrogen oxide gas or phenolic compounds during long-term storage can be suppressed. Specific examples of the amino ether hindered amine compound include, but are not limited to, bis(1-undecanoxy-2,2,6,6-tetramethylpiperidin-4-yl)carbonate (for example, ADK Stab LA-81 manufactured by ADEKA), bis[2,2,6,6-tetramethyl-1-(octyloxy)piperidin-4-yl] decanedioate (for example, Tinuvin PA123 manufactured by BASF) and the like. In addition to amino ether hindered amine compounds, specific examples of hindered amine compounds with low basicity include, but are not limited to, esters of 4-hydroxy-2,2,6,6-tetramethyl-1-piperidineethanol and 3,5,5-trimethylhexanoic acid (for example, Tinuvin 249 manufactured by BASF), and the like. A high molecular weight hindered amine compound having a molecular weight of 1,000 or more is preferred because it can suppress elution from the inside of the polyolefin composition caused by washing or cleaning using an organic solvent, and has excellent durability for its oxidative decomposition suppressing effect. Specific examples of the high molecular weight hindered amine compound having a molecular weight of 1,000 or more include, but are not limited to, N-N'-N"-N‴-tetrakis(4,6-bis(butyl-(N-methyl-2,2,6,6-tetramethylpiperidin-4-yl)amino)triazin-2-yl)-4,7-diazadecane-1,10-diamine) (for example, SABOSTAB UV119 from SABO), poly((6-((1,1,3,3-tetramethylbutyl)amino)-1,3,5-triazine-2,4-diyl) (2,2,6,6-tetramethyl-4-piperidinyl)imino)-1,6-hexanediyl(2,2,6,6-tetramethyl-4-piperidinyl)imino)) (for example, CHIMASSORB 944 manufactured by BASF), dibutylamine-1,3,5-triazine-N,N'-bis(2,2,6,6-tetramethyl-4-piperidyl)-1,6-hexamethylenediamine, N-(2,2,6,6-tetramethyl-4-piperidyl)butylamine polycondensate (for example, CHIMASSORB 2020) manufactured by BASF), and the like.

The fabric or cloth including the fiber including the heat storage composition E may be any of woven fabrics, knitted fabrics, and nonwoven fabrics. Examples of the fabric construction include a plane weave, a twill weave, a sateen weave (satin), and their variations, a dobby weave, and a Jacquard weave. Examples of the knitting construction include a weft knitted fabric, a warp knitted fabric, and their variations.

The weight, gauge, and so forth of the textile or nonwoven fabric including the fiber including the heat storage composition E are not particularly limited.

The textile or nonwoven fabric including the fiber including the heat storage composition E may be composed of only of the fiber including the heat storage composition E, or be mix-woven or mix-knitted with an additional fiber for use. Examples of the additional fiber include: inorganic fibers such as carbon fibers, inorganic fibers, and metal fibers; purified fibers such as Lyocell; regenerated fibers such as rayon, cupra, and polynosic; semi-synthetic fibers such as acetates, triacetates, and promix; synthetic fibers such as acrylic, acrylic fibers, vinylon, vinylidene, polyvinyl chloride, polyethylene, polychlal, aramid, polybutylene terephthalate (PBT), polytrimethylene terephthalate (PTT), polyamide 66 (PA66), and urethane; natural fibers including plant fibers such as cotton, cellulosic fibers, cannabis (flax, ramie, hemp, jute) and animal fibers such as wool, sheep wool, animal hair (e.g., Angora, cashmere, mohair, alpaca, camel), and silk; and bird feathers such as down and feathering. It is preferred that the ratio of the fiber including the heat storage composition E to be used be 20 to 100 wt.% though the ratio is not limited thereto.

The nonwoven fabric including the fiber including the heat storage composition E may contain a heat-sealing binder fiber.

It is preferred that the heat-sealing binder fiber be, for example, a core-sheath or laminated composite fiber including the heat storage composition E and a material having a melting point different from that of the heat storage composition E. The material having a melting point different from that of the heat storage composition E is preferably the polymer 2, and more preferably polypropylene (PP), polyethylene terephthalate (PET), polytrimethylene terephthalate (PTT), polybutylene terephthalate (PBT), polyamide 6 (PA6), or polyamide 66 (PA66).

In the case that the heat-sealing binder fiber is used, it is preferred that the content be 5 to 20 wt.% of the whole fiber of the nonwoven fabric.

A production method for the nonwoven fabric including the fiber including the heat storage composition E typically includes a step of forming a web and a step of bonding a web. Examples of the step of forming a web include a dry method, a wet method, spun-bonding, melt-blowing, and air-laying, and examples of the step of bonding a web

include chemical bonding, thermobonding, needle-punching, and hydroentangling.

The fabric or cloth including the fiber including the heat storage composition E has a temperature control function, which allows the weight and thickness of the fabric or cloth to be reduced, and thus provides a light, soft texture without a deterioration in fashionability of the clothing. In one mode, the fabric or cloth including the fiber of the present invention includes the polymer 1 (high molecular weight phase change substance), and hence is superior in feel and wash durability to fabrics or cloths including a fiber which includes the compound L (low molecular weight phase change substance) encapsulated in a microcapsule.

Thermal functional material

Examples of thermal functional materials include a material that feels cool to the touch, a moisture-absorbing heat-generating material, a light-absorbing heat-generating material, a far-infrared radiation material, a thermal insulation material, a heat-shielding material, and a water-absorbing quick-drying material. Thermal functional materials can be, for example, a part of a fiber, a fiber, a filament, a thread, a textile (fabric or cloth), a nonwoven fabric, wadding, or a building material.

Examples of the material that feels cool to the touch include a material containing an inorganic filler, a fiber with high thermal conductivity, and a material that quickly absorbs and diffuses moisture to remove the heat of vaporization. Examples of the type of fiber that feels cool to the touch include, but are not particularly limited to purified fibers such as Lyocell; regenerated fibers such as rayon, cupra, and polynosic; semi-synthetic fibers such as acetates, triacetates, and promix; synthetic fibers such as acrylic, acrylic fibers, vinylon, vinylidene, polyvinyl chloride, polyethylene, polychlal, aramid, polybutylene terephthalate (PBT), polytrimethylene terephthalate (PTT), polyamide 66 (PA66), and urethane; natural fibers including plant fibers such as cotton, cellulosic fibers, cannabis (flax, ramie, hemp, jute) and animal fibers such as wool, sheep wool, animal hair (e.g., Angora, cashmere, mohair, alpaca, camel), and silk; and bird feathers such as down and feathering. Preferably, the material that feels cool to the touch has a contact cooling sensation evaluation value Qmax of 0.2 W/cm$^2$ or more when made into a textile.

Qmax is measured by a thermolab tester KES-F7-11 manufactured by Kato Tech Co., Ltd. The hot plate of the tester is heated to the environmental temperature +10°C (or 20°C), placed on the textile, and the maximum amount of heat transferred from the hot plate to the textile is measured.

Examples of the inorganic filler include, but are not particularly limited to, mineral pigments, for instance calcium carbonates such as light calcium carbonate and heavy calcium carbonate, magnesium carbonates such as barium carbonate and basic magnesium carbonate, calcium sulfate, barium sulfate, titanium dioxide, iron oxide, tin oxide, titanium oxide, zinc oxide, magnesium oxide, ferrite powder, zinc sulfide, zinc carbonate, aluminum nitride, silicon nitride, boron nitride, satin white, diatomaceous earth such as calcined diatomaceous earth, calcium silicate, aluminum silicate, magnesium silicate, silicas such as amorphous silica, amorphous synthetic silica, and colloidal silica, colloidal alumina, pseudo-boehmite, aluminum hydroxide, magnesium hydroxide, alumina, alumina hydrate, lithopone, zeolite, hydrated halloysite, clay, hydrotalcite, aluminosilicate, talc, pyrophyllite, smectites such as saponite, hectorite, sauconite, stevensite, montmorillonite, beidellite, and nontronite, micas such as vermiculite, phlogopite, biotite, Zinnwald mica, white mica, paragonite, celadonite, and glauconite, clinochlore, chamosite, nimite, penantite, sudoite, donbassite, clintonite, margarite, suelite, antigorite, lizardite, chrysotile, amesite, cronstedtite, burcherin, greenalite, garnierite, kaolins such as kaolinite, dickite, nacrite, and halloysite, delaminated kaolin, calcined kaolin, sepiolite, palygorskite, imogolite, allophane, hisingerite, penwithite, activated clay, bentonite, sericite, graphite, carbon fiber, and the like. These may be used alone or in combination of two or more.

The shape of the above-mentioned inorganic filler is not particularly limited, and examples thereof include fixed shapes such as spheres, needles, and plate shapes, and non-fixed shapes.

Examples of the above-mentioned fiber with high thermal conductivity include highly oriented polyethylene fiber and highly oriented polybenzoxazole fiber, which have enhanced thermal conductivity as a result of drawing and orientation.

The moisture-absorbing heat-generating material utilizes an exothermic reaction (condensation heat) in which kinetic energy is converted into thermal energy. The moisture-absorbing heat-generating material has an effect of controlling temperature and humidity by generating heat of adsorption when it absorbs moisture and releasing moisture in a low-humidity environment. Examples of the type of fiber that generates heat through moisture absorption include, but are not particularly limited to, purified fibers such as Lyocell; regenerated fibers such as rayon, cupra, and polynosic; semi-synthetic fibers such as acetates, triacetates, and promix; synthetic fibers such as acrylic, acrylic fibers, vinylon, vinylidene, polyvinyl chloride, polyethylene, polychlal, aramid, polybutylene terephthalate (PBT), polytrimethylene terephthalate (PTT), polyamide 66 (PA66), and urethane; natural fibers including plant fibers such as cotton, cellulosic fibers, cannabis (flax, ramie, hemp, jute) and animal fibers such as wool, sheep wool, animal hair (e.g., Angora, cashmere, mohair, alpaca, camel), and silk; and bird feathers such as down and feathering.

The light-absorbing heat-generating material is a material that absorbs sunlight and converts it into thermal

energy. Examples of light-absorbing heat-generating fibers that include a light-absorbing heat-generating material include fibers in which a light-absorbing heat-generating material such as zirconium carbide or an organic dye, which are highly efficient in absorbing specific wavelengths of sunlight and converting the absorbed sunlight into thermal energy, is fixed to the inside and on the surface of the fiber, and the like. More specific examples of such fibers include, but are not particularly limited to, purified fibers such as Lyocell; regenerated fibers such as rayon, cupra, and polynosic; semi-synthetic fibers such as acetates, triacetates, and promix; synthetic fibers such as acrylic, acrylic fibers, vinylon, vinylidene, polyvinyl chloride, polyethylene, polychlal, aramid, polybutylene terephthalate (PBT), polytrimethylene terephthalate (PTT), polyamide 66 (PA66), and urethane; natural fibers including plant fibers such as cotton, cellulosic fibers, cannabis (flax, ramie, hemp, jute) and animal fibers such as wool, sheep wool, animal hair (e.g., Angora, cashmere, mohair, alpaca, camel), and silk; and bird feathers such as down and feathering.

The far-infrared radiation material is a material that emits far-infrared radiation when heated. Examples of far-infrared processed fibers that include a far-infrared radiation material include fibers in which a ceramics that emit a high amount of far-infrared radiation is adhered to the inside and on the surface of the fiber, and the like. More specific examples of such fibers include, but are not particularly limited to, purified fibers such as Lyocell; regenerated fibers such as rayon, cupra, and polynosic; semi-synthetic fibers such as acetates, triacetates, and promix; synthetic fibers such as acrylic, acrylic fibers, vinylon, vinylidene, polyvinyl chloride, polyethylene, polychlal, aramid, polybutylene terephthalate (PBT), polytrimethylene terephthalate (PTT), polyamide 66 (PA66), and urethane; natural fibers including plant fibers such as cotton, cellulosic fibers, cannabis (flax, ramie, hemp, jute) and animal fibers such as wool, sheep wool, animal hair (e.g., Angora, cashmere, mohair, alpaca, camel), and silk; and bird feathers such as down and feathering.

The thermal insulation material is a material that stores a large amount of air with low thermal conductivity in the fabric and prevents warm air from escaping to the outside. Examples of the type of fiber that exhibits thermal insulating properties include, but are not particularly limited to, hollow fibers and feathers. More specific examples include purified fibers such as Lyocell; regenerated fibers such as rayon, cupra, and polynosic; semi-synthetic fibers such as acetates, triacetates, and promix; synthetic fibers such as acrylic, acrylic fibers, vinylon, vinylidene, polyvinyl chloride, polyethylene, polychlal, aramid, polybutylene terephthalate (PBT), polytrimethylene terephthalate (PTT), polyamide 66 (PA66), and urethane; natural fibers including plant fibers such as cotton, cellulosic fibers, cannabis (flax, ramie, hemp, jute) and animal fibers such as wool, sheep wool, animal hair (e.g., Angora, cashmere, mohair, alpaca, camel), and silk; and bird feathers such as down and feathering. Feathers such as down and feathering are preferred.

The heat-shielding material is a material that blocks sunlight. Examples of the type of fiber that exhibit heat-shielding properties include, but are not particularly limited to, fibers that incorporate inorganic fine particles, fibers and woven fabrics that have a layered structure or that are hollow and as a result reflect or scatter sunlight, and the like. More specific examples include purified fibers such as Lyocell; regenerated fibers such as rayon, cupra, and polynosic; semi-synthetic fibers such as acetates, triacetates, and promix; synthetic fibers such as acrylic, acrylic fibers, vinylon, vinylidene, polyvinyl chloride, polyethylene, polychlal, aramid, polybutylene terephthalate (PBT), polytrimethylene terephthalate (PTT), polyamide 66 (PA66), and urethane; natural fibers including plant fibers such as cotton, cellulosic fibers, cannabis (flax, ramie, hemp, jute) and animal fibers such as wool, sheep wool, animal hair (e.g., Angora, cashmere, mohair, alpaca, camel), and silk; and bird feathers such as down and feathering.

The water-absorbing quick-drying material is a material that quickly absorbs and dries sweat to keep the inside of clothes dry and comfortable. Examples of the type of fiber that exhibits moisture-absorbing quick-drying properties include, but are not particularly limited to, ultrafine fibers that utilize capillary action, fibers having a shape that is designed to increase the surface area, fibers that combine hydrophilicity and hydrophobicity, textiles that utilize changes in the crimped state of fibers due to humidity, and the like. More specific examples include purified fibers such as Lyocell; regenerated fibers such as rayon, cupra, and polynosic; semi-synthetic fibers such as acetates, triacetates, and promix; synthetic fibers such as acrylic, acrylic fibers, vinylon, vinylidene, polyvinyl chloride, polyethylene, polychlal, aramid, polybutylene terephthalate (PBT), polytrimethylene terephthalate (PTT), polyamide 66 (PA66), and urethane; natural fibers including plant fibers such as cotton, cellulosic fibers, cannabis (flax, ramie, hemp, jute) and animal fibers such as wool, sheep wool, animal hair (e.g., Angora, cashmere, mohair, alpaca, camel), and silk; and bird feathers such as down and feathering.

The cross-sectional shape of the fiber including the thermal functional material may be a circular cross-section, an irregular cross-section such as a polygon or multilobal shape, or a hollow cross-section.

From the viewpoint of ease of fiber formation, it is preferred that the single yarn fineness of the fiber including the thermal functional material be 1 dtex or higher, and from the viewpoint of the softness of the fiber, it is preferred that the single yarn fineness of the fiber including the thermal functional material be 20 dtex or lower, though the single yarn fineness is not limited thereto.

The fiber including the thermal functional material may be a composite fiber. Composite fibers are fibers in which two or more kinds of fibers consisting of different components are bonded together in single yarn. Examples of the composite fiber include a core-sheath type composite fiber, a laminated composite fiber, a splittable composite fiber, and a sea-island composite fiber.

From the viewpoint of ease of fiber formation, it is preferred that the single yarn fineness of the fiber including the thermal functional material be 1 dtex or higher, and from the viewpoint of the softness of the fiber, it is preferred that the single yarn fineness of the fiber containing the thermal functional material be 20 dtex or lower, though the single yarn fineness is not limited thereto.

Examples of the form of the fiber including the thermal functional material include a filament (multifilament, monofilament) and a short fiber (staple). A filament (multifilament, monofilament) may be directly used, or formed into false-twisted yarn through false-twisting, or formed into combined filament yarn through air-mingling and the like. A short fiber (staple) may be directly used, or formed into spun yarn through spinning, or formed into blended yarn through mixed spinning. A filament and a short fiber may be combined into core-spun yarn, or formed into twisted yarn, twisted union yarn, or covered yarn through twisting.

The fiber including the thermal functional material may contain an additive such as an antioxidant, a pigment, a dye, an antibacterial agent, a deodorant, an antistatic agent, a flame retardant, an inert fine particle, a light-absorbing heat-generating material, a moisture-absorbing heat-generating material, a far-infrared heat-generating material, a UV absorber, a lubricant, a UV scattering agent, an infrared shielding agent, an oil, a sizing agent, and other additives. The additive can be added during spinning or after spinning.

Composite

The composite of the present invention includes the heat storage composition E. Further, the composite of the present invention may also include the above-mentioned thermal functional material. The composite may be formed in any way, for example, into a composite fibers, a filament, a yarn, a textile, a nonwoven fabric, or wadding.

The composite of the present invention can be a composite fiber. The composite fiber is a fiber in which two or more kinds of fibers consisting of different components are bonded together in single yarn. Examples of the composite fiber include a core-sheath type composite fiber, a laminated composite fiber, a splittable composite fiber, and a sea-island composite fiber.

From the viewpoint of ease of fiber formation, it is preferred that the single yarn fineness of the composite fiber be 1 dtex or higher, and from the viewpoint of the softness of the fiber, it is preferred that the single yarn fineness of the composite fiber be 20 dtex or lower, though the single yarn fineness is not limited thereto.

Examples of the structure of the core-sheath type composite fiber include a core-sheath structure in which the heat storage composition E is covered with the thermal functional material, a core-sheath structure in which the thermal functional material is covered with the heat storage composition E, and the like, and the structure of the core-sheath type composite fiber is preferably a core-sheath structure in which the heat storage composition E is covered with the thermal functional material.

It is preferred that the composite fiber with a core-sheath structure in which the heat storage composition E is covered with the thermal functional material be a composite fiber having a core area fraction of 10% to 90% in a cross-section in the fiber radial direction. From the viewpoint of a sustained thermal function, the core area fraction is preferably 10% or more, and from the viewpoint of a fiber strength, the core area fraction is preferably 90% or less.

The laminated composite fiber is generally crimped, for example, because of different shrinkage factors, and in the case that the composite fiber is crimped into a spiral, the heat storage composition E may be present on the inner side of the spiral, or the thermal functional material may be present on the inner side of the spiral, but the laminated composite fiber preferably has the heat storage composition E on the inner side of the spiral.

In the case that the structure of the splittable composite fiber is formed of a radial fiber at the center and a plurality of wedge-shaped fibers therearound, the heat storage composition E may constitute the radial fiber at the center, or the thermal functional material may constitute the radial fiber at the center, but preferably the splittable composite fiber has the heat storage composition E constituting the radial fiber at the center. The splittable composite fiber can be split/opened through chemical treatment to provide an ultrafine fiber.

As for the structure of the sea-island composite fiber, the heat storage composition E may be the sea-portion fiber, or the thermal functional material may be the sea-portion fiber.

Examples of the form of the composite fiber that includes (is) the composite of the present invention include a filament (multifilament, monofilament) and a short fiber (staple). A filament (multifilament, monofilament) may be directly used, or formed into false-twisted yarn through false-twisting, or formed into combined filament yarn through air-mingling and the like. A short fiber (staple) may be directly used, or formed into spun yarn through spinning, or formed into blended yarn through mixed spinning. A filament and a short fiber may be combined into core-spun yarn, or formed into twisted yarn, twisted union yarn, or covered yarn through twisting.

The composite of the present invention may contain an additive such as an antioxidant, a pigment, a dye, an antibacterial agent, a deodorant, an antistatic agent, a flame retardant, an inert fine particle, a light-absorbing heat-generating material, a moisture-absorbing heat-generating material, a far-infrared heat-generating material, a UV absorber, a UV scattering agent, an infrared shielding agent, a lubricant, an oil, a sizing agent, and other additives. The

additive can be added during spinning or after spinning.

The textile or nonwoven fabric that includes (is) the composite of the present invention may be any of woven fabrics, knitted fabrics, and nonwoven fabrics. Examples of the fabric construction include a plane weave, a twill weave, a sateen weave (satin), and their variations, a dobby weave, and a Jacquard weave. Examples of the knitting construction include a weft knitted fabric, a warp knitted fabric, and their variations.

The textile or nonwoven fabric that includes (is) the composite of the present invention may be used by blending, weaving, knitting, or twisting the fiber of the heat storage composition E and the fiber of the thermal functional material. Further, the textile or nonwoven fabric may be used by interweaving or interknitting with other fibers. Examples of other fibers include inorganic fibers such as carbon fibers, inorganic fibers, and metal fibers; purified fibers such as Lyocell; regenerated fibers such as rayon, cupra, and polynosic; semi-synthetic fibers such as acetates, triacetates, and promix; synthetic fibers such as acrylic, acrylic fibers, vinylon, vinylidene, polyvinyl chloride, polyethylene, polychlal, aramid, polybutylene terephthalate (PBT), polytrimethylene terephthalate (PTT), polyamide 66 (PA66), and urethane; natural fibers including plant fibers such as cotton, cellulosic fibers, cannabis (flax, ramie, hemp, jute) and animal fibers such as wool, sheep wool, animal hair (e.g., Angora, cashmere, mohair, alpaca, camel), and silk; and bird feathers such as down and feathers.

Examples of the fabric construction include a plane weave, a twill weave, a sateen weave (satin), and their variations, a dobby weave, and a Jacquard weave. Examples of the knitting construction include a weft knitted fabric, a warp knitted fabric, and their variations. The fabric construction and the knitting construction may bias the heat storage material to one side so that the heat storage effect becomes more effective.

The weight, gauge, and so forth of the fabric or cloth that is the textile or nonwoven fabric that includes (is) the composite of the present invention are not particularly limited.

The textile or nonwoven fabric that includes (is) the composite of the present invention may be laminated. One type of textile or nonwoven fabric including the heat storage composition E may be laminated, or two or more types of the textile or nonwoven fabric may be laminated. The textile or nonwoven fabric may be laminated together with a textile or nonwoven fabric including the thermal functional material. The lamination method and the number of layers are not particularly limited. When laminating with a material that feels cool to the touch, it is preferred that the material that feels cool to the touch is on the skin side. When laminating with a thermal insulation material, the heat storage composition E is preferably an intermediate layer or on the skin side.

The nonwoven fabric that includes (is) the composite of the present invention may include a heat-sealing binder fiber.

It is preferred that the heat-sealing binder fiber be, for example, a core-sheath or laminated composite fiber consisting of the heat storage composition E and a material having a melting point different from that of the heat storage composition E. The material having a melting point different from that of the heat storage composition E is preferably the polymer (2), and more preferably polypropylene (PP), polyethylene terephthalate (PET), polytrimethylene terephthalate (PTT), polybutylene terephthalate (PBT), polyamide 6 (PA6), or polyamide 66 (PA66).

In the case that the heat-sealing binder fiber is used, it is preferred that the content of the heat-sealing binder fiber be 5 to 20 wt.% of the whole fiber of the nonwoven fabric.

A method for producing the nonwoven fabric that includes (is) the composite of the present invention typically includes a step of forming a web and a step of bonding the web. Examples of the step of forming a web include a dry method, a wet method, spun-bonding, melt-blowing, air-laying, and the like. Examples of the step of bonding the web include chemical bonding, thermobonding, needle-punching, hydroentangling, and the like.

To produce wadding that includes (is) the composite of the present invention, a fiber including the heat storage composition E and a fiber including the thermal functional material may be mixed. Other fibers may also be mixed. Examples of other fibers include inorganic fibers such as carbon fibers, inorganic fibers, and metal fibers; purified fibers such as Lyocell; regenerated fibers such as rayon, cupra, and polynosic; semi-synthetic fibers such as acetates, triacetates, and promix; synthetic fibers such as acrylic, acrylic fibers, vinylon, vinylidene, polyvinyl chloride, polyethylene, polychlal, aramid, polybutylene terephthalate (PBT), polytrimethylene terephthalate (PTT), polyamide 66 (PA66), and urethane; natural fibers including plant fibers such as cotton, cellulosic fibers, cannabis (flax, ramie, hemp, jute) and animal fibers such as wool, sheep wool, animal hair (e.g., Angora, cashmere, mohair, alpaca, camel), and silk; and bird feathers such as down and feathers. Moreover, a textile or nonwoven fabric including the heat storage composition E may be laminated on the wadding including the thermal functional material. A wadding that includes the composite of the present invention is a product in which the interior of a baglike exterior is filled with the composite.

The fabric or cloth including the composite of the present invention has a temperature control function, which allows the weight and thickness of the fabric or cloth to be reduced, and thus provides a light, soft texture without a deterioration in fashionability of the clothing. Further, the fabric or cloth including the composite of the present invention includes the polymer 1 (high molecular weight phase change substance), and hence is superior in wash durability to fabrics or cloths including a composite material which includes the compound L (low molecular weight phase change substance) encapsulated in a microcapsule.

In one mode, the heat storage composition E has excellent heat storage performance, formability, shape retention, and moisture permeability, and hence can be suitably used as a product directly or indirectly requiring performance to keep warm/cold, or a member thereof. It is noted that the composition of the present invention having excellent heat storage performance may be used for articles that do not require heat storage performance.

Examples of products directly or indirectly requiring performance to keep warm/cold, or members thereof include building materials, furniture, interior goods, bedding, bathroom materials, vehicles, air conditioners, electrical appliances, heat-insulating containers, clothes, daily necessities, agricultural materials, fermentation systems, thermoelectric conversion systems, and heat carrier media.

Examples of building materials include floor materials, wall materials, wallpapers, ceiling materials, roof materials, floor heating systems, tatamis (rush mats), doors, fusumas (paper sliding doors), amados (rain shutter doors), shojis (paper screen doors), windows, and window frames.

When using for a floor material, a wall material, a ceiling material, or a roof material, for example, a laminate having the heat storage composition E in the form of a plate, a sheet, or a foam and a thermal insulation material including the material D and/or a heat shielding material including the material D can be suitably used to maintain an indoor space temperature at a more constant level against variation in the external environment temperature.

Examples of the thermal insulation material include polystyrene foam, polyurethane foam, acrylic resin foam, phenolic resin foam, polyethylene resin foam, foamed rubber, glass wool, rock wool, foamed ceramics, vacuum thermal insulation materials, and composites thereof.

Examples of the heat shielding material include an aluminum sheet, an aluminum foil, an aluminum powdercontaining coating material, a ceramic powder coating material, and a composite of these materials.

When using for a wall material, a ceiling material, or a roof material, for example, a laminate in the form of a plate, a sheet, or a foam, having the heat storage composition E and a fireproof material including the material D and being flame-retardant, quasiincombustible, or incombustible can be suitably used to impart fireproof properties.

Examples of the fireproof material include concrete, gypsum, wood cement, calcium silicate, glass, metal, a foaming fireproof material, a flame-retardant material-containing material, and a composite of these materials.

When using for a member of a floor heating system, for example, a laminate having the heat storage composition E in the form of a plate, a sheet, or a foam, a thermal insulation material including the material D, and a sensible heat storage material including the material D can be suitably used to efficiently utilize heat generated from a heat-generating object such as a heating cable, a sheet heater, and a hot water pipe to maintain room temperature.

Examples of the sensible heat storage material include concrete, mortar, a concrete slab, and a composite of these materials.

When using for a member of a tatami, for example, a laminate having the heat storage composition E in the form of a plate, a sheet, or a foam, a thermal insulation material including the material D, a tatami board including the material D, and a tatami omote (tatami surface material) including the material D can be suitably used to maintain an indoor space temperature at a more constant level against variation in the external environment temperature. When using for a tatami board material, a heat storage tatami board including a mixture of the heat storage composition E and wood fiber can be suitably used, and, when using for a tatami omote material, a heat storage tatami omote including a heat storage fiber formed of a core-sheath structure of the heat storage composition E in the form of a filament (fiber) or a strand and a tatami omote material including the material D can be suitably used.

When using for a member of a door, a member of a fusuma, or a member of an amado, for example, a laminate having the heat storage composition E in the form of a plate, a sheet, or a foam, a thermal insulation material including the material D, and a surface material including the material D can be suitably used to maintain the temperature in a room partitioned by a door, a fusuma, or an amado at a more constant level.

When using for a member of a shoji, for example, a laminate having the heat storage composition E in the form of a foam or a nonwoven fabric, or the heat storage composition E in the form of a foam or a nonwoven fabric and a shoji paper sheet including the material D can be suitably used to maintain the temperature in a room partitioned by a shoji at a more constant level, and impart a certain degree of light transmittance.

When using for a member of a window, for example, a laminate including the heat storage composition E in the form of a foam or a nonwoven fabric and glass, polycarbonate, or polymethyl methacrylate can be suitably used to maintain an indoor space temperature at a more constant level against variation in the external environment temperature, and impart a certain degree of light transmittance.

When using for a member of a window frame, for example, a laminate having the heat storage composition E in the form of a plate, a sheet, or a foam and a metal window frame or a window frame made of a polymer different from the polymer 1 can be suitably used to maintain an indoor space temperature at a more constant level against variation in the external environment temperature and prevent dew condensation by lowering difference between room temperature and the temperature of the window frame.

Examples of furniture, interior goods, and bedding include partition boards, blinds, curtains, carpets, futons (bed quilts), and mattresses.

When using for a member of a partition board, for example, a laminate having the heat storage composition E in the form of a plate, a sheet, or a foam, a thermal insulation material including the material D, and a surface material including the material D can be suitably used to maintain the temperature in a room partitioned by a partition board at a more constant level.

When using for a member of a blind, for example, a laminate having the heat storage composition E in the form of a plate or a sheet and a heat shielding material including the material D can be suitably used to maintain an indoor space temperature at a more constant level against variation in the external environment temperature and impart shading performance. In the case where the slats of the blind are formed from a heat shielding surface and a heat storage surface as described above, the amount of solar heat flowing into a building can be controlled in accordance with the season and time of day in a manner such that the heat shielding surface is positioned on the outer side for use in summer, and the heat storage surface is positioned on the outer side in the daytime and reversed to be positioned on the inner side in the nighttime for use in winter. As a result, the amount of power consumed by an air conditioner can be reduced.

When using for a curtain, a carpet, or a futon, for example, a heat storage woven fabric or heat storage nonwoven fabric including a heat storage fiber formed of a core-sheath structure of the heat storage composition E in the form of a filament (fiber) or a strand and a fiber material including the material D can be suitably used to impart any feel and texture.

When using for a carpet, for example, a laminate having the heat storage composition E in the form of a plate, a sheet, or a foam and a woven fabric or nonwoven fabric that includes a fiber including the material D can be suitably used to impart any feel and texture.

When using for a mattress, for example, the heat storage composition E in the form of a foam can be suitably used to impart softness.

Examples of bathroom materials include bathtub materials, bathtub lid materials, bathroom floor materials, bathroom wall materials, and bathroom ceiling materials.

When using for a bathtub material or a bathtub lid material, for example, a laminate having the heat storage composition E in the form of a plate, a sheet, or a foam, a thermal insulation material including the material D, and a surface material including the material D can be suitably used to maintain the water temperature in a bathtub at a more constant temperature against variation in the bathroom temperature.

When using for a bathroom floor material, a bathroom wall material, or a bathroom ceiling material, for example, a laminate having the heat storage composition E in the form of a plate, a sheet, or a foam, a thermal insulation material including the material D, and a heat-shielding material including the material D can be suitably used to maintain a bathroom temperature at a more constant level against variation in the external environment temperature.

Examples of members for vehicles include engine warming-up systems, gasoline evaporation loss-preventing devices (canisters), car air conditioners, interior materials, container members for refrigerator vehicles, and container members for heat-insulating vehicles.

Examples of members for air conditioners include heat storage materials for air-conditioning systems of framework heat storage type, materials for heat storage tanks in air-conditioning systems of water heat storage type, materials for heat storage tanks in air-conditioning systems of ice heat storage type, heating medium pipe materials or thermal insulation materials thereof, cooling medium pipe materials or thermal insulation materials thereof, and duct materials for heat-exchanging ventilation systems.

Examples of electrical appliances include the following:

electronic devices such as televisions, Blu-ray recorders and/or players, DVD recorders and/or players, monitors, displays, projectors, rear-projection televisions, stereo components, boomboxes, digital cameras, digital video cameras, cellar phones, smartphones, laptop computers, desktop computers, tablet PCs, PDAs, printers, 3D printers, scanners, video game consoles, handheld game consoles, batteries for electronic devices, and transformers for electronic devices;

heating home appliances such as electric heaters, fan heaters, dehumidifiers, humidifiers, hot carpets, kotatsus (tables with a heater and a quilt), electric blankets, electric lap robes, electric foot warmers, heated toilet seats, warm water washing toilet seats, irons, trouser presses, futon dryers, clothes dryers, hair dryers, hair irons, heat massagers, heat therapy machines, dishwashers, dish dryers, and dry garbage disposals;

heating home appliance for food preparation such as IH cookers, electric griddles, microwave ovens, microwave and electric ovens, rice cookers, rice cake makers, bread machines, toasters, electric fermenters, hot water dispensers, electric kettles, and coffee makers;

home appliances for food preparation which generate frictional heat such as mixers and/or food processors, and rice polishers; and

refrigerators/freezers, thermo-hygrostatic coolers, milk coolers, brown rice coolers, vegetable coolers, rice refrigerators, freezing/refrigerated showcases, prefabricated coolers, prefabricated refrigerated showcases, hot/cold catering vehicles, wine cellars, food vending machines, heat-insulating cabinets for boxed lunches, and the like.

When using for a member of an electronic device, the heat storage composition E in the form of a plate or a sheet can be suitably used to protect electronic parts constituting an electronic device from heat generated therefrom. Particularly in the case that a large amount of heat is locally generated such as cases with highly integrated electronic parts, for example, a laminate having the heat storage composition E in the form of a plate or a sheet and a high-thermal conductivity material including the material D can be suitably used to allow the heat storage composition E in the form of a plate or a sheet to efficiently absorb heat generated from a heat-generating object.

Examples of the high-thermal conductivity material include carbon nanotubes, boron nitride nanotubes, graphite, copper, aluminum, boron nitride, aluminum nitride, aluminum oxide, magnesium oxide, and composites of them.

When using for a member of an electronic device to be used in contact with a human body, for example, a laminate having the heat storage composition E in the form of a plate or a sheet and the housing material can be suitably used to inhibit heat generated from electronic parts constituting the electronic device from being conducted to the human body via a housing constituting the electronic device.

When using for a member of a heating home appliance, for example, the heat storage composition E in the form of a plate or a sheet can be suitably used to protect other parts constituting the heating home appliance from heat generated from a heating device constituting the heating home appliance. For example, a laminate having the heat storage composition E in the form of a plate, a sheet, or a foam and a thermal insulation material including the material D can be suitably used to improve heat-insulating performance and reduce power consumption.

When using for a member of a heating home appliance for food preparation, for example, the heat storage composition E in the form of a plate or a sheet can be suitably used to protect other parts constituting the heating home appliance for food preparation from heat generated from a heating device constituting the heating home appliance for food preparation. For example, a laminate having the heat storage composition E in the form of a plate, a sheet, or a foam and a thermal insulation material including the material D can be suitably used to improve heat-insulating performance and reduce power consumption.

When using for a member of a home appliance for food preparation which generates frictional heat, for example, a laminate having the heat storage composition E in the form of a plate or a sheet and a high-thermal conductivity material including the material D can be suitably used to protect foods from frictional heat.

When using for a member of a power-supplied heat-insulating warmer/cooler, for example, a laminate having the heat storage composition E in the form of a plate, a sheet, or a foam, a thermal insulation material including the material D, and/or a heat shielding material including the material D can be suitably used to maintain an inner temperature at a more constant level against variation in the external environment temperature.

Examples of heat-insulating warmer/cooler containers include heat-insulating warmer/cooler containers for transport and/or storage of specimens or organs, heat-insulating warmer/cooler containers for transport and/or storage of pharmaceuticals or chemical substances, and heat-insulating warmer/cooler containers for transport and/or storage of foods.

Further, when using for a member of a heat-insulating warmer/cooler container, for example, a laminate having the heat storage composition E in the form of a plate, a sheet, or a foam, a thermal insulation material including the material D, and/or a heat shielding material including the material D can be suitably used to maintain an inner temperature at a more constant level against variation in the external environment temperature.

Examples of clothes include nightclothes, warm clothes, gloves, socks, sportswear, wet suits, dry suits, heat-resistant protective suits, and fire-resistant protective suits. When using for clothing, for example, a heat storage woven fabric or heat storage nonwoven fabric including a heat storage fiber formed of a core-sheath structure of the heat storage composition E in the form of a filament (fiber) or a strand and a fiber material including the material D can be suitably used to maintain body temperature at a constant level and impart any texture.

When using for a wet suit or a dry suit, for example, a laminate having the heat storage composition E in the form of a plate or a sheet, the heat storage woven fabric or heat storage nonwoven fabric, and a thermal insulation material including the material D can be suitably used to maintain body temperature at a more constant level against cold water.

When using for a heat-resistant protective suit or a fire-resistant protective suit, for example, a laminate having the heat storage composition E in the form of a plate or a sheet, the heat storage woven fabric or heat storage nonwoven fabric, a thermal insulation material including the material D, and a heat shielding material including the material D can be suitably used to maintain body temperature at a more constant level against a heat-generating object or flame.

Examples of daily necessities include tableware, lunch boxes, water bottles, thermos bottles, body warmers, hot-water bottles, cold packs, and heat-insulating materials for heating with microwave ovens.

When using for a member of tableware or a lunch box, for example, the laminate may be used as a laminate having the heat storage composition E in the form of a plate, a sheet, or a foam, and a thermal insulation material including the material D to maintain food temperature at a more constant level against external environment temperature.

Examples of fermentation systems to produce compost or biogas by fermenting organic wastes including business or household garbage, sludge, excreta from livestock, and the like, and residues from stock raising and fisheries,

or woods and grasses include biological garbage disposals, fermenters for compost production, and fermenters for biogas production. When using for a fermentation system, for example, a laminate having the heat storage composition E in the form of a plate, a sheet, or a foam and a thermal insulation material including the material D can be suitably used to maintain a temperature inside a tank at a more constant level suitable for fermentation against variation in the external environment temperature.

Examples of agricultural materials include films for plastic greenhouses, agricultural heat-insulating sheets, hoses/pipes for irrigation, and agricultural electric heating mats for raising seedlings. When using for an agricultural material, for example, a laminate having the heat storage composition E in the form of a plate, a sheet, or a foam and a thermal insulation material including the material D can be suitably used to maintain temperature around agricultural crops at a more constant level suitable for growth of agricultural crops against variation in the external environment temperature.

Examples

Hereinafter, the present invention will be described in more detail by way of Examples and Comparative Examples. However, the present invention is not limited by the following Examples.

I. Number of structural units A derived from ethylene and structural units C derived from methyl acrylate included in precursor polymer (ethylene-methyl acrylate copolymer)(unit: %)

Nuclear magnetic resonance spectra (hereinafter, abbreviated as "NMR spectra") were determined by using a nuclear magnetic resonance spectrometer (NMR) under the following measurement conditions. Further, the amounts of structural unit A, structural unit B, and structural unit C (number [mol%] and weight [wt.%]) were determined in accordance with the methods described above.

<Carbon nuclear magnetic resonance ($^{13}$C-NMR) measurement conditions>

Apparatus: AVANCE III 600HD produced by Bruker BioSpin GmbH
Measurement probe: 10 mm CryoProbe
Measurement solvent: mixed solvent of 1,2-dichlorobenzene/1,1,2,2-tetrachloroethane-$d_2$ = 85/15 (volume ratio)
Sample concentration: 100 mg/mL
Measurement temperature: 135°C
Measurement method: proton decoupling method
Number of scans: 256
Pulse width: 45 degrees
Pulse repetition time: 4 seconds
Measurement reference: tetramethylsilane

II. Content (wt.%) of unreacted compound having an alkyl group having 14 to 30 carbon atoms

In the "Production of substance A" of each example, the obtained product is a mixture of the substance A and the unreacted compound having an alkyl group having 14 to 30 carbon atoms. The content of the unreacted compound having an alkyl group having 14 to 30 carbon atoms included in the product was measured by the following method using gas chromatography (GC). The content of the unreacted compound is a value with respect to the total weight of the substance A and the unreacted compound of 100 wt.%.

[GC measurement conditions]
GC apparatus: Shimadzu GC2014
Column: DB-5MS (60 m, 0.25 mmϕ, 1.0 μm)
Column temperature: a column kept at 40°C was warmed to 300°C at a rate of 10 °C/min, and then kept at 300°C for 40 minutes
Vaporizing chamber/detector temperature: 300°C / 300°C (FID)
Carrier gas: helium
Pressure: 220 kPa
Total flow rate: 17.0 mL/min
Column flow rate: 1.99 mL/min
Purge flow rate: 3.0 mL/min
Linear velocity: 31.8 cm/sec

Injection mode/split ratio: split injection / 6:1
Amount of injection: 1 μL
Sample preparation method: 8 mg/mL (o-dichlorobenzene solution)

(1) Creation of calibration curve

[Preparation of Solution] A 5 mg standard sample was weighed into a 9 mL vial, 100 mg of n-tridecane as an internal standard substance was weighed therein, and 6 mL of o-dichlorobenzene as a solvent was further added to completely dissolve the sample, whereby a standard solution for creation of a calibration curve was obtained. Two standard solutions were additionally prepared in the described manner except that the quantity of the standard sample was changed to 25 mg or 50 mg.

[Gc Measurement]

The standard solutions for the creation of a calibration curve were subjected to measurement under the GC measurement conditions described in the previous section to create a calibration curve in which the ordinate represented the GC area ratios between the authentic sample and the internal standard substance and the abscissa represented the weight ratios between the standard sample and the internal standard substance, and the slope of the calibration curve, a, was determined.

(2) Measurement of content of measuring target (unreacted compound including alkyl group having 14 to 30 carbon atoms) in sample (product)

[Preparation of solution] Into a 9 mL vial, 50 mg of a sample and 100 mg of n-tridecane were weighed, and 6 mL of o-dichlorobenzene was further added to completely dissolve the sample at 80°C, whereby a sample solution was obtained.

[Gc Measurement] The sample solution was subjected to measurement under the GC measurement conditions described in the previous section to determine the content $P_s$ of the measuring target in the sample based on the following equation.

$P_S$: content of measuring target in sample (wt.%)
$W_S$: weight of sample (mg)
$W_{IS}$: weight of internal standard substance (IS) (mg)
$A_S$: peak area count of measuring target
$A_{IS}$: peak area count for internal standard substance (IS)
a: slope of calibration curve for measuring target

[Equation 2]

$$P_S = \frac{W_{IS} \times A_S}{W_S \times A_{IS} \times a} \times 100$$

III. Raw Materials

Reference Example 1

<Production of precursor polymer>

cf1: Ethylene-methyl acrylate copolymer

An ethylene-methyl acrylate copolymer (cf1) was produced as follows.

In an autoclave reactor, ethylene and methyl acrylate were copolymerized with tert-butyl peroxypivalate as a radical polymerization initiator at a reaction temperature of 195°C under a reaction pressure of 160 MPa to obtain the

ethylene-methyl acrylate copolymer cf1. The composition and MFR of the obtained copolymer cf1 were as follows.

Number of structural units derived from ethylene: 64.5 wt.%
Number of structural units derived from methyl acrylate: 35.5 wt.%
MFR (measured at a temperature of 190°C and a load of 21 N in accordance with JIS K7210): 30 g/10 min

cf-2: Ethylene-methyl acrylate copolymer

An ethylene-methyl acrylate copolymer cf2 was produced as follows.

In an autoclave reactor, ethylene and methyl acrylate were copolymerized with tert-butyl peroxypivalate as a radical polymerization initiator at a reaction temperature of 195°C under a reaction pressure of 160 MPa to obtain the ethylene-methyl acrylate copolymer cf2. The composition and MFR of the obtained copolymer cf2 were as follows.

Number of structural units derived from ethylene: 68.8 wt.%
Number of structural units derived from methyl acrylate: 31.2 wt.%
MFR (measured at a temperature of 190°C and a load of 21 N in accordance with JIS K7210): 40.5 g/10 min

<Compound having alkyl group having 14 to 30 carbon atoms>

B-1: GINOL-16 (n-hexadecyl alcohol) [manufactured by GODREJ]
B-2: GINOL-18 (n-octadecyl alcohol) [manufactured by GODREJ]
B-3: KALCOL 220-80 (1-docosanol, [manufactured by Kao Corporation]

<Catalyst>

C-1: Tetra(isopropyl) orthotitanate [manufactured by Nippon Soda Co., Ltd.]

Reference Example 2

<Production of substance A>

A-1: Ethylene-n-hexadecyl acrylate-n-octadecyl acrylate-methyl acrylate copolymer

The inside of a reactor equipped with a stirrer was purged with nitrogen, the reactor was then charged with 30 parts by weight of B-1, 62 parts by weight of B-2, and 0.60 parts by weight of C-1 with respect to 100 parts by weight of cf1, and the mixture was heated and stirred with the jacket temperature set at 140°C under a reduced pressure of 0.4 kPa for 5 hours to obtain a polymer A-1 (ethylene-n-hexadecyl acrylate-n-octadecyl acrylate-methyl acrylate copolymer). The melting peak temperature Tm (°C) and the melting enthalpy ΔH between 10 and 60°C of the obtained polymer A-1, and the content (wt.%) of the unreacted compound having an alkyl group having 14 to 30 carbon atoms were as follows.

Structural unit (A): 84.5 mol%
Structural unit (B): 12.9 mol%
Structural unit (C): 2.6 mol%
Melting peak temperature Tm: 32°C (measurement condition 3)
Melting enthalpy ΔH between 10 and 60°C: 76 J/g (measurement condition 3)
Content of unreacted compound having an alkyl group having 14 to 30 carbon atoms: 0.9 wt.%

A-2: Ethylene-n-hexadecyl acrylate-methyl acrylate copolymer

The inside of a reactor equipped with a stirrer was purged with nitrogen, the reactor was then charged with 86 parts by weight of B-1 and 0.60 parts by weight of C-1 with respect to 100 parts by weight of cf1, and the mixture was heated and stirred with the jacket temperature set at 140°C under a reduced pressure of 0.4 kPa for 3 hours to obtain a polymer A-2 (ethylene-n-hexadecyl acrylate-methyl acrylate copolymer). The melting peak temperature Tm (°C) and the melting enthalpy ΔH between 10 and 60°C of the obtained polymer A-2, and the content (wt.%) of the unreacted compound having an alkyl group having 14 to 30 carbon atoms were as follows.

Structural unit (A): 84.1 mol%
Structural unit (B): 13.3 mol%
Structural unit (C): 2.6 mol%
Melting peak temperature Tm: 23°C (measurement condition 3)
Melting enthalpy ΔH between 10 and 60°C: 65 J/g (measurement condition 3)
Content of unreacted compound having an alkyl group having 14 to 30 carbon atoms: 0.9 wt.%

A-3: Ethylene-α-olefin copolymer

A stirrer-equipped 5-liter autoclave that had been dried under reduced pressure and whose contents had been purged with nitrogen was charged with 1.4 L of a toluene solution containing 706 g of an α-olefin C2024 (an olefin mixture having 18, 20, 22, 24 and 26 carbon atoms, manufactured by Ineos), and then toluene was added so that the liquid volume was 3 L. The temperature of the autoclave was increased to 60°C, ethylene was added so that the partial pressure was 0.1 MPa to stabilize the system. A hexane solution of triisobutylaluminum (0.34 mol/L, 14.7 ml) was added thereto. Next, a solution of dimethylanilinium tetrakis(pentafluorophenyl)borate (1.0 mmol / 13.4 mL) in toluene and a solution of diphenylmethylene(cyclopentadienyl) (fluorenyl)zirconium dichloride (0.2 mmol/L, 7.5 mL) in toluene was introduced to initiate polymerization, and ethylene gas was fed to keep the total pressure constant.
After 3 hours, 2 ml of ethanol was added to terminate the polymerization. After termination of the polymerization, the toluene solution containing the polymer was added to acetone to precipitate an ethylene-α-olefin copolymer, and the filtered polymer was washed twice with acetone.
The resultant polymer was dried with a vacuum dryer at 80°C, whereby 369 g of polymer was obtained. The melting peak temperature Tm (°C) of the obtained polymer A-3 and the content (wt.%) of the unreacted compound having an alkyl group having 14 to 30 carbon atoms were as follows.

Structural unit (A): 84.6 mol%
Structural unit (B): 15.4 mol%
Melting peak temperature Tm: 34°C (measurement condition 5)
Melting enthalpy ΔH between 10 and 60°C: 83 J/g (measurement condition 5)

A-4: Ethylene-n-docosyl acrylate-methyl acrylate copolymer

The inside of a reactor equipped with a stirrer was purged with nitrogen, the reactor was then charged with 120 parts by weight of B-3 and 0.60 parts by weight of C-1 with respect to 100 parts by weight of cf2, and the mixture was heated and stirred with the jacket temperature set at 140°C under a reduced pressure of 0.4 kPa for 5 hours to obtain a polymer A-4 (ethylene-n-docosyl acrylate-methyl acrylate copolymer). The melting peak temperature Tm (°C) and the melting enthalpy ΔH between 10 and 60°C of the obtained polymer A-4, and the content (wt.%) of the unreacted compound having an alkyl group having 14 to 30 carbon atoms were as follows.

Structural unit (A): 87. 1 mol%
Structural unit (B): 10.9 mol%
Structural unit (C): 2.0 mol%
Melting peak temperature Tm: 51°C (measurement condition 3)
Melting enthalpy ΔH between 10 and 60°C: 92 J/g (measurement condition 3)
Content of unreacted compound having an alkyl group having 14 to 30 carbon atoms: 1.2 wt.%

<Polymer 2>

D-1: Acryft WH206-F (ethylene-methyl methacrylate copolymer, melting peak temperature 86°C) [manufactured by Sumitomo Chemical Co., Ltd.]
D-2: Sumitomo Noblen (propylene homopolymer, melting peak temperature 163°C) [manufactured by Sumitomo Chemical Co., Ltd.]
D-3: ENGAGE 8100 (ethylene-octene copolymer, melting peak temperature 57°C) [manufactured by The Dow Chemical Company]
D-4: Sumitomo Noblen (propylene random copolymer, melting peak temperature 132°C) [manufactured by Sumitomo Chemical Co., Ltd.]
D-5: Hi-Zex 3300F (high-density polyethylene, melting peak temperature 132°C) [manufactured by Prime Polymer

Co., Ltd.]
D-6: Acryft WD106 (ethylene-methyl methacrylate copolymer, melting peak temperature 101°C) [manufactured by Sumitomo Chemical Co., Ltd.]

<Organic Peroxide>

E-1: CH-12 (mixture including 8 wt.% of 2,5-dimethyl-2,5-di(tert-butylperoxy)hexane and 92 wt.% of polypropylene) (1 minute half-life temperature: 180°C) [manufactured by NOF Corporation]
E-2: A mixture including 50 wt.% of 2,5-dimethyl-2,5-di(tert-butylperoxy)hexane, calcium carbonate, and amorphous silicon dioxide (1 minute half-life temperature: 180°C) [manufactured by Kayaku Akzo Co., Ltd.]

<Crosslinking aid>

F-1: Hi-Cross MS50 (mixture of 50 wt.% of trimethylolpropane trimethacrylate and 50 wt.% of amorphous silicon dioxide) [manufactured by Seiko Chemical Co., Ltd.]
F-2: Hi-Cross M (trimethylolpropane trimethacrylate) [manufactured by Seiko Chemical Co., Ltd.]

<Antioxidant>

G-1: IRGANOX 1010 (pentaerythritol = tetrakis [3-(3',5'-di-tert-butyl-4'-hydroxyphenyl)propionate]) [manufactured by BASF]

<Processing heat stabilizer>

H-1: IRGAFOS 168 (tris(2,4-di-tert-butylphenyl)phosphite) [manufactured by BASF]

<Lubricant>

I-1: Alflow AD-281F (ethylenebisoleic acid amide) [manufactured by NOF Corporation]

<Packaging material>

J-1: Excellen VL VL700 (linear low density polyethylene, melting peak temperature 90°C) [manufactured by Sumitomo Chemical Co., Ltd.]
J-2: Sumitomo Noblen (propylene homopolymer, melting peak temperature 163°C) [manufactured by Sumitomo Chemical Co., Ltd.]

<Extruder>

Twin screw extruder (1)

- Screw diameter D = 75 mm
- Effective screw length L / screw diameter D = 40

Single screw extruder (2)

- Screw diameter D = 20 mm

Spinning apparatus (3)

- Screw diameter D = 20 mm

Composite spinning apparatus (4)

- Screw diameter D = 25 mm

Twin screw extruder (5)

- Screw diameter D = 15 mm

Effective screw length L / screw diameter D = 45

IV. Production and evaluation of heat storage composition

Example A1: Production of resin composition including ethylene-n-hexadecyl acrylate-n-octadecyl acrylate-methyl acrylate copolymer and ethylene-methyl methacrylate copolymer

The twin-screw extruder (1) was fed with 73.4 parts by weight of the polymer A-1 obtained in Reference Example 2, 23.8 parts by weight of D-1, 2.5 parts by weight of E-1, 0.1 parts by weight of G-1, 0.1 parts by weight of H-1, and 0.1 parts by weight of I-1, and meltkneaded at a screw rotation speed of 350 rpm, a discharge rate of 150 kg/hr, and a maximum barrel temperature of 220°C to produce a resin composition A1'. Further, J-1 was fed into the single-screw extruder (2) and meltkneaded at a discharge rate of 9 kg/hr and a maximum barrel temperature of 240°C to produce a J-1 sheet. Then, using a multi-layer sheet molding machine equipped with a multi-layer die, the resin composition A1' and J-1 were extruded in multiple layers at a die temperature of 230°C so that the outer layer/inner layer/outer layer was J-1/resin composition A1'/J-1 and so that the weight ratio of outer layer/inner layer/outer layer was 4.5/150/4.5, to thereby produce packaged pellets of the heat storage composition A1.

The produced heat storage composition A1 was spun in the spinning apparatus (3) at a maximum barrel temperature of 190°C, a die diameter of 0.8 mm, and a take-up speed of 48.5 m/min to produce an undrawn yarn. A tensile test was performed on the undrawn yarn. DSC measurement was performed under measurement condition 1.

Example A2: Production of resin composition including ethylene-n-hexadecyl acrylate-n-octadecyl acrylate-methyl acrylate copolymer and ethylene-methyl methacrylate copolymer

Pellets and an undrawn yarn of a resin composition A2 were produced in the same manner as in Example A1, except that 62.9 parts by weight of the polymer A-1 obtained in Reference Example 2, 34.3 parts by weight of D-1, 2.5 parts by weight of E-1, 0.1 parts by weight of G-1, 0.1 parts by weight of H-1, and 0.1 parts by weight of I-1 were used. The tensile test was performed on the undrawn yarn. DSC measurement was performed under measurement condition 1.

Example A3: Production of resin composition including ethylene-n-hexadecyl acrylate-n-methyl acrylate copolymer and ethylene-methyl methacrylate copolymer

Pellets and an undrawn yarn of a resin composition A3 were produced in the same manner as in Example A1, except that 73.4 parts by weight of the polymer A-2 obtained in Reference Example 2, 23.8 parts by weight of D-1, 2.5 parts by weight of E-1, 0.1 parts by weight of G-1, 0.1 parts by weight of H-1, and 0.1 parts by weight of I-1 were used. The tensile test was performed on the undrawn yarn. DSC measurement was performed under measurement condition 1.

Example A4: Production of resin composition including ethylene-$\alpha$-olefin copolymer and ethylene-octene copolymer

Pellets and an undrawn yarn of a resin composition A4 were produced by feeding 69.9 parts by weight of the polymer A-3 obtained in Reference Example 2, 29.9 parts by weight of D-3, 0.1 parts by weight of G-1, and 0.1 parts by weight of H-1 into the twin-screw extruder (5), and melt-kneading at a maximum barrel temperature of 220°C. The tensile test was performed on the undrawn yarn. DSC measurement was performed under measurement condition 1.

Comparative Example C1: Production of resin composition including ethylene-n-hexadecyl acrylate-n-octadecyl acrylate-methyl acrylate copolymer and propylene homopolymer

A resin composition C1' was produced in the same manner as in Example A1, except that 73.4 parts by weight

of the polymer A-1 obtained in Reference Example 2, 23.8 parts by weight of D-2, 2.5 parts by weight of E-1, 0.1 parts by weight of G-1, 0.1 parts by weight of H-1, and 0.1 parts by weight of I-1 were used. Then, pellets and an undrawn yarn of a composition C1 were produced in the same manner as in Example A1, except that J-2 was discharged at a discharge rate of 8 kg/hr so that the outer layer/inner layer/outer layer was J-2/resin composition C1'/J-2 and the weight ratio of outer layer/inner layer/outer layer was 4/150/4. The tensile test was performed on the undrawn yarn. DSC measurement was performed under measurement condition 1.

Comparative Example C2: Production of resin composition including ethylene-n-hexadecyl acrylate-n-octadecyl acrylate-methyl acrylate copolymer and ethylene-methyl methacrylate copolymer

Pellets and an undrawn yarn of a resin composition C2 were produced in the same manner as in Example A1, except that 73.4 parts by weight of the polymer A-1 obtained in Reference Example 2, 23.8 parts by weight of D-6, 2.5 parts by weight of E-1, 0.1 parts by weight of G-1, 0.1 parts by weight of H-1, and 0.1 parts by weight of I-1 were used. The tensile test was performed on the undrawn yarn. DSC measurement was performed under measurement condition 1.

Comparative Example C3: Production of resin composition including ethylene-n-docosyl acrylate-methyl acrylate copolymer and propylene random copolymer

Pellets of a resin composition C3 were produced by feeding 78.2 parts by weight of the polymer A-4 obtained in Reference Example 2, 19.6 parts by weight of D-4, 1.0 parts by weight of E-2, 1.0 parts by weight of F-1, 0.1 parts by weight of G-1, and 0.1 parts by weight of H-1 into the twin-screw extruder (5), and melt-kneading at a maximum barrel temperature of 220°C. An attempt was then made to produce an undrawn yarn, but the thread broke and it was difficult to produce a sample. DSC measurement was performed under measurement condition 1.

Comparative Example C4: Production of resin composition including ethylene-n-docosyl acrylate-methyl acrylate copolymer and high-density polyethylene

Pellets of a resin composition C4 were produced by feeding 78.2 parts by weight of the polymer A-4 obtained in Reference Example 2, 19.6 parts by weight of D-5, 1.0 parts by weight of E-2, 1.0 parts by weight of F-1, 0.1 parts by weight of G-1, and 0.1 parts by weight of H-1 into the twin-screw extruder (5), and melt-kneading at a maximum barrel temperature of 220°C. An attempt was then made to produce an undrawn yarn, but the thread broke and it was difficult to produce a sample. DSC measurement was performed under measurement condition 1.

V. Production and evaluation of fiber including heat storage composition

Example B1

Using the composite spinning apparatus (4), an undrawn yarn of a core-sheath type composite fiber with a sheath of polyester and a core of the heat storage composition A1 was obtained using 40 parts by weight of the heat storage composition A1 obtained in Example A1 and 60 parts by weight of polyester. The obtained undrawn yarn of the core-sheath type composite fiber was drawn at a draw ratio of 3 to 4 times in a bath at 80°C to obtain a drawn yarn. An examination of the level of fineness showed that it was possible to acquire a drawn yarn having a fineness of up to 3.1 dtex. Further, the melting peak temperature Tm (°C) of the obtained drawn yarn was as follows. DSC measurement was performed under measurement condition 2.

Melting peak temperature Tm: 32°C
Melting enthalpy ΔH observed within the temperature range of 10 to 60°C by differential scanning calorimetry: 24 J/g

Example B2

Using the composite spinning apparatus (4), an undrawn yarn of a core-sheath type composite fiber with a sheath of polyester and a core of the heat storage composition A1 was obtained using 40 parts by weight of the heat storage composition A1 obtained in Example A1 and 60 parts by weight of polyester. The obtained undrawn yarn of the core-sheath type composite fiber was drawn at a draw ratio of 3 to 4 times in a bath at 80°C to obtain a drawn yarn having a fineness of 4.3 dtex. Further, the melting peak temperature Tm (°C) of the obtained drawn yarn was as follows. DSC measurement was performed under measurement condition 2.

Melting peak temperature Tm: 32°C

Melting enthalpy ΔH observed within the temperature range of 10 to 60°C by differential scanning calorimetry: 25 J/g

Example B3

Using the composite spinning apparatus (4), an undrawn yarn of a core-sheath type composite fiber with a sheath of polyester and a core of the heat storage composition A2 was obtained using 50 parts by weight of the heat storage composition A2 obtained in Example A2 and 50 parts by weight of polyester. The obtained undrawn yarn of the core-sheath type composite fiber was drawn at a draw ratio of 3 to 4 times in a bath at 80°C to obtain a drawn yarn having a fineness of 3.2 dtex. Further, the melting peak temperature Tm (°C) of the obtained drawn yarn was as follows. DSC measurement was performed under measurement condition 2.

Melting peak temperature Tm: 32°C
Melting enthalpy ΔH observed within the temperature range of 10 to 60°C by differential scanning calorimetry: 31 J/g

Example B4

Using the composite spinning apparatus (4), an undrawn yarn of a core-sheath type composite fiber with a sheath of polyester and a core of the heat storage composition A3 was obtained using 50 parts by weight of the heat storage composition A3 obtained in Example A3 and 50 parts by weight of polyester. The obtained undrawn yarn of the core-sheath type composite fiber was drawn at a draw ratio of 3 to 4 times in a bath at 80°C to obtain a drawn yarn having a fineness of 3.0 dtex. Further, the melting peak temperature Tm (°C) of the obtained drawn yarn was as follows. DSC measurement was performed under measurement condition 2.

Melting peak temperature Tm: 23°C
Melting enthalpy ΔH observed within the temperature range of 10 to 60°C by differential scanning calorimetry: 23 J/g

Comparative Example D1

Using the composite spinning apparatus (4), an undrawn yarn of a core-sheath type composite fiber with a sheath of polyester and a core of the heat storage composition C1 was obtained using 40 parts by weight of the heat storage composition C1 obtained in Comparative Example C1 and 60 parts by weight of polyester. The obtained undrawn yarn of the core-sheath type composite fiber was drawn at a draw ratio of 3 to 4 times in a bath at 80°C to obtain a drawn yarn. An examination of the level of fineness showed that it was possible to acquire a drawn yarn having a fineness of up to 4.8 dtex. Further, the melting peak temperature Tm (°C) of the obtained drawn yarn was as follows.

Melting peak temperature Tm: 30°C
Melting enthalpy ΔH observed within the temperature range of 10 to 60°C by differential scanning calorimetry: 22 J/g

[Table 1]

| | | Example | | | | Comparative Example | | | |
|---|---|---|---|---|---|---|---|---|---|
| | | A1 | A2 | A3 | A4 | C1 | C2 | C3 | C4 |
| Substance A | A-1 (%) | 73.4 | 62.9 | - | - | 73.4 | 73.4 | - | - |
| | A-2 (%) | - | - | 73.4 | - | - | - | - | - |
| | A-3 (%) | - | - | - | 69.9 | - | - | - | - |
| | A-4 (%) | - | - | - | - | - | - | 78.2 | 78.2 |

(continued)

| | | Example | | | | Comparative Example | | | |
|---|---|---|---|---|---|---|---|---|---|
| | | A1 | A2 | A3 | A4 | C1 | C2 | C3 | C4 |
| Polymer (2) | D-1 (%) | 23.8 | 34.3 | 23.8 | - | - | - | - | - |
| | D-2 (%) | - | - | - | - | 23.8 | - | - | - |
| | D-3 (%) | - | - | - | 29.9 | - | - | - | - |
| | D-4 (%) | - | - | - | - | - | - | 19.6 | - |
| | D-5 (%) | - | - | - | - | - | - | - | 19.6 |
| | D-6 (%) | - | - | - | - | - | 23.8 | - | - |
| Crosslinking agent | E-1 (%) | 2.5 | 2.5 | 2.5 | - | 2.5 | 2.5 | - | - |
| | E-2 (%) | - | - | - | - | - | - | 1.0 | 1.0 |
| Crosslinking aid | F-1 (%) | - | - | - | - | - | - | 1.0 | 1.0 |
| Antioxidant | G-1 (%) | 0.1 | 0.1 | 0.1 | 0.1 | 0.1 | 0.1 | 0.1 | 0.1 |
| Processing heat stabilizer | H-1 (%) | 0.1 | 0.1 | 0.1 | 0.1 | 0.1 | 0.1 | 0.1 | 0.1 |
| Lubricant | I-1 (%) | 0.1 | 0.1 | 0.1 | - | 0.1 | 0.1 | - | - |
| Packaging material | J-1 | yes | yes | yes | - | - | yes | - | - |
| | J-2 | - | - | - | - | yes | - | - | - |
| Melting peak temperature | Tm (°C) | 33 | 32 | 24 | 34 | 32 | 30 | 50 | 49 |
| Melting enthalpy between 10 and 60°C | ΔH (Jlg) | 70 | 63 | 57 | 73 | 49 | 67 | 45 | 38 |
| Dispersed particles (15,000 times, n = 3 average) | Dv (μm) | 0.28 | 0.09 | 0.16 | 0.11 | 3.5 | 2.5 | 4.4 | 1.9 |
| | area ratio (%) | 7.5 | 0.4 | 0.4 | 0.1 | 36 | 16 | 25 | 18 |
| Melting peak temperature in range of 60 to 120°C | Tm (°C) | 82 | 83 | 83 | 64 | - | 101 | - | - |
| Gel fraction | (wt%) | 2.9 | 3.7 | 2.2 | 2.5 | 18 | 12 | 60 | 65 |
| MFR | (g/10 min) | 83 | 52 | 80 | 58 | 110 | 73 | 6.9 | 0.27 |
| Shear viscosity | η (Pa.s) | 12 | 20 | 14 | 27 | 2.8 | 15 | 41 | 75 |

(continued)

| | | Example | | | | Comparative Example | | | |
|---|---|---|---|---|---|---|---|---|---|
| | | A1 | A2 | A3 | A4 | C1 | C2 | C3 | C4 |
| Elongation at break | (%) | 620 | 880 | 810 | 670 | 450 | 460 | sample could not be acquired | sample could not be acquired |

[Table 2]

| | | Example | Example | Example | Example | Comparative Example |
|---|---|---|---|---|---|---|
| | | B1 | B2 | B3 | B4 | D1 |
| Core material | | Example A1 | Example A1 | Example A2 | Example A3 | Comparative Example C1 |
| Sheath material | | Polyester | Polyester | Polyester | Polyester | Polyester |
| Blend ratio (core material /sheath material) | wt% | 40/60 | 40/60 | 50/50 | 50/50 | 40/60 |
| Melting peak temperature | Tm (°C) | 32 | 32 | 32 | 23 | 30 |
| Melting enthalpy between 10 and 60°C | ΔH (Jlg) | 24 | 25 | 31 | 23 | 22 |
| Dispersed particles (60,000 times, n = 3 average) | Di (μm) | 0.05 | 0.08 | - | - | 0.10 |
| | Area ratio (%) | 11 | 7.4 | - | - | 36 |
| Dispersed particles (60,000 times, n = 2 average) | Di (μm) | - | - | 0.06 | 0.04 | - |
| | Area ratio (%) | - | - | 14 | 3.5 | - |
| Melting peak temperature in range of 60 to 120°C | Tm (°C) | 82 | 86 | 84 | 83 | - |
| Spinnability | | Good | Good | Good | Good | Thread breakage |
| Fineness | (dtex) | 3.1 | 4.3 | 3.2 | 3 | 4.8 |
| Elongation at break | (%) | 130 | 114 | 126 | 96 | 67 |
| Softness | (-) | Soft | Soft | Soft | Soft | Hard |

**Claims**

**1.** A heat storage composition comprising a substance A and a polymer 2, wherein

the heat storage composition has a melting peak temperature between 10 and 60°C and a melting enthalpy of 30 J/g or more between 10 and 60°C, and

the heat storage composition does not have a sea-island structure, or the heat storage composition has a sea-island structure in which the islands (dispersed phase) have a volume-average circle-equivalent particle diameter of 1.5 μm or less or the islands (dispersed phase) have an area ratio of 15% or less.

**2.** The heat storage composition according to claim 1, wherein the heat storage composition has a plurality of melting peak temperatures, at least one of which being within a range of 60 to 120°C.

**3.** The heat storage composition according to claim 1 or 2, wherein the heat storage composition has a gel fraction of

15 wt.% or less.

**4.** The heat storage composition according to any one of claims 1 to 3, wherein the substance A has a molecular weight of more than 2000.

**5.** A fiber comprising the heat storage composition according to any one of claims 1 to 4.

**6.** A heat storage fiber comprising a heat storage composition, the heat storage composition comprising a substance A and a polymer 2, wherein

the heat storage fiber has a melting peak temperature between 10 and 60°C and a melting enthalpy of 5 J/g or more between 10 and 60°C, and
the heat storage composition in the fiber does not have a sea-island structure, or the heat storage composition in the fiber has a sea-island structure in which the islands (dispersed phase) have a circle-equivalent particle diameter of less than 0.1 μm or the islands (dispersed phase) have an area ratio of 15% or less.

**7.** The heat storage fiber according to claim 6, wherein the heat storage fiber has a plurality of melting peak temperatures, at least one of which being within a range of 60 to 120°C.

**8.** The heat storage fiber according to claim 6 or 7, wherein the heat storage composition in the fiber has a gel fraction of 15 wt.% or less.

**9.** The heat storage fiber according to any one of claims 6 to 8, wherein the substance A has a molecular weight of more than 2000.

**INTERNATIONAL SEARCH REPORT**

International application No.
PCT/JP2021/019336

A. CLASSIFICATION OF SUBJECT MATTER
D01F 8/04(2006.01)i; D01F 8/14(2006.01)i; C09K 5/06(2006.01)i
FI: D01FS/04 Z; D01FS/14 Z; C09K5/06 J
According to International Patent Classification (IPC) or to both national classification and IPC

B. FIELDS SEARCHED
Minimum documentation searched (classification system followed by classification symbols)
D01FS/04; D01FS/14; C09K5/06

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | WO 2012/161278 A1 (JSR CORPORATION) 29 November 2012 (2012-11-29) examples 3-10 | 1-2, 4<br>3, 5-9 |
| X<br>A | JP 2013-6944 A (JSR CORPORATION) 10 January 2013 (2013-01-10) examples 3, 6 | 1-2<br>3-9 |
| X<br>A | WO 2005/040300 A1 (IDEMITSU KOSAN CO., LTD.) 06 May 2005 (2005-05-06) examples 4-9 | 1-2, 4<br>3, 5-9 |
| X<br>A | WO 2019/111358 A1 (HITACHI CHEMICAL CO., LTD.) 13 June 2019 (2019-06-13) examples 1-7 | 1<br>2-9 |
| X<br>A | WO 2019/193677 A1 (SHOWA DENKO MATERIALS CO., LTD.) 10 October 2019 (2019-10-10) examples 1-11 | 1<br>2-9 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>13 August 2021 (13.08.2021) | Date of mailing of the international search report<br>24 August 2021 (24.08.2021) |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**

International application No.
PCT/JP2021/019336

C (Continuation). DOCUMENTS CONSIDERED TO BE RELEVANT

| Category* | Citation of document, with indication, where appropriate, of the relevant passages | Relevant to claim No. |
|---|---|---|
| A | JP 2016-180120 A (SUMITOMO CHEMICAL CO., LTD.) 13 October 2016 (2016-10-13) | 1-9 |
| A | WO 2016/098674 A1 (SUMITOMO CHEMICAL CO., LTD.) 23 June 2016 (2016-06-23) | 1-9 |

Form PCT/ISA/210 (continuation of second sheet) (January 2015)

**INTERNATIONAL SEARCH REPORT**
Information on patent family members

International application No.
PCT/JP2021/019336

| Patent Documents referred in the Report | Publication Date | Patent Family | Publication Date |
|---|---|---|---|
| WO 2012/161278 A1 | 29 Nov. 2012 | TW 201249918 A | |
| JP 2013-6944 A | 10 Jan. 2013 | (Family: none) | |
| WO 2005/040300 A1 | 06 May 2005 | US 2007/0079825 A1<br>examples 4-9<br>EP 1681333 A1 | |
| WO 2019/111358 A1 | 13 Jun. 2019 | CN 111433276 A | |
| WO 2019/193677 A1 | 10 Oct. 2019 | (Family: none) | |
| JP 2016-180120 A | 13 Oct. 2016 | US 2018/0030175 A1<br>EP 3235836 A1<br>CN 107001524 A | |
| WO 2016/098674 A1 | 23 Jun. 2016 | US 2018/0030175 A1<br>EP 3235836 A1<br>CN 107001524 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2018188752 A
- JP 2015091903 A
- WO 2016098674 A
- WO 2017217419 A


### Non-patent literature cited in the description


- **KIYOHITO KOYAMA ; OSAMU ISHIZUKA.** *Journal of Fiber Science and Technology,* 1981, vol. 37, 258
- *Size Exclusion Chromatography, Springer,* 1999